(19) Europäisches Patentamt / European Patent Office / Office européen des brevets

(11) **EP 3 096 481 B1**

(12) **EUROPEAN PATENT SPECIFICATION**

(45) Date of publication and mention of the grant of the patent:
**26.07.2023 Bulletin 2023/30**

(21) Application number: **15737551.0**

(22) Date of filing: **16.01.2015**

(51) International Patent Classification (IPC):
**H04L 5/00** *(2006.01)*    **H04L 5/14** *(2006.01)*
**H04W 56/00** *(2009.01)*

(52) Cooperative Patent Classification (CPC):
**H04L 5/0048; H04L 5/0082; H04L 5/14; H04W 56/001**

(86) International application number:
**PCT/CN2015/070886**

(87) International publication number:
**WO 2015/106715 (23.07.2015 Gazette 2015/29)**

(54) **SIGNAL TRANSMISSION METHOD AND APPARATUS**

SIGNALÜBERTRAGUNGSVERFAHREN UND -VORRICHTUNG

PROCÉDÉ ET APPAREIL DE TRANSMISSION DE SIGNAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.01.2014 CN 201410023237**

(43) Date of publication of application:
**23.11.2016 Bulletin 2016/47**

(73) Proprietor: **Datang Mobile Communications Equipment Co., Ltd.**
**Beijing 100085 (CN)**

(72) Inventors:
 • **GAO, Xuejuan**
  **Beijing 100191 (CN)**
 • **LIN, Yanan**
  **Beijing 100191 (CN)**

 • **SHEN, Zukang**
  **Beijing 100191 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
**WO-A1-2013/131258    WO-A1-2013/141558**
**WO-A2-2013/048200    CN-A- 103 098 505**
**US-A1- 2010 271 965    US-A1- 2010 309 797**
**US-A1- 2011 235 597**

## Description

## TECHNICAL FIELD

The present disclosure relates to the field of communication technology, in particular to a signal transmission method and a signal transmission apparatus.

## BACKGROUND

Along with the increase of the mobile data service volume, spectrum resources have become more and more scarce, and it is probably impossible to meet the service requirement in the case that merely the licensed spectrum resources are used for network deployment and service transmission. Hence, a Long-Term Evolution (LTE) system may perform the network deployment and service transmission over an unlicensed LTE (U-LTE or LTE-U), so as to improve the user experience and expand the network coverage.

(1) Synchronization signal and reference signal in the LTE system

The reference signal (RS) in the LTE system may include a cell-specific reference signal (CRS), a user equipment (UE)-specific reference signal (UE-RS, also called as demodulation reference signal (DMRS)), a channel state information reference signal (CSI-RS), a positioning reference signal (PRS), etc. The CRS may be used for demodulation and measurement, e.g., measuring reference signal received power (RSRP) or reference signal received quality (RSRQ), the DMRS is mainly used for the demodulation of the downlink transmission dedicated for the UE, the CSI-RS is used for measuring channel state information, and the PRS is used for the positioning measurement.

In addition, the synchronization signal is mainly used for downlink synchronization, so as to enable the UE to achieve the timing of a radio frame and a subframe of the LTE system to be accessed by the UE. The synchronization signal may include a primary synchronization signal (PSS) and a secondary synchronization signal (SSS). To be specific, the PSS includes three sequences, and it is transmitted every 5ms. The sequences transmitted within two adjacent half-frames are identical to each other, so as to acquire a duration of 5ms. The SSS includes two binary sequences interleaved and concatenated with each other, and each binary sequence has a length of 31. The SSS is scrambled with a scrambling sequence indicated by the PSS, and interleaving modes are different from each other within the two adjacent half-frames, so as to acquire a duration of 10ms, i.e., to determine a timing start position of the radio frame. The synchronization signal is further used to acquire a cell identifier (ID) by the UE. The cell ID is a unique identifier of a cell, and 504 cell IDs in the LTE system may be divided into 168 groups, each group having three cell IDs. For the cell ID, $N_{ID}^{cell} = 3N_{ID}^{(1)} + N_{ID}^{(2)}$, where $N_{ID}^{(1)}$ is acquired by detecting the SSS and it has a value of 0 to 167, and $N_{ID}^{(2)}$ is acquired by detecting the PSS and it has a value of 0 to 2.

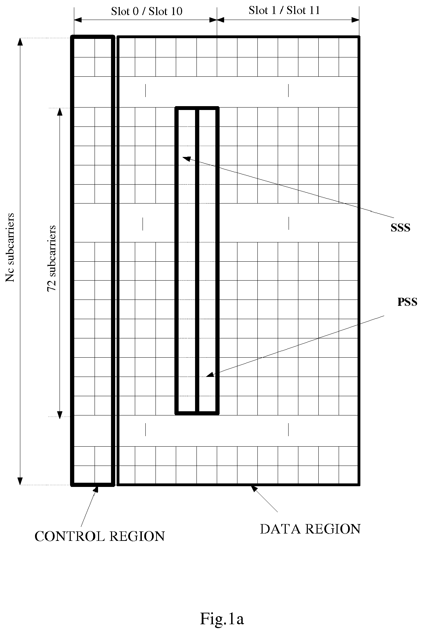

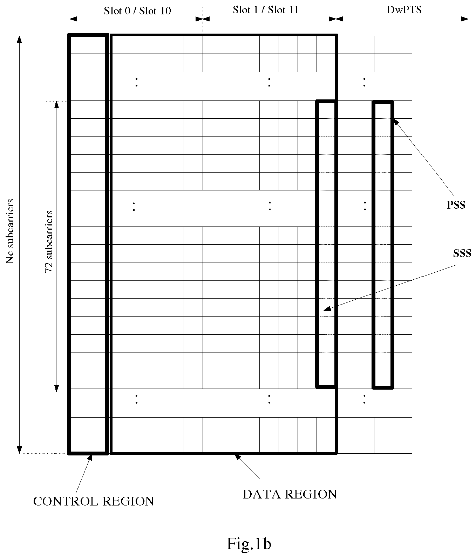

The PSS and the SSS are mapped onto the middle 72 sub-carriers in each carrier frequency domain and then transmitted, and in the LTE system, 6 resource blocks (RBs) are occupied by them. For a Frequency Division Duplex (FDD) system, as shown in Fig.1a, the PSS and the SSS are transmitted over the last Orthogonal Frequency Division Multiplexing (OFDM) symbol and the second last OFDM symbol in a first timeslot of each of subframe 0 and subframe 5 respectively. For a Time Division Duplex (TDD) system, as shown in Fig.1b, the PSS is transmitted over the third OFDM symbol in subframes 1 and 6, and in the case that the subframe 1 or 6 is a particular subframe, it is transmitted over the third OFDM symbol in a Downlink Pilot Timeslot (DwPTS). The SSS is transmitted over the last OFDM symbol in second timeslots of subframes 0 and 5.

(2) Unlicensed spectrum resources

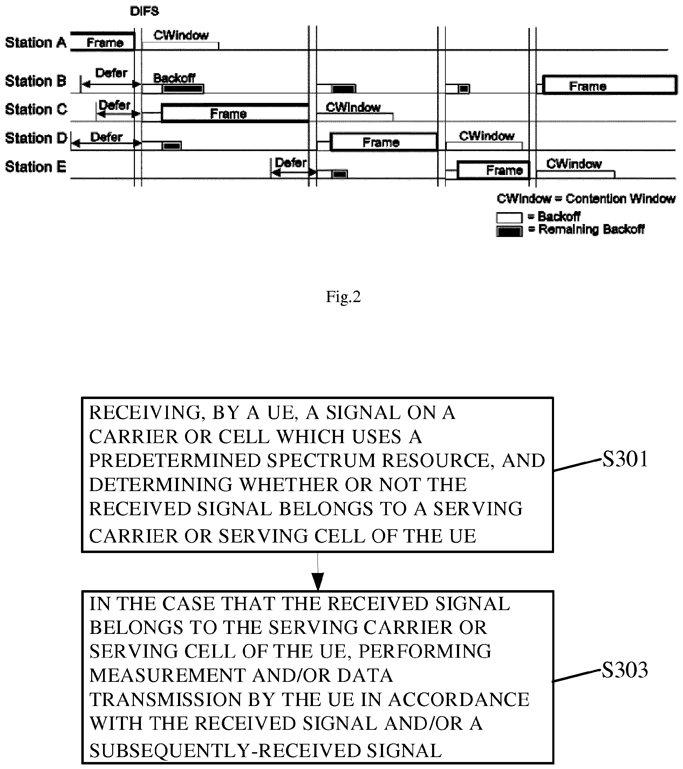

Conventional spectrum resources may include licensed spectrum resources and unlicensed spectrum resources. The licensed spectrum resources are dedicated spectrum resources, and their interferences are substantially predictable. The unlicensed spectrum resources are not specified for a certain application system, i.e., they may be shared by various systems, e.g., LTE and WiFi systems, in a preemptive manner. Fig.2 shows a resource preemption mode of the WiFi system for the unlicensed spectrum resources. In Fig.2, the resource contention occurs for several systems (base stations A-E) within their respective contention windows. The systems determine whether or not a current spectrum resource is busy by monitoring a Distributed Inter-Frame Space (DIFS) region, and in the case that the DIFS region with a particular length may be detected, it means the current spectrum resource is free and may be used by the systems. In addition, a backoff duration may be maintained by each base station, and the backoff duration for each base station is determined by a fixed value and a random number (for each of the base stations A-E, its backoff duration includes a remaining backoff value), so as to provide different base station with different backoff durations, thereby to prevent a resource conflict caused when the free resource within an identical duration is detected by the base stations. In the case that the backoff duration for one base station is ended and the free spectrum resource has been detected, the data may be transmitted over the free spectrum resource. Moreover, for the sake of fairness, it is stipulated that each base station cannot occupy the spectrum resource for a long period of time, and a predetermined duration expires or a volume of the transmitted data reaches an upper limit, the base station needs to release the spectrum resource for the other WiFi or LTE systems.

Based on the above-mentioned mechanism, in the case that the data is not transmitted by the LTE system over parts of the OFDM symbols in a subframe, e.g., the reference signals rather than the service data is transmitted in a current subframe, the reference signals may merely be transmitted over a part of the bandwidth and/or parts of the OFDM symbols. At this time, the transmission energy is relatively small, so the other LTE or WiFi systems may determine that these OFDM symbols in the subframe are free, and then start to occupy and use the unlicensed spectrum resource, resulting in interferences to the current LTE system and mutual interferences among the systems. In addition, due to the spectrum resource preemption, in the case that the current LTE UE operates at the unlicensed spectrum resource as a secondary carrier, it cannot determine whether or not a signal is received from an LTE base station which serves the UE before a particular identification step.

Currently, there is no scheme about how the LTE system operates at the unlicensed spectrum resource. Especially for the LTE system where different LTE base stations may preempt the unlicensed spectrum resource to transmit the signal, the current UE cannot determine whether or not a received signal comes from the LTE base station which serves the UE, so the UE may receive an erroneous signal and thereby the system performance may be degraded. Hence, there is an urgent need to find an effective scheme to overcome the above-mentioned drawbacks.

US 2010/309797 A1 discusses methods and apparatus for determining a load estimate in a receiver in an orthogonal frequency division multiplex (OFDM) communication system.

## SUMMARY

An object of the present disclosure is to provide a signal transmission method and a signal transmission apparatus, so as to enable a UE to perform measurement and/or receive data in the case that a signal is currently received from a serving base station or serving cell, thereby to prevent the system performance from being degraded.

In one aspect, the present disclosure provides in some embodiments a signal transmission method, including steps of: receiving, by a UE, a signal on a carrier or cell which uses a predetermined spectrum resource where the predetermined spectrum resource is an unlicensed spectrum resource, and determining whether or not the received signal belongs to a serving carrier or serving cell of the UE; and in the case that the received signal belongs to the serving carrier or serving cell of the UE, performing measurement and/or data transmission by the UE in accordance with the received signal and/or a subsequently-received signal; where the step of determining by the UE whether or not the received signal belongs to the serving carrier or serving cell comprises at least one of: detecting, by the UE, a synchronization signal corresponding to the ID of the carrier or cell in accordance with the ID of the carrier or cell pre-configured through the configuration signaling, and in response to the synchronization signal corresponding to the ID of the carrier or cell being detected, determining that the received signal belongs to the serving carrier or serving cell; detecting, by the UE, dedicated sequences corresponding to the serving carrier or serving cell of the UE or dedicated sequences for the UE pre-configured through the configuration signaling, and in response to the dedicated sequences being detected, determining that the received signal belongs to the serving carrier or serving cell.

According to the embodiments of the present disclosure, the UE may identify the cell and determine whether or not the signal is currently received from the serving cell, and in the case that the signal is currently received from the serving cell, perform the measurement and/or the data transmission. As a result, it is able to prevent the UE from receiving the erroneous data or performing the measurement and/or the data transmission based on the erroneous signal, thereby to prevent the system performance from being degraded and to utilize the predetermined spectrum resource appropriately. For example, in the case that the signal transmission method in the embodiments of the present disclosure is applied to an unlicensed spectrum resource, it is able to provide an effective, feasible scheme about how an LTE system operates at the unlicensed spectrum resource, thereby to prevent the mutual interferences among the systems due to the resource preemption, improve the measurement performance and the data transmission performance of the LTE system over the unlicensed spectrum resource, and improve the system performance.

Alternatively, the step of performing the measurement and/or data transmission by the UE in accordance with the received signal and/or the subsequently-received signal includes at least one of: performing the measurement by the UE in accordance with a received reference signal for measurement; receiving by the UE a further reference signal for measurement, and performing the measurement in accordance with the received further reference signal for measurement; performing the data transmission by the UE in accordance with received scheduling signaling; and receiving by the UE further scheduling signaling, and performing the data transmission in accordance with the received further scheduling signaling.

Alternatively, the reference signal for measurement is transmitted on an OFDM symbol on which synchronization signals are currently transmitted and using all frequency domain resources other than the frequency domain resources occupied by the synchronization signals, or the reference signal for measurement is transmitted on an OFDM symbol on which synchronization signals are currently transmitted and using parts of the frequency domain resources other than the frequency domain resources occupied by the synchronization signals, or the reference signal for measurement is transmitted on an OFDM symbol adjacent to, or separated by a fixed time domain interval from, the OFDM symbol on which synchronization signals are currently transmitted and the reference signal for measurement and at least one synchronization signal in the synchronization signals are transmitted within an identical subframe, or the reference signal for measurement is the synchronization signal.

Alternatively, sequences of the reference signal for measurement are generated at least in association with an ID of a carrier or cell on which the reference signal is currently transmitted, or in the case that the reference signal for measurement is used for measuring RSRP and/or CSI, sequences of the reference signal for measurement are generated at least in association with an ID of a carrier or cell on which the reference signal is currently transmitted, or sequences of the reference signal for measurement are sequences of a UE-specific or cell-specific measurement reference signal and pre-configured by configuration signaling, or in the case that the reference signal for measurement is used for measuring CSI, sequences of the reference signal for measurement is sequences of a UE-specific or cell-specific measurement reference signal and pre-configured through configuration signaling.

Alternatively, the reference signal for measurement is used for at least one of RSRP measurement, RSRQ measurement, positioning measurement, tracking measurement and CSI measurement.

Alternatively, the step of detecting, by the UE, the synchronization signal corresponding to the ID of the carrier or cell in accordance with the ID of the carrier or cell pre-configured through the configuration signaling includes: detecting, by the UE, the synchronization signal corresponding to the ID of the carrier or cell in each subframe or a predetermined subframe in which the synchronization signal is to be transmitted in accordance with the ID of the carrier or cell pre-configured through the configuration signaling; and/or the step of detecting, by the UE, the dedicated sequences pre-configured through the configuration signaling includes: detecting, by the UE, the dedicated sequences in each subframe or a predetermined subframe, the predetermined subframe being a particular subframe pre-configured through the configuration signaling, or a subframe determined in accordance with a detection period, or the detection period and a subframe offset value, pre-configured through the configuration signaling.

Alternatively, the dedicated sequences are sequences of a particular reference signal for measurement pre-configured for the UE through the configuration signaling, and/or the terminal detects the dedicated sequences in an energy detection manner.

Alternatively, the synchronization signal is transmitted on the carrier or cell which uses the predetermined spectrum resource and using a subframe and a frequency domain resource defined in LTE releases 8-11 for a FDD or TDD system; or the synchronization signal is mapped to and transmitted over a first OFDM symbol or the preceding two OFDM symbols in a subframe pre-defined to transmit the synchronization signal on the carrier or cell which uses the predetermined spectrum resource, or in a first available subframe on the carrier or cell which uses the predetermined spectrum resource; or the synchronization signal is mapped to and transmitted over a first OFDM symbol or the preceding two OFDM symbols, without other reference signal, in a subframe pre-defined to transmit the synchronization signal on the carrier or cell which uses the predetermined spectrum resource, or in a first available subframe on the carrier or cell which uses the predetermined spectrum resource; or the synchronization signal is mapped to and transmitted over a first OFDM symbol or the preceding two OFDM symbols, other than a control region, in a subframe pre-defined to transmit the synchronization signal on the carrier or cell which uses the predetermined spectrum resource, or in a first available subframe on the carrier or cell which uses the predetermined spectrum resource; or the synchronization signal is mapped to and transmitted over a first OFDM symbol or the preceding two OFDM symbols, other than a control region and without other reference signal, in a subframe for transmitting the synchronization signal on the carrier or cell which uses the predetermined spectrum resource, or in a first available subframe on the carrier or cell which uses the predetermined spectrum resource; or a subframe or OFDM symbol for transmitting the synchronization signal on the carrier or cell which uses the predetermined spectrum resource is acquired in advance in accordance with the configuration signaling; or an offset value for transmitting the synchronization signal on the carrier or cell which uses the predetermined spectrum resource is acquired in advance in accordance with the configuration signaling, and the UE determines a subframe or OFDM symbol for transmitting the synchronization signal on the carrier or cell which uses the predetermined spectrum resource in accordance with a pre-defined position of the subframe or OFDM symbol and the offset value.

Alternatively, the synchronization signal includes a PSS and/or an SSS.

Alternatively, a bandwidth of the carrier or cell which uses the predetermined spectrum resource is notified in advance through the configuration signaling, or in the case that the bandwidth of the carrier or cell which uses the predetermined spectrum resource is unknown, the UE receives the reference signal for measurement and performs the measurement on a pre-defined bandwidth in the middle of the carrier or cell which uses the predetermined spectrum resource, and the pre-defined bandwidth is of a value not less than 6 RBs, or a value not less than a minimum bandwidth defined in an LTE system.

Alternatively, the carrier or cell is a secondary carrier or secondary cell pre-configured for the UE through the configuration signaling.

Alternatively, the carrier or cell which uses the predetermined spectrum resource is a secondary carrier or secondary cell pre-configured for the UE through the configuration signaling.

In yet another aspect, the present disclosure provides in some embodiments a signal transmission method, including a step of transmitting, by a base station, a signal on a carrier or cell which uses a predetermined spectrum resource. The predetermined spectrum resource is an unlicensed spectrum resource and the signal at least includes a judge signal for determining, by a UE, whether or not a signal received by the UE on the carrier or cell which uses the predetermined spectrum resource belongs to a serving carrier or serving cell of the UE and further includes a reference signal for measurement and/or a data signal, or the signal at least includes a judge signal for determining, by the UE, whether or not a signal received by the UE on the carrier or cell which uses the predetermined spectrum resource belongs to a serving carrier or serving cell of the UE or at least includes the judge signal and a data signal, the judge signal is further used for measurement; where the judge signal is a synchronization signal corresponding to an Identifier (ID) of the carrier or cell which uses the predetermined spectrum resource, and/or the judge signal is dedicated sequences corresponding to the carrier or cell which uses the predetermined spectrum resources or dedicated sequences of the UE.

According to the embodiments of the present disclosure, the UE may identify the cell and determine whether or not the signal is currently received from the serving cell, and in the case that the signal is currently received from the serving cell, perform the measurement and/or the data transmission. As a result, it is able to prevent the UE from receiving the erroneous data or performing the measurement and/or the data transmission based on the erroneous signal, thereby to prevent the system performance from being degraded and to utilize the predetermined spectrum resource appropriately. For example, in the case that the signal transmission method in the embodiments of the present disclosure is applied to an unlicensed spectrum resource, it is able to provide an effective, feasible scheme about how an LTE system operates at the unlicensed spectrum resource, thereby to prevent the mutual interferences among the systems due to the resource preemption, improve the measurement performance and the data transmission performance of the LTE system over the unlicensed spectrum resource, and improve the system performance.

Alternatively, the signal transmission method further includes: determining, by the base station, whether or not a current channel resource on the carrier or cell which uses the predetermined spectrum resource is free; in the case that the current channel resource is free, transmitting, by the base station, the signal on the carrier or cell which uses the predetermined spectrum resource; and in the case that the current channel resource is busy, prohibiting, by the base station, the transmission of the signal on the carrier or cell which uses the predetermined spectrum resource, or transmitting, by the base station, the signal on the carrier or cell which uses the predetermined spectrum resource after a predetermined time period. The predetermined time period has a length of a pre-defined fixed value, or the length of the predetermined time period is notified to the UE in advance through signaling.

Alternatively, the judge signal is a synchronization signal corresponding to an ID Of the carrier or cell which uses the predetermined spectrum resource, and the base station transmits the synchronization signal and the reference signal for measurement and/or the data signal, or transmits the synchronization signal, or transmits the synchronization signal and the data signal, on the carrier or cell which uses the predetermined spectrum resource. The base station transmits the synchronization signal in each subframe, or in a predetermined subframe in which the synchronization signal is to be transmitted, on the carrier or cell which uses the predetermined spectrum resource, and the ID of the carrier or cell which uses the predetermined spectrum resource is pre-configured by a master base station for the UE through configuration signaling. Alternatively, the base station transmits the synchronization signal in each subframe, or in a predetermined subframe in which the synchronization signal is to be transmitted, on the carrier or cell which uses the predetermined spectrum resource, and the ID of the carrier or cell which uses the predetermined spectrum resource is pre-configured by the base station for the UE through configuration signaling. Alternatively, the base station transmits the synchronization signal in each subframe, or in a predetermined subframe in which the synchronization signal is to be transmitted, on the carrier or cell which uses the predetermined spectrum resource, and the ID of the carrier or cell which uses the predetermined spectrum resource is notified by the base station to a master base station in advance and pre-configured by the master base station for the UE through the configuration signaling.

Alternatively, the judge signal is dedicated sequences corresponding to the carrier or cell which uses the predetermined spectrum resources or dedicated sequences of the UE, and the base station transmits the dedicated sequences and a reference signal for measurement and/or a data signal, or transmits the dedicated sequences, or transmits the dedicated sequences and the data signal, on the carrier or cell which uses the predetermined spectrum resources. The base station transmits the dedicated sequences in each subframe or a pre-defined subframe on the carrier or cell which uses the predetermined spectrum resource, the dedicated sequences are pre-configured by a master base station for the UE through configuration signaling, and the pre-defined subframe is a particular subframe pre-configured through the configuration signaling or a subframe determined in accordance with a detection period, or the detection period and a subframe offset value, pre-configured through the configuration signaling. Alternatively, the base station transmits the dedicated sequences in each subframe or a pre-defined subframe on the carrier or cell which uses the predetermined spectrum resource, the dedicated sequences are pre-configured by the base station for the UE through the configuration signaling, and the pre-defined subframe is a particular subframe pre-configured through the configuration signaling or a subframe determined in accordance with a detection period, or the detection period and a subframe offset value, pre-configured through the configuration signaling. Alternatively, the base station transmits the dedicated sequences in each subframe or a pre-defined subframe on the carrier or cell which uses the predetermined spectrum resource, the dedicated sequences are notified by the base station to a master base station in advance and pre-configured by the master base station for the UE through the configuration signaling, and the pre-defined subframe is a particular subframe pre-configured through the configuration signaling or a subframe determined in accordance with a detection period, or the detection period and a subframe offset value, pre-configured through the configuration signaling.

Alternatively, the reference signal for measurement is transmitted on an OFDM symbol on which synchronization signals are currently transmitted and using all frequency domain resources other than the frequency domain resources occupied by the synchronization signals, or the reference signal for measurement is transmitted on an OFDM symbol on which synchronization signals are currently transmitted and using parts of the frequency domain resources other than the frequency domain resources occupied by the synchronization signals, or the reference signal for measurement is transmitted on an OFDM symbol adjacent to, or separated by a fixed time domain interval from, the OFDM symbol on which synchronization signals are currently transmitted and the reference signal for measurement and at least one synchronization signal in the synchronization signals are transmitted within an identical subframe, or the reference signal for measurement is the synchronization signal.

Alternatively, sequences of the reference signal for measurement are generated at least in association with an ID of a carrier or cell on which the reference signal is currently transmitted, or in the case that the reference signal for measurement is used for measuring RSRP and/or CSI, sequences of the reference signal for measurement are generated at least in association with an ID of a carrier or cell on which the reference signal is currently transmitted, or sequences of the reference signal for measurement are sequences of a UE-specific or cell-specific measurement reference signal and pre-configured by configuration signaling, or in the case that the reference signal for measurement is used for measuring CSI, sequences of the reference signal for measurement is sequences of a UE-specific measurement reference signal and pre-configured through configuration signaling.

Alternatively, the reference signal for measurement is used for at least one of RSRP measurement, RSRQ measurement, positioning measurement, tracking measurement and CSI measurement.

Alternatively, the dedicated sequences are sequences of a particular reference signal for measurement pre-configured for the UE through the configuration signaling.

Alternatively, the synchronization signal is transmitted on the carrier or cell which uses the predetermined spectrum resource and using a subframe and a frequency domain resource defined in LTE releases 8-11 for a FDD or TDD system; or the synchronization signal is mapped to and transmitted over a first OFDM symbol or the preceding two OFDM symbols in a subframe pre-defined to transmit the synchronization signal on the carrier or cell which uses the predetermined spectrum resource, or in a first available subframe on the carrier or cell which uses the predetermined spectrum resource; or the synchronization signal is mapped to and transmitted over a first OFDM symbol or the preceding two OFDM symbols, without other reference signal, in a subframe pre-defined to transmit the synchronization signal on the carrier or cell which uses the predetermined spectrum resource, or in a first available subframe on the carrier or cell which uses the predetermined spectrum resource; or the synchronization signal is mapped to and transmitted over a first OFDM symbol or the preceding two OFDM symbols, other than a control region, in a subframe pre-defined to transmit the synchronization signal on the carrier or cell which uses the predetermined spectrum resource, or in a first available subframe on the carrier or cell which uses the predetermined spectrum resource; or the synchronization signal is mapped to and transmitted over a first OFDM symbol or the preceding two OFDM symbols, other than a control region and without other reference signal, in a subframe for transmitting the synchronization signal on the carrier or cell which uses the predetermined spectrum resource, or in a first available subframe on the carrier or cell which uses the predetermined spectrum resource; or the subframe or OFDM symbol for transmitting the synchronization signal on the carrier or cell which uses the predetermined spectrum resource is acquired by the base station from a master base station in advance or pre-defined, and notified by the master base station to the UE in advance through the configuration signaling, or the subframe or OFDM symbol for transmitting the synchronization signal on the carrier or cell which uses the predetermined spectrum resource is predetermined by the base station and notified by the base station to a master base station in advance, and notified to the UE by the master base station in advance through the configuration signaling, or the subframe or OFDM symbol for transmitting the synchronization signal on the carrier or cell which uses the predetermined spectrum resource is predetermined by the base station and notified by the base station to the UE in advance through the configuration signaling; or the subframe or OFDM symbol for transmitting the synchronization signal on the carrier or cell which uses the predetermined spectrum resource is determined in accordance with a pre-defined position of the subframe or OFDM symbol and an offset value for transmitting the synchronization signal on the carrier or cell which uses the predetermined spectrum resource. The offset value is acquired by the base station from a mater base station or pre-defined, and notified by the master base station to the UE in advance through the configuration signaling, or the offset value is predetermined by the base station and notified to a master base station in advance, and notified by the master base station to the UE in advance through the configuration signaling, or the offset value is predetermined by the base station and notified by the base station to the UE in advance through the configuration signaling.

Alternatively, the synchronization signal includes a PSS and/or an SSS.

Alternatively, a bandwidth of the carrier or cell which uses the predetermined spectrum resource is notified by the base station to the UE in advance through signaling; or the bandwidth of the carrier or cell which uses the predetermined spectrum resource is notified by the base station to a master base station in advance, and notified by the master base station to the UE in advance through signaling; or the bandwidth of the carrier or cell which uses the predetermined spectrum resource is notified by the master base station to the UE in advance through configuration signaling;. In the case that the bandwidth of the carrier or cell which uses the predetermined spectrum resource is not notified by the base station or the master base station to the UE in advance through the configuration signaling, the base station determines that the UE receives the reference signal for measurement and perform the measurement on a predefined bandwidth in the middle of the carrier or cell which uses the predetermined spectrum resource, and the predefined bandwidth is of a value not less than 6 RBs, or a value not less than a minimum bandwidth defined in an LTE system.

Alternatively, the carrier or cell is a secondary carrier or secondary cell pre-configured for the UE through the configuration signaling.

In yet another aspect, the present disclosure provides in some embodiments a signal transmission apparatus, including: a reception module configured to receive a signal; and a determination module configured to, in the case that the reception module receives the signal on a carrier or cell which uses a predetermined spectrum resource, determine whether or not the received signal belongs to a serving carrier or serving cell of a UE. The predetermined spectrum resource is an unlicensed spectrum resource. The reception module is further configured to, in the case that the received signal belongs to the serving carrier or serving cell of the UE, perform measurement and/or data transmission in accordance with the received signal and/or a subsequently-received signal. The determination module is further configured to perform at least one of the following processings: detecting a synchronization signal corresponding to the ID of the carrier or cell in accordance with the ID of the carrier or cell pre-configured through the configuration signaling, and in response to the synchronization signal corresponding to the ID of the carrier or cell being detected, determining that the received signal belongs to the serving carrier or serving cell; and detecting dedicated sequences corresponding to the serving carrier or serving cell of the UE or dedicated sequences for the UE pre-configured through the configuration signaling, and in response to the dedicated sequences being detected, determining that the received signal belongs to the serving carrier or serving cell.

According to the embodiments of the present disclosure, the UE may identify the cell and determine whether or not the signal is currently received from the serving cell, and in the case that the signal is currently received from the serving cell, perform the measurement and/or the data transmission. As a result, it is able to prevent the UE from receiving the erroneous data or performing the measurement and/or the data transmission based on the erroneous signal, thereby to prevent the system performance from being degraded and to utilize the predetermined spectrum resource appropriately. For example, in the case that the signal transmission method in the embodiments of the present disclosure is applied to an unlicensed spectrum resource, it is able to provide an effective, feasible scheme about how an LTE system operates at the unlicensed spectrum resource, thereby to prevent the mutual interferences among the systems due to the resource preemption, improve the measurement performance and the data transmission performance of the LTE system over the unlicensed spectrum resource, and improve the system performance.

Alternatively, the reception module is further configured to perform at least one of the following processings: performing the measurement by the UE in accordance with a received reference signal for measurement; receiving a further reference signal for measurement, and performing the measurement in accordance with the received further reference signal for measurement; performing the data transmission in accordance with received scheduling signaling; and receiving further scheduling signaling, and performing the data transmission in accordance with the received further scheduling signaling.

Alternatively, the reception module is configured to receive the reference signal for measurement on an OFDM symbol on which synchronization signals are currently transmitted and using all frequency domain resources other than the frequency domain resources occupied by the synchronization signals, or receive the reference signal for measurement on an OFDM symbol on which synchronization signals are currently transmitted and using parts of the frequency domain resources other than the frequency domain resources occupied by the synchronization signals, or receive the reference signal for measurement on an OFDM symbol adjacent to, or separated by a fixed time domain interval from, the OFDM symbol on which synchronization signals are currently transmitted wherein the reference signal for measurement and at least one synchronization signal in the synchronization signals are transmitted within an identical subframe, or receive the synchronization signal as the reference signal for measurement.

Alternatively, the reception module is further configured to generate sequences of the reference signal for measurement at least in association with an ID of a carrier or cell on which the reference signal is currently transmitted, or in the case that the reference signal for measurement is used for measuring RSRP and/or CSI, generate sequences of the reference signal for measurement at least in association with an ID of a carrier or cell on which the reference signal is currently transmitted, or determine sequences of a UE-specific or cell-specific measurement reference signal and pre-configured by configuration signaling as sequences of the reference signal for measurement, or in the case that the reference signal for measurement is used for measuring CSI, determine sequences of a UE-specific or cell-specific measurement reference signal and pre-configured through configuration signaling as sequences of the reference signal for measurement.

Alternatively, the reception module is further configured to perform at least one of RSRP measurement, RSRQ measurement, positioning measurement, tracking measurement and CSI measurement using the reference signal for measurement.

Alternatively, in the case that the determination module detects the synchronization signal corresponding to the ID of the carrier or cell in accordance with the ID of the carrier or cell pre-configured through the configuration signaling, the determination module is further configured to detect the synchronization signal corresponding to the ID of the carrier or cell in each subframe or a predetermined subframe in which the synchronization signal is to be transmitted in accordance with the ID of the carrier or cell pre-configured through the configuration signaling. In the case that the determination module detects the dedicated sequences pre-configured through the configuration signaling, the determination module is further configured to detect the dedicated sequences in each subframe or a predetermined subframe, and the predetermined subframe is a particular subframe pre-configured through the configuration signaling, or a subframe determined in accordance with a detection period, or the detection period and a subframe offset value, pre-configured through the configuration signaling.

Alternatively, the determination module is further configured to determine sequences of a particular reference signal for measurement pre-configured for the UE through the configuration signaling as the dedicated sequences, and/or detect the dedicated sequences in an energy detection manner.

Alternatively, the synchronization signal is transmitted on the carrier or cell which uses the predetermined spectrum resource and using a subframe and a frequency domain resource defined in LTE releases 8-11 for a FDD or TDD system; or the synchronization signal is mapped to and transmitted over a first OFDM symbol or the preceding two OFDM symbols in a subframe pre-defined to transmit the synchronization signal on the carrier or cell which uses the predetermined spectrum resource, or in a first available subframe on the carrier or cell which uses the predetermined spectrum resource; or the synchronization signal is mapped to and transmitted over a first OFDM symbol or the preceding two OFDM symbols, without other reference signal, in a subframe pre-defined to transmit the synchronization signal on the carrier or cell which uses the predetermined spectrum resource, or in a first available subframe on the carrier or cell which uses the predetermined spectrum resource; or the synchronization signal is mapped to and transmitted over a first OFDM symbol or the preceding two OFDM symbols, other than a control region, in a subframe pre-defined to transmit the synchronization signal on the carrier or cell which uses the predetermined spectrum resource, or in a first available subframe on the carrier or cell which uses the predetermined spectrum resource; or the synchronization signal is mapped to and transmitted over a first OFDM symbol or the preceding two OFDM symbols, other than a control region and without other reference signal, in a subframe for transmitting the synchronization signal on the carrier or cell which uses the predetermined spectrum resource, or in a first available subframe on the carrier or cell which uses the predetermined spectrum resource; or a subframe or OFDM symbol for transmitting the synchronization signal on the carrier or cell which uses the predetermined spectrum resource is acquired in advance in accordance with the configuration signaling; or an offset value for transmitting the synchronization signal on the carrier or cell which uses the predetermined spectrum resource is acquired in advance in accordance with the configuration signaling, and the UE determines a subframe or OFDM symbol for transmitting the synchronization signal on the carrier or cell which uses the predetermined spectrum resource in accordance with a pre-defined position of the subframe or OFDM symbol and the offset value.

Alternatively, the synchronization signal includes a PSS and/or an SSS.

Alternatively, the reception module is further configured to determine that a bandwidth of the carrier or cell which uses the predetermined spectrum resource is notified in advance through the configuration signaling, or in the case that the bandwidth of the carrier or cell which uses the predetermined spectrum resource is unknown, receive the reference signal for measurement

and perform the measurement on a pre-defined bandwidth in the middle of the carrier or cell which uses the predetermined spectrum resource, and the pre-defined bandwidth is of a value not less than 6 RBs, or a value not less than a minimum bandwidth defined in an LTE system.

Alternatively, the reception module or the determination module is further configured to determine that the predetermined spectrum resource is an unlicensed spectrum resource.

Alternatively, the reception module is further configured to determine that the carrier or cell is a secondary carrier or secondary cell pre-configured for the UE through the configuration signaling.

Alternatively, the reception module is further configured to determine that the carrier or cell which uses the predetermined spectrum resource is a secondary carrier or secondary cell pre-configured for the UE through the configuration signaling.

In still yet another aspect, the present disclosure provides in some embodiments a signal transmission apparatus for a base station, including: a generation module configured to generate a signal; and a transmission module configured to transmit the signal on a carrier or cell which uses a predetermined spectrum resource. The predetermined spectrum resource is an unlicensed spectrum resource. The signal at least includes a judge signal for determining, by a UE, whether or not a signal received by the UE on the carrier or cell which uses the predetermined spectrum resource belongs to a serving carrier or serving cell of the UE and further includes a reference signal for measurement and/or a data signal, or the signal at least includes a judge signal for determining, by the UE, whether or not a signal received by the UE on the carrier or cell which uses the predetermined spectrum resource belongs to a serving carrier or serving cell of the UE or at least includes the judge signal and a data signal, the judge signal is further used for measurement. The judge signal is a synchronization signal corresponding to an Identifier (ID) of the carrier or cell which uses the predetermined spectrum resource, and/or the judge signal is dedicated sequences corresponding to the carrier or cell which uses the predetermined spectrum resources or dedicated sequences of the UE.

According to the embodiments of the present disclosure, the UE may identify the cell and determine whether or not the signal is currently received from the serving cell, and in the case that the signal is currently received from the serving cell, perform the measurement and/or the data transmission. As a result, it is able to prevent the UE from receiving the erroneous data or performing the measurement and/or the data transmission based on the erroneous signal, thereby to prevent the system performance from being degraded and to utilize the predetermined spectrum resource appropriately. For example, in the case that the signal transmission method in the embodiments of the present disclosure is applied to an unlicensed spectrum resource, it is able to provide an effective, feasible scheme about how an LTE system operates at the unlicensed spectrum resource, thereby to prevent the mutual interferences among the systems due to the resource preemption, improve the measurement performance and the data transmission performance of the LTE system over the unlicensed spectrum resource, and improve the system performance.

Alternatively, the signal transmission apparatus further includes a judgment module configured to determine whether or not a current channel resource on the carrier or cell which uses the predetermined spectrum resource is free. In the case that the current channel resource is free, the transmission module is further configured to transmit the signal on the carrier or cell which uses the predetermined spectrum resource, and in the case that the current channel resource is busy, the transmission module is further configured to prohibit the transmission of the signal on the carrier or cell which uses the predetermined spectrum resource, or transmit the signal on the carrier or cell which uses the predetermined spectrum resource after a predetermined time period. The predetermined time period has a length of a pre-defined fixed value, or the length of the predetermined time period is notified to the UE in advance through signaling.

Alternatively, in the case that the judge signal is a synchronization signal corresponding to an ID of the carrier or cell which uses the predetermined spectrum resource, the transmission module is configured to transmit the synchronization signal and the reference signal for measurement and/or the data signal, or transmit the synchronization signal, or transmit the synchronization signal and the data signal, on the carrier or cell which uses the predetermined spectrum resource. The transmission module is configured to transmit the synchronization signal in each subframe, or in a predetermined subframe in which the synchronization signal is to be transmitted, on the carrier or cell which uses the predetermined spectrum resource, and the ID of the carrier or cell which uses the predetermined spectrum resource is pre-configured by a master base station for the UE through configuration signaling. Alternatively, the transmission module is further configured to transmit the synchronization signal in each subframe, or in a predetermined subframe in which the synchronization signal is to be transmitted, on the carrier or cell which uses the predetermined spectrum resource, and the ID of the carrier or cell which uses the predetermined spectrum resource is pre-configured by the base station for the UE through configuration signaling. Alternatively, the transmission module is further configured to transmit the synchronization signal in each subframe, or in a predetermined subframe in which the synchronization signal is to be transmitted, on the carrier or cell which uses the predetermined spectrum resource, and the ID of the carrier or cell which uses the predetermined spectrum resource is notified by the base station to a master base station in advance and pre-configured by the master base station for the UE through the configuration signaling.

Alternatively, in the case that the judge signal is dedicated sequences corresponding to the carrier or cell which uses the predetermined spectrum resources or dedicated sequences of the UE, the transmission module is configured to transmit the dedicated sequences and a reference signal for measurement and/or a data signal, or transmit the dedicated sequences, or transmit the dedicated sequences and the data signal, on the carrier or cell which uses the predetermined spectrum resources. The transmission module is further configured to transmit the dedicated sequences in each subframe or a pre-defined subframe on the carrier or cell which uses the predetermined spectrum resource, the dedicated sequences are pre-configured by a master base station for the UE through configuration signaling, and the pre-defined subframe is a particular subframe pre-configured through the configuration signaling or a subframe determined in accordance with a detection period, or the detection period and a subframe offset value, pre-configured through the configuration signaling. Alternatively, the transmission module is further configured to transmit the dedicated sequences in each subframe or a pre-defined subframe on the carrier or cell which uses the predetermined spectrum resource, the dedicated sequences are pre-configured by the base station for the UE through the configuration signaling, and the pre-defined subframe is a particular subframe pre-configured through the configuration signaling or a subframe determined in accordance with a detection period, or the detection period and a subframe offset value, pre-configured through the configuration signaling. Alternatively, the transmission module is further configured to transmit the dedicated sequences in each subframe or a pre-defined subframe on the carrier or cell which uses the predetermined spectrum resource, the dedicated sequences are notified by the base station to a master base station in advance and pre-configured by the master base station for the UE through the configuration signaling, and the pre-defined subframe is a particular subframe pre-configured through the configuration signaling or a subframe determined in accordance with a detection period, or the detection period and a subframe offset value, pre-configured through the configuration signaling.

Alternatively, the transmission module is further configured to transmit the reference signal for measurement on an OFDM symbol on which synchronization signals are currently transmitted and using all frequency domain resources other than the frequency domain resources occupied by the synchronization signals, or transmit the reference signal for measurement on an OFDM symbol on which synchronization signals are currently transmitted and using parts of the frequency domain resources other than the frequency domain resources occupied by the synchronization signals, or transmit the reference signal for measurement on an OFDM symbol adjacent to, or separated by a fixed time domain interval from, the OFDM symbol on which synchronization signals are currently transmitted wherein the reference signal for measurement and at least one synchronization signal in the synchronization signals are transmitted within an identical subframe, or transmit the synchronization signal as the reference signal for measurement.

Alternatively, the generation module is further configured to generate sequences of the reference signal for measurement at least in association with an ID of a carrier or cell on which the reference signal is currently transmitted, or in the case that the reference signal for measurement is used for measuring RSRP and/or CSI, generate sequences of the reference signal for measurement at least in association with an ID of a carrier or cell on which the reference signal is currently transmitted, or determine sequences of a UE-specific or cell-specific measurement reference signal and pre-configured by configuration signaling as sequences of the reference signal for measurement, or in the case that the reference signal for measurement is used for measuring CSI, determine sequences of a UE-specific or cell-specific measurement reference signal and pre-configured through configuration signaling as sequences of the reference signal for measurement.

Alternatively, the generation module is further configured to perform at least one of RSRP measurement, RSRQ measurement, positioning measurement, tracking measurement and CSI measurement using the reference signal for measurement.

Alternatively, the generation module is further configured to determine sequences of a particular reference signal for measurement pre-configured for the UE through the configuration signaling as the dedicated sequences.

Alternatively, the transmission module is further configured to determine that: the synchronization signal is transmitted on the carrier or cell which uses the predetermined spectrum resource and using a subframe and a frequency domain resource defined in LTE releases 8-11 for a FDD or TDD system; or the synchronization signal is mapped to and transmitted over a first OFDM symbol or the preceding two OFDM symbols in a subframe pre-defined to transmit the synchronization signal on the carrier or cell which uses the predetermined spectrum resource, or in a first available subframe on the carrier or cell which uses the predetermined spectrum resource; or the synchronization signal is mapped to and transmitted over a first OFDM symbol or the preceding two OFDM symbols, without other reference signal, in a subframe pre-defined to transmit the synchronization signal on the carrier or cell which uses the predetermined spectrum resource, or in a first available subframe on the carrier or cell which uses the predetermined spectrum resource; or the synchronization signal is mapped to and transmitted over a first OFDM symbol or the preceding two OFDM symbols, other than a control region, in a subframe pre-defined to transmit the synchronization signal on the carrier or cell which uses the predetermined spectrum resource, or in a first available subframe on the carrier or cell which uses the predetermined spectrum resource; or the synchronization signal is mapped to and transmitted over a first OFDM symbol or the preceding two OFDM symbols, other than a control region and without other reference signal, in a subframe for transmitting the synchronization signal on the carrier or cell which uses the predetermined spectrum resource, or in a first available subframe on the carrier or cell which uses the predetermined spectrum resource; or the subframe or OFDM symbol for transmitting the synchronization signal on the carrier or cell which uses the predetermined spectrum resource is acquired by the base station from a master base station in advance or pre-defined, and notified by the master base station to the UE in advance through the configuration signaling, or the subframe or OFDM symbol for transmitting the synchronization signal on the carrier or cell which uses the predetermined spectrum resource is predetermined by the base station and notified by the base station to a master base station in advance, and notified to the UE by the master base station in advance through the configuration signaling, or the subframe or OFDM symbol for transmitting the synchronization signal on the carrier or cell which uses the predetermined spectrum resource is predetermined by the base station and notified by the base station to the UE in advance through the configuration signaling; or the subframe or OFDM symbol for transmitting the synchronization signal on the carrier or cell which uses the predetermined spectrum resource is determined in accordance with a pre-defined position of the subframe or OFDM symbol and an offset value for transmitting the synchronization signal on the carrier or cell which uses the predetermined spectrum resource. The offset value is acquired by the base station from a mater base station or pre-defined, and notified by the master base station to the UE in advance through the configuration signaling, or the offset value is predetermined by the base station and notified to a master base station in advance, and notified by the master base station to the UE in advance through the configuration signaling, or the offset value is predetermined by the base station and notified by the base station to the UE in advance through the configuration signaling.

Alternatively, the synchronization signal includes a PSS and/or an SSS.

Alternatively, the transmission module is further configured to: notify a bandwidth of the carrier or cell which uses the predetermined spectrum resource to the UE in advance through signaling; or notify the bandwidth of the carrier or cell which uses the predetermined spectrum resource to a master base station in advance, so that the master base station notifies the bandwidth to the UE in advance through signaling; or in the case that the bandwidth of the carrier or cell which uses the predetermined spectrum resource is not notified by the base station or the master base station to the UE in advance through the configuration signaling, determine that the UE receives the reference signal for measurement and perform the measurement on a pre-defined bandwidth in the middle of the carrier or cell which uses the predetermined spectrum resource. The pre-defined bandwidth is of a value not less than 6 RBs, or a value not less than a minimum bandwidth defined in an LTE system.

Alternatively, the transmission module is further configured to determine the predetermined spectrum resource as an unlicensed spectrum resource, and/or determine a secondary carrier or secondary cell pre-configured for the UE through the configuration signaling as the serving carrier or serving cell.

In still yet another aspect, the present disclosure provides in some embodiments a signal transmission apparatus, including a transceiver, a processor and a memory. The transceiver is configured to receive and transmit a signal under the control of the processor. The processor is configured to read a program stored in a memory so as to, in the case that the signal is received by the transceiver on a carrier or cell which uses a predetermined spectrum resource, determine whether or not the received signal belongs to a serving carrier or serving cell of a UE. The transceiver is further configured to, in the case that the received signal belongs to the serving carrier or serving cell of the UE, perform measurement and/or data transmission in accordance with the received signal and/or a subsequently-received signal.

According to the embodiments of the present disclosure, the UE may identify the cell and determine whether or not the signal is currently received from the serving cell, and in the case that the signal is currently received from the serving cell, perform the measurement and/or the data transmission. As a result, it is able to prevent the UE from receiving the erroneous data or performing the measurement and/or the data transmission based on the erroneous signal, thereby to prevent the system performance from being degraded and to utilize the predetermined spectrum resource appropriately. For example, in the case that the signal transmission method in the embodiments of the present disclosure is applied to an unlicensed spectrum resource, it is able to provide an effective, feasible scheme about how an LTE system operates at the unlicensed spectrum resource, thereby to prevent the mutual interferences among the systems due to the resource preemption, improve the measurement performance and the data transmission performance of the LTE system over the unlicensed spectrum resource, and improve the system performance.

Alternatively, the transceiver is configured to perform at least one of the following processings: performing the measurement in accordance with a received reference signal for measurement; receiving a further reference signal for measurement, and performing the measurement in accordance with the received further reference signal for measurement; performing the data in accordance with received scheduling signaling; and receiving further scheduling signaling, and performing the data transmission in accordance with the received further scheduling signaling.

Alternatively, the transceiver is further configured to receive the reference signal for measurement on an OFDM symbol on which synchronization signals are currently transmitted and using all frequency domain resources other than the frequency domain resources occupied by the synchronization signals, or receive the reference signal for measurement an OFDM symbol on which synchronization signals are currently transmitted and using parts of the frequency domain resources other than the frequency domain resources occupied by the synchronization signals, or receive the reference signal for measurement on an OFDM symbol adjacent to, or separated by a fixed time domain interval from, the OFDM symbol on which synchronization signals are currently transmitted wherein the reference signal for measurement and at least one synchronization signal in the synchronization signals are transmitted within an identical subframe, or receive the synchronization signal as the reference signal for measurement.

Alternatively, the transceiver is further configured to generate sequences of the reference signal for measurement at least in association with an ID of a carrier or cell on which the reference signal is currently transmitted, or in the case that the reference signal for measurement is used for measuring RSRP and/or CSI, generate sequences of the reference signal for measurement at least in association with an ID of a carrier or cell on which the reference signal is currently transmitted, or determine sequences of a UE-specific or cell-specific measurement reference signal and pre-configured by configuration signaling as sequences of the reference signal for measurement, or in the case that the reference signal for measurement is used for measuring CSI, determine sequences of a UE-specific or cell-specific measurement reference signal and pre-configured through configuration signaling as sequences of the reference signal for measurement.

Alternatively, the transceiver is further configured to perform at least one of RSRP measurement, RSRQ measurement, positioning measurement, tracking measurement and CSI measurement using the reference signal for measurement.

Alternatively, the processor is configured to perform at least one of the following processings: detecting a synchronization signal corresponding to the ID of the carrier or cell in accordance with the ID of the carrier or cell pre-configured through the configuration signaling, and in response to the synchronization signal corresponding to the ID of the carrier or cell being detected, determining that the received signal belongs to the serving carrier or serving cell; and detecting dedicated sequences corresponding to the serving carrier or serving cell of the UE or dedicated sequences for the UE pre-configured through the configuration signaling, and in response to the dedicated sequences being detected, determining that the received signal belongs to the serving carrier or serving cell.

Alternatively, in the case that the processor detects the synchronization signal corresponding to the ID of the carrier or cell in accordance with the ID of the carrier or cell pre-configured through the configuration signaling, the processor is further configured to detect the synchronization signal corresponding to the ID of the carrier or cell in each subframe or a predetermined subframe in which the synchronization signal is to be transmitted in accordance with the ID of the carrier or cell pre-configured through the configuration signaling. In the case that the processor detects the dedicated sequences pre-configured through the configuration signaling, the processor is further configured to detect the dedicated sequences in each subframe or a predetermined subframe, and the predetermined subframe is a particular subframe pre-configured through the configuration signaling, or a subframe determined in accordance with a detection period, or the detection period and a subframe offset value, pre-configured through the configuration signaling.

Alternatively, the processor is further configured to determine sequences of a particular reference signal for measurement pre-configured for the UE through the configuration signaling as the dedicated sequences, and/or detect the dedicated sequences in an energy detection manner.

Alternatively, the synchronization signal is transmitted on the carrier or cell which uses the predetermined spectrum resource and using a subframe and a frequency domain resource defined in LTE releases 8-11 for a FDD or TDD system; or the synchronization signal is mapped to and transmitted over a first OFDM symbol or the preceding two OFDM symbols in a subframe pre-defined to transmit the synchronization signal on the carrier or cell which uses the predetermined spectrum resource, or in a first available subframe on the carrier or cell which uses the predetermined spectrum resource; or the synchronization signal is mapped to and transmitted over a first OFDM symbol or the preceding two OFDM symbols, without other reference signal, in a subframe pre-defined to transmit the synchronization signal on the carrier or cell which uses the predetermined spectrum resource, or in a first available subframe on the carrier or cell which uses the predetermined spectrum resource; or the synchronization signal is mapped to and transmitted over a first OFDM symbol or the preceding two OFDM symbols, other than a control region, in a subframe pre-defined to transmit the synchronization signal on the carrier or cell which uses the predetermined spectrum resource, or in a first available subframe on the carrier or cell which uses the predetermined spectrum resource; or the synchronization signal is mapped to and transmitted over a first OFDM symbol or the preceding two OFDM symbols, other than a control region and without other reference signal, in a subframe for transmitting the synchronization signal on the carrier or cell which uses the predetermined spectrum resource, or in a first available subframe on the carrier or cell which uses the predetermined spectrum resource; or a subframe or OFDM symbol for transmitting the synchronization signal on the carrier or cell which uses the predetermined spectrum resource is acquired in advance in accordance with the configuration signaling; or an offset value for transmitting the synchronization signal on the carrier or cell which uses the predetermined spectrum resource is acquired in advance in accordance with the configuration signaling, and the UE determines a subframe or OFDM symbol for transmitting the synchronization signal on the carrier or cell which uses the predetermined spectrum resource in accordance with a pre-defined position of the subframe or OFDM symbol and the offset value.

Alternatively, the synchronization signal includes a PSS and/or an SSS.

Alternatively, the transceiver is further configured to notify a bandwidth of the carrier or cell which uses the predetermined spectrum in advance through the configuration signaling, or in the case that the bandwidth of the carrier or cell which uses the predetermined spectrum resource is unknown, receive the reference signal for measurement and performs the measurement on a pre-defined bandwidth in the middle of the carrier or cell which uses the predetermined spectrum resource, and the pre-defined bandwidth is of a value not less than 6 RBs, or a value not less than a minimum bandwidth defined in an LTE system.

Alternatively, the transceiver or the processor is further configured to determine the predetermined spectrum resource as an unlicensed spectrum resource.

Alternatively, the transceiver is further configured to determine the a secondary carrier or secondary cell pre-configured for the UE through the configuration signaling as the serving carrier or serving cell, and/or determine the carrier or cell which uses the predetermined spectrum resource as a secondary carrier or secondary cell pre-configured for the UE through the configuration signaling.

In still yet another aspect, the present disclosure provides in some embodiments a signal transmission apparatus for a base station, including a processor, a transceiver and a memory. The processor is configured to read a program stored in the memory and generate a signal. The transceiver is configured to receive and transmit the signal under the control of the processor. The transceiver is further configured to transmit the signal on a carrier or cell which uses a predetermined spectrum resource. The signal at least includes a judge signal for determining, by a UE, whether or not a signal received by the UE on the carrier or cell which uses the predetermined spectrum resource belongs to a serving carrier or serving cell of the UE and further includes a reference signal for measurement and/or a data signal, or the signal at least includes a judge signal for determining, by the UE, whether or not a signal received by the UE on the carrier or cell which uses the predetermined spectrum resource belongs to a serving carrier or serving cell of the UE or at least includes the judge signal and a data signal, the judge signal is further used for measurement.

According to the embodiments of the present disclosure, the UE may identify the cell and determine whether or not the signal is currently received from the serving cell, and in the case that the signal is currently received from the serving cell, perform the measurement and/or the data transmission. As a result, it is able to prevent the UE from receiving the erroneous data or performing the measurement and/or the data transmission based on the erroneous signal, thereby to prevent the system performance from being degraded and to utilize the predetermined spectrum resource appropriately. For example, in the case that the signal transmission method in the embodiments of the present disclosure is applied to an unlicensed spectrum resource, it is able to provide an effective, feasible scheme about how an LTE system operates at the unlicensed spectrum resource, thereby to prevent the mutual interferences among the systems due to the resource preemption, improve the measurement performance and the data transmission performance of the LTE system over the unlicensed spectrum resource, and improve the system performance.

Alternatively, the processor is further configured to determine whether or not a current channel resource on the carrier or cell which uses the predetermined spectrum resource is free. In the case that the current channel resource is free, the transceiver is configured to transmit the signal on the carrier or cell which uses the predetermined spectrum resource. In the case that the current channel resource is busy, the transceiver is configured to prohibit the transmission of the signal on the carrier or cell which uses the predetermined spectrum resource, or transmit the signal on the carrier or cell which uses the predetermined spectrum resource after a predetermined time period. The predetermined time period has a length of a pre-defined fixed value, or the length of the predetermined time period is notified to the UE in advance through signaling.

Alternatively, in the case that the judge signal is a synchronization signal corresponding to an ID Of the carrier or cell which uses the predetermined spectrum resource, the transceiver is configured to transmit the synchronization signal and the reference signal for measurement and/or the data signal, or transmit the synchronization signal, or transmit the synchronization signal and the data signal, on the carrier or cell which uses the predetermined spectrum resource. The transceiver is further configured to transmit the synchronization signal in each subframe, or in a predetermined subframe in which the synchronization signal is to be transmitted, on the carrier or cell which uses the predetermined spectrum resource, and the ID of the carrier or cell which uses the predetermined spectrum resource is pre-configured by a master base station for the UE through configuration signaling. Alternatively, the transceiver is further configured to transmit the synchronization signal in each subframe, or in a predetermined subframe in which the synchronization signal is to be transmitted, on the carrier or cell which uses the predetermined spectrum resource, and the ID of the carrier or cell which uses the predetermined spectrum resource is pre-configured by the base station for the UE through configuration signaling. Alternatively, the transceiver is further configured to transmit the synchronization signal in each subframe, or in a predetermined subframe in which the synchronization signal is to be transmitted, on the carrier or cell which uses the predetermined spectrum resource, and the ID of the carrier or cell which uses the predetermined spectrum resource is notified by the base station to a master base station in advance and pre-configured by the master base station for the UE through the configuration signaling.

Alternatively, in the case that the judge signal is dedicated sequences corresponding to the carrier or cell which uses the predetermined spectrum resources or dedicated sequences of the UE, the transceiver is configured to transmit the dedicated sequences and a reference signal for measurement and/or a data signal, or transmit the dedicated sequences, or transmit the dedicated sequences and the data signal, on the carrier or cell which uses the predetermined spectrum resources. The transceiver is further configured to transmit the dedicated sequences in each subframe or a pre-defined subframe on the carrier or cell which uses the predetermined spectrum resource, the dedicated sequences are pre-configured by a master base station for the UE through configuration signaling, and the pre-defined subframe is a particular subframe pre-configured through the configuration signaling or a subframe determined in accordance with a detection period, or the detection period and a subframe offset value, pre-configured through the configuration signaling. Alternatively, the transceiver is further configured to transmit the dedicated sequences in each subframe or a pre-defined subframe on the carrier or cell which uses the predetermined spectrum resource, the dedicated sequences are pre-configured by the base station for the UE through the configuration signaling, and the pre-defined subframe is a particular subframe pre-configured through the configuration signaling or a subframe determined in accordance with a detection period, or the detection period and a subframe offset value, pre-configured through the configuration signaling. Alternatively, the transceiver is further configured to transmit the dedicated sequences in each subframe or a pre-defined subframe on the carrier or cell which uses the predetermined spectrum resource, the dedicated sequences are notified by the base station to a master base station in advance and pre-configured by the master base station for the UE through the configuration signaling, and the pre-defined subframe is a particular subframe pre-configured through the configuration signaling or a subframe determined in accordance with a detection period, or the detection period and a subframe offset value, pre-configured through the configuration signaling.

Alternatively, the transceiver is further configured to transmit the reference signal for measurement on an OFDM symbol on which synchronization signals are currently transmitted and using all frequency domain resources other than the frequency domain resources occupied by the synchronization signals, or transmit the reference signal for measurement on an OFDM symbol on which synchronization signals are currently transmitted and using parts of the frequency domain resources other than the frequency domain resources occupied by the synchronization signals, or transmit the reference signal for measurement on an OFDM symbol adjacent to, or separated by a fixed time domain interval from, the OFDM symbol on which synchronization signals are currently transmitted wherein the reference signal for measurement and at least one synchronization signal in the synchronization signals are transmitted within an identical subframe, or transmit the synchronization signal as the reference signal for measurement.

Alternatively, the processor is further configured to generate sequences of the reference signal for measurement at least in association with an ID of a carrier or cell on which the reference signal is currently transmitted, or in the case that the reference signal for measurement is used for measuring RSRP and/or CSI, generate sequences of the reference signal for measurement at least in association with an ID of a carrier or cell on which the reference signal is currently transmitted, or determine sequences of a UE-specific or cell-specific measurement reference signal and pre-configured by configuration signaling as sequences of the reference signal for measurement, or in the case that the reference signal for measurement is used for measuring CSI, determine sequences of a UE-specific measurement reference signal and pre-configured through configuration signaling as sequences of the reference signal for measurement.

Alternatively, the processor is further configured to perform at least one of RSRP measurement, RSRQ measurement, positioning measurement, tracking measurement and CSI measurement using the reference signal for measurement.

Alternatively, the processor is further configured to determine sequences of a particular reference signal for measurement pre-configured for the UE through the configuration signaling as the dedicated sequences.

Alternatively, the transceiver is further configured to determine that: the synchronization signal is transmitted on the carrier or cell which uses the predetermined spectrum resource and using a subframe and a frequency domain resource defined in LTE releases 8-11 for a FDD or TDD system; or the synchronization signal is mapped to and transmitted over a first OFDM symbol or the preceding two OFDM symbols in a subframe pre-defined to transmit the synchronization signal on the carrier or cell which uses the predetermined spectrum resource, or in a first available subframe on the carrier or cell which uses the predetermined spectrum resource; or the synchronization signal is mapped to and transmitted over a first OFDM symbol or the preceding two OFDM symbols, without other reference signal, in a subframe pre-defined to transmit the synchronization signal on the carrier or cell which uses the predetermined spectrum resource, or in a first available subframe on the carrier or cell which uses the predetermined spectrum resource; or the synchronization signal is mapped to and transmitted over a first OFDM symbol or the preceding two OFDM symbols, other than a control region, in a subframe pre-defined to transmit the synchronization signal on the carrier or cell which uses the predetermined spectrum resource, or in a first available subframe on the carrier or cell which uses the predetermined spectrum resource; or the synchronization signal is mapped to and transmitted over a first OFDM symbol or the preceding two OFDM symbols, other than a control region and without other reference signal, in a subframe for transmitting the synchronization signal on the carrier or cell which uses the predetermined spectrum resource, or in a first available subframe on the carrier or cell which uses the predetermined spectrum resource; or the subframe or OFDM symbol for transmitting the synchronization signal on the carrier or cell which uses the predetermined spectrum resource is acquired by the base station from a master base station in advance or pre-defined, and notified by the master base station to the UE in advance through the configuration signaling, or the subframe or OFDM symbol for transmitting the synchronization signal on the carrier or cell which uses the predetermined spectrum resource is predetermined by the base station and notified by the base station to a master base station in advance, and notified to the UE by the master base station in advance through the configuration signaling, or the subframe or OFDM symbol for transmitting the synchronization signal on the carrier or cell which uses the predetermined spectrum resource is predetermined by the base station and notified by the base station to the UE in advance through the configuration signaling; or the subframe or OFDM symbol for transmitting the synchronization signal on the carrier or cell which uses the predetermined spectrum resource is determined in accordance with a pre-defined position of the subframe or OFDM symbol and an offset value for transmitting the synchronization signal on the carrier or cell which uses the predetermined spectrum resource. The offset value is acquired by the base station from a mater base station or pre-defined, and notified by the master base station to the UE in advance through the configuration signaling, or the offset value is predetermined by the base station and notified to a master base station in advance, and notified by the master base station to the UE in advance through the configuration signaling, or the offset value is predetermined by the base station and notified by the base station to the UE in advance through the configuration signaling.

Alternatively, the synchronization signal includes a PSS and/or an SSS.

Alternatively, the transceiver is further configured to notify a bandwidth of the carrier or cell which uses the predetermined spectrum resource to the UE in advance through signaling; or notify the bandwidth of the carrier or cell which uses the predetermined spectrum resource to a master base station in advance, so that the master base station notifies the bandwidth to the UE in advance through signaling, or in the case that the bandwidth of the carrier or cell which uses the predetermined spectrum resource is not notified by the base station or the master base station to the UE in advance through the configuration signaling, determine that the UE receives the reference signal for measurement and perform the measurement on a pre-defined bandwidth in the middle of the carrier or cell which uses the predetermined spectrum resource, and the pre-defined bandwidth is of a value not less than 6 RBs, or a value not less than a minimum bandwidth defined in an LTE system.

Alternatively, the transceiver is further configured to determine the predetermined spectrum resource as an unlicensed spectrum resource, and/or determine a secondary carrier or secondary cell pre-configured for the UE through the configuration signaling as the serving carrier or serving cell.

## BRIEF DESCRIPTION OF THE DRAWINGS

In order to illustrate the technical solutions of the present disclosure or the related art in a clearer manner, the drawings desired for the present disclosure or the related art will be described hereinafter briefly. Obviously, the following drawings merely relate to some embodiments of the present disclosure, and based on these drawings, a person skilled in the art may obtain the other drawings without any creative effort.

Figs.la and 1b are schematic views showing mapping positions of synchronization signals in the related art;
Fig.2 is a schematic view showing the principle of resource preemption of unlicensed spectrum resources for a WiFi system;
Fig.3 is a flow chart of a signal transmission method according to one embodiment of the present disclosure;
Fig.4 is a flow chart of a further signal transmission method according to one embodiment of the present disclosure;
Fig.5 is a block diagram of a signal transmission apparatus according to one embodiment of the present disclosure;
Fig.6 is a block diagram of a further signal transmission apparatus according to one embodiment of the present disclosure;
Fig.7 is a schematic view showing a computer for implementing the present disclosure;
Fig.8 is another block diagram of the signal transmission apparatus according to one embodiment of the present disclosure; and
Fig.9 is another block diagram of the further signal transmission apparatus according to one embodiment of the present disclosure.

## DETAILED DESCRIPTION OF THE EMBODIMENTS

In order to make the objects, the technical solutions and the advantages of the present disclosure more apparent, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

It should be appreciated that, the present disclosure may be applied to various communication systems, e.g., a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an Advanced Long Term Evolution (LTE-A) system, a Universal Mobile Telecommunication System (UMTS), and so on.

It should be further appreciated that, in the embodiments of the present disclosure, a UE may include, but not limited to, a Mobile Station (MS), a mobile terminal, a mobile telephone, a handset and a portable equipment. The UE may communicate with one or more core networks via a Radio Access Network (RAN). For example, the UE may be a mobile telephone (or a cellular phone), a computer having a function of radio communication, a portable, pocket-size or handheld device, a device built in a computer, or a vehicle-mounted device.

In the embodiments of the present disclosure, a base station (e.g., an access point) may refer to a device in an access network, which communicates with a radio terminal over an air interface through one or more sectors. The base station may be used to convert a received air frame from/to an Internet Protocol (IP) packet, and it functions as a router between the radio terminal and other parts of the core network, including an IP network. The base station may also be used coordinate the attribute management over the air interface. For example, the base station may be a Base Transceiver Station (BTS) for the GSM or CDMA system, a NodeB for the WCDMA system, or an evolved NodeB (eNB) for the LTE system, which are not particularly defined herein.

It should be further appreciated that, in order to prevent the present disclosure from being blurred due to unnecessary details, the drawings merely show the structures and/or steps closely related to the present disclosure, with the other details being omitted.

The present disclosure provides in some embodiments a signal transmission method applicable to a terminal side. As shown in Fig.3, the signal transmission method includes Step S301 of receiving, by a UE, a signal on a carrier or cell which uses a predetermined spectrum resource, and determining whether or not the received signal belongs to a serving carrier or serving cell of the UE; and Step 303 of in the case that the received signal belongs to the serving carrier or serving cell of the UE, performing measurement and/or data transmission by the UE in accordance with the received signal and/or a subsequently-received signal.

Alternatively, the step of performing the measurement and/or data transmission by the UE in accordance with the received signal and/or the subsequently-received signal includes at least one of: performing the measurement by the UE in accordance with a received reference signal for measurement; receiving by the UE a further reference signal for measurement, and performing the measurement in accordance with the received further reference signal for measurement; performing the data transmission by the UE in accordance with received scheduling signaling; and receiving by the UE further scheduling signaling, and performing the data transmission in accordance with the received further scheduling signaling.

For example, the UE may determine whether or not the received signal belongs to the serving cell, and if yes, it may further receive the reference signal for measurement, and perform the measurement in accordance with the reference signal for measurement. Alternatively, the UE may further receive the scheduling signaling and perform the data transmission in accordance with the scheduling signaling.

In an alternative embodiment, in the case of the signal transmission, the UE may receive the reference signal for measurement, and the reference signal is transmitted on an OFDM symbol on which synchronization signals are currently transmitted and using frequency domain resources other than the frequency domain resources occupied by the synchronization signals. The UE may then perform the measurement in accordance with the reference signal.

Alternatively, the reference signal for measurement is transmitted on the OFDM symbol on which the synchronization signals are currently transmitted and using all the frequency domain resources other than the frequency domain resources occupied by the synchronization signals. For example, in an alternative embodiment, reference symbols may be continuously mapped to the OFDM symbol on which the synchronization signals are currently transmitted in a current carrier or cell, and transmitted using all resource elements (REs) other than the REs occupied by the synchronization signals in a bandwidth of the carrier or cell.

Alternatively, the reference signal for measurement is transmitted on the OFDM symbol on which the synchronization signals are currently transmitted and using parts of the frequency domain resources other than the frequency domain resources occupied by the synchronization signals. For example, in an alternative embodiment, the reference symbols may be divided into several groups, and each group may be mapped, in accordance with a fixed RE interval, to the Res, other than those occupied by the synchronization signals, of the OFDM symbol on which the synchronization signals are currently transmitted on a carrier. Each group may occupy at least one continuous RE.

Alternatively, the reference signal for measurement is transmitted on the OFDM symbol adjacent to, or separated by a fixed time domain interval from, the OFDM symbol on which synchronization signals are currently transmitted and the reference signal for measurement and at least one synchronization signal in the synchronization signals are transmitted within an identical subframe. In an alternative embodiment, the reference signal for measurement is transmitted, in a frequency domain, on all or parts of the frequency resources in a cell on the OFDM symbol. During the mapping, the reference signal may be mapped to the continuous REs of the OFDM symbol, or discretely mapped to discontinuous REs. For example, a group of reference signals may be mapped in accordance with a fixed RE interval, and they may occupy at least one continuous RE.

Alternatively, the reference signal for measurement may be the synchronization signal, i.e., the UE may perform the measurement directly in accordance with the synchronization signal, without any need to receive the measurement signal.

In addition, the reference signal for measurement is used for at least one of RSRP measurement, RSRQ measurement, positioning measurement, tracking measurement and CSI measurement.

To be specific, sequences of the reference signal for measurement are generated at least in association with an ID of a carrier or cell on which the reference signal is currently transmitted, or in the case that the reference signal for measurement is used for measuring RSRP and/or CSI, sequences of the reference signal for measurement are generated at least in association with an ID of a carrier or cell on which the reference signal is currently transmitted, or sequences of the reference signal for measurement are sequences of a UE-specific or cell-specific measurement reference signal and pre-configured through high-layer signaling, or in the case that the reference signal for measurement is used for measuring CSI, sequences of the reference signal for measurement is sequences of a UE-specific or cell-specific measurement reference signal and pre-configured through configuration signaling.

Alternatively, the configuration signaling may be high-layer signaling or configuration signaling transmitted over a control channel such as a Physical Downlink Control Channel (PDCCH) or an Enhanced Physical Downlink Control Channel (E-PDCCH). The configuration signal may be transmitted by a base station or a network side to the UE via a primary carrier or cell of the UE. The base station transmitting the configuration signaling may be a base station which serves a current carrier or cell, or a master base station of the UE. In the case that the UE is served by a plurality of base stations, the base station transmitting the configuration signaling is the master base station that serves the UE.

In addition, unless otherwise specified, during the configuration for the UE, the configuration signaling may be transmitted as mentioned above in the context.

Alternatively, the step of determining by the UE whether or not the received signal belongs to the serving carrier or serving cell includes at least one of: detecting, by the UE, a synchronization signal corresponding to the ID of the carrier or cell in accordance with the ID of the carrier or cell pre-configured through the configuration signaling, and in response to the synchronization signal corresponding to the ID of the carrier or cell being detected, determining that the received signal belongs to the serving carrier or serving cell; and detecting, by the UE, dedicated sequences corresponding to the serving carrier or serving cell of the UE or dedicated sequences for the UE pre-configured through the configuration signaling, and in response to the dedicated sequences being detected, determining that the received signal belongs to the serving carrier or serving cell.

Alternatively, the step of detecting, by the UE, the synchronization signal corresponding to the ID of the carrier or cell in accordance with the ID of the carrier or cell pre-configured through the configuration signaling includes detecting, by the UE, the synchronization signal corresponding to the ID of the carrier or cell in each subframe or a predetermined subframe in which the synchronization signal is to be transmitted in accordance with the ID of the carrier or cell pre-configured through the configuration signaling. The step of detecting, by the UE, the dedicated sequences pre-configured through the configuration signaling includes detecting, by the UE, the dedicated sequences in each subframe or a predetermined subframe, the predetermined subframe being a particular subframe pre-configured through the configuration signaling, or a subframe determined in accordance with a detection period, or the detection period and a subframe offset value, pre-configured through the configuration signaling.

The dedicated sequences may be sequences of a particular reference signal for measurement pre-configured for the UE through the configuration signaling, i.e., the dedicated sequences may also be used for the measurement. At this time, it is unnecessary for the UE to receive the measurement signal.

Alternatively, the terminal may detect the dedicated sequences in an energy detection manner.

In addition, the synchronization signal may be transmitted on the carrier or cell which uses the predetermined spectrum resource and using a subframe and a frequency domain resource defined in LTE releases 8-11 for a FDD or TDD system.

Alternatively, the synchronization signal may be mapped to and transmitted over a first OFDM symbol or the preceding two OFDM symbols in a subframe predefined to transmit the synchronization signal on the carrier or cell which uses the predetermined spectrum resource, or in a first available subframe on the carrier or cell which uses the predetermined spectrum resource.

Alternatively, the synchronization signal may be mapped to and transmitted over a first OFDM symbol or the preceding two OFDM symbols, without other reference signal, in a subframe pre-defined to transmit the synchronization signal on the carrier or cell which uses the predetermined spectrum resource, or in a first available subframe on the carrier or cell which uses the predetermined spectrum resource.

Alternatively, the synchronization signal may be mapped to and transmitted over a first OFDM symbol or the preceding two OFDM symbols, other than a control region, in a subframe pre-defined to transmit the synchronization signal on the carrier or cell which uses the predetermined spectrum resource, or in a first available subframe on the carrier or cell which uses the predetermined spectrum resource.

Alternatively, the synchronization signal may be mapped to and transmitted over a first OFDM symbol or the preceding two OFDM symbols, other than a control region and without other reference signal, in a subframe for transmitting the synchronization signal on the carrier or cell which uses the predetermined spectrum resource, or in a first available subframe on the carrier or cell which uses the predetermined spectrum resource.

Alternatively, a subframe or OFDM symbol for transmitting the synchronization signal on the carrier or cell which uses the predetermined spectrum resource may be acquired in advance in accordance with the configuration signaling. There may be one or more carriers or cells. In the case that there are a plurality of carriers or cells, the subframes or OFDM symbols for transmitting the synchronization signals on the carriers or cells may be identical to, or different from, each other, the subframe or OFDM symbol may be configured once, or the configuration may be updated at a fixed period, or the configuration may be updated in the case that the available resources of the predetermined spectrum resources are changed.

Alternatively, an offset value for transmitting the synchronization signal on the carrier or cell which uses the predetermined spectrum resource may be acquired in advance in accordance with the configuration signaling, and then the UE may determine a subframe or OFDM symbol for transmitting the synchronization signal on the carrier or cell which uses the predetermined spectrum resource in accordance with a pre-defined position of the subframe or OFDM symbol and the offset value. There may be one or more carriers or cells. In the case that there are a plurality of carriers or cells, the offset values for transmitting the synchronization signals and configured for each carrier or cell may be identical to, or different from, each other. The offset value may be configured once, or the configuration may be updated at a fixed period, or the configuration may be updated in the case that the available resources of the predetermined spectrum resources are changed.

In the mapping mode of the synchronization signal, alternatively, the pre-defined subframe for transmitting the synchronous signal is the subframe for transmitting the synchronization signal defined in LTE releases 8-11 for the FDD or TDD system. The available subframe may be a free subframe or downlink subframe on the predetermined spectrum resources (i.e., no data for the other system is transmitted in the subframe). In addition, the synchronization signal may include a PSS and/or an SSS, i.e., it may include the PSS, the SSS, or both of them.

In the signal transmission method, a bandwidth of the carrier or cell which uses the predetermined spectrum resource is notified in advance through the configuration signaling, or in the case that the bandwidth of the carrier or cell which uses the predetermined spectrum resource is unknown, the UE receives the reference signal for measurement on a pre-defined bandwidth in the middle of the carrier or cell which uses the predetermined spectrum resource and performs the measurement, and the pre-defined bandwidth is of a value not less than 6 RBs, or a value not less than a minimum bandwidth defined in an LTE system. Alternatively, the minimum bandwidth may be 6RBs, or any other value.

Alternatively, the predetermined spectrum resource may be an unlicensed spectrum resource. In addition, the signal transmission method in the embodiments of the present disclosure may also be applied to a system where licensed spectrum resources are used.

In addition, the carrier or cell is a secondary carrier or secondary cell pre-configured for the UE through the configuration signaling. Alternatively, the carrier or cell which uses the predetermined spectrum resource is a secondary carrier or secondary cell pre-configured for the UE through the configuration signaling.

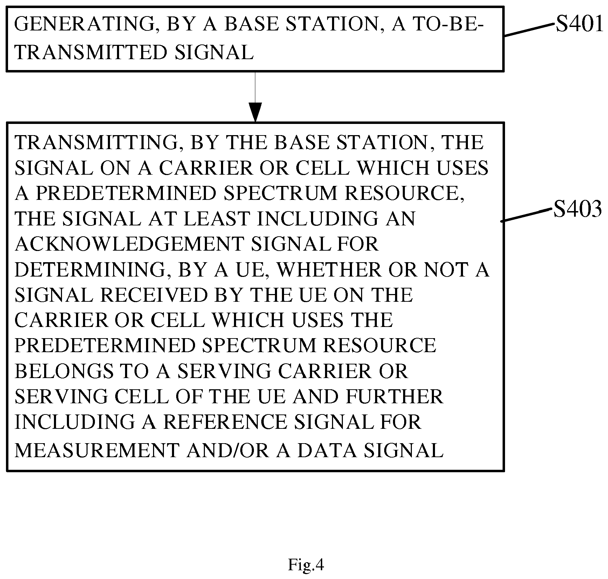

The present disclosure further provides in some embodiments a signal transmission method for a network side, e.g., a base station. As shown in Fig.4, the signal transmission method includes Step S401 of generating, by the base station, a to-be-transmitted signal, and Step S403 of transmitting, by the base station, the signal on a carrier or cell which uses a predetermined spectrum resource. The signal at least includes a judge signal for determining, by a UE, whether or not a signal received by the UE on the carrier or cell which uses the predetermined spectrum resource belongs to a serving carrier or serving cell of the UE and further includes a reference signal for measurement and/or a data signal, or the signal at least includes a judge signal for determining, by the UE, whether or not a signal received by the UE on the carrier or cell which uses the predetermined spectrum resource belongs to a serving carrier or serving cell of the UE or at least includes the judge signal and a data signal, the judge signal is further used for measurement.

In the case that the base station transmits the reference signal and/or the data signal while transmitting the judge signal, the UE may receive these signals and determine the cell to which the reference signal and/or the data signal belong in accordance with the judge signal. In the case that the reference signal and/or the data signal belong to the serving cell, the UE may perform the measurement in accordance with the reference signal for measurement, and further receive the data signal. In an alternative embodiment, the judge signal is provided so that the UE may determine the cell to which the signal belong and meanwhile perform the measurement. At this time, even if no reference signal for measurement is transmitted from the base station, the judge signal may also be used for the measurement.

Alternatively, prior to Step S401, the signal transmission method may further include: determining, by the base station, whether or not a current channel resource on the carrier or cell which uses the predetermined spectrum resource is free; in the case that the current channel resource is free, transmitting, by the base station, the signal on the carrier or cell which uses the predetermined spectrum resource; and in the case that the current channel resource is busy, prohibiting, by the base station, the transmission of the signal on the carrier or cell which uses the predetermined spectrum resource, or transmitting, by the base station, the signal on the carrier or cell which uses the predetermined spectrum resource after a predetermined time period. The predetermined time period has a length of a pre-defined fixed value, or the length of the predetermined time period is notified to the UE in advance through signaling.

Alternatively, the judge signal is a synchronization signal corresponding to an ID Of the carrier or cell which uses the predetermined spectrum resource, and the base station transmits the synchronization signal and the reference signal for measurement and/or the data signal, or transmits the synchronization signal, or transmits the synchronization signal and the data signal, on the carrier or cell which uses the predetermined spectrum resource. The base station transmits the synchronization signal in each subframe, or in a predetermined subframe in which the synchronization signal is to be transmitted, on the carrier or cell which uses the predetermined spectrum resource, and the ID of the carrier or cell which uses the predetermined spectrum resource is pre-configured by a master base station for the UE through configuration signaling (e.g., the configuration signaling may be transmitted on the primary carrier or cell of the UE, and in the case that the UE is configured through the configuration signaling, the ID of the cell may be configured for the UE whose serving carrier or cell is the carrier or cell which uses the predetermined spectrum resource). Alternatively, the base station transmits the synchronization signal in each subframe, or in a predetermined subframe in which the synchronization signal is to be transmitted, on the carrier or cell which uses the predetermined spectrum resource, and the ID of the carrier or cell which uses the predetermined spectrum resource is pre-configured by the base station for the UE through configuration signaling (e.g., in the case that the base station serves the primary carrier or cell of the UE, it may pre-configure the ID of the carrier or cell which uses the predetermined spectrum resource for the UE through the high-layer signaling transmitted on the primary carrier or cell, and the ID of the carrier or cell may be configured to the UE whose serving carrier or cell is the carrier or cell which uses the predetermined spectrum resource). Alternatively, the base station transmits the synchronization signal in each subframe, or in a predetermined subframe in which the synchronization signal is to be transmitted, on the carrier or cell which uses the predetermined spectrum resource, and the ID of the carrier or cell which uses the predetermined spectrum resource is notified by the base station to a master base station in advance and pre-configured by the master base station for the UE through the configuration signaling.

Alternatively, the judge signal is dedicated sequences corresponding to the carrier or cell which uses the predetermined spectrum resources or dedicated sequences of the UE, and the base station transmits the dedicated sequences and a reference signal for measurement and/or a data signal, or transmits the dedicated sequences, or transmits the dedicated sequences and the data signal, on the carrier or cell which uses the predetermined spectrum resources. The base station transmits the dedicated sequences in each subframe or a predefined subframe on the carrier or cell which uses the predetermined spectrum resource, the dedicated sequences are pre-configured by a master base station for the UE through configuration signaling (e.g., the dedicated sequences may be configured for the UE whose serving carrier or cell is the carrier or cell which uses the predetermined spectrum resource), and the pre-defined subframe is a particular subframe pre-configured through the configuration signaling or a subframe determined in accordance with a detection period, or the detection period and a subframe offset value, pre-configured through the configuration signaling. Alternatively, the base station transmits the dedicated sequences in each subframe or a pre-defined subframe on the carrier or cell which uses the predetermined spectrum resource, the dedicated sequences are pre-configured by the base station for the UE through the configuration signaling (e.g., the dedicated sequences may be configured for the UE whose serving carrier or cell is the carrier or cell which uses the predetermined spectrum resource), and the pre-defined subframe is a particular subframe pre-configured through the configuration signaling or a subframe determined in accordance with a detection period, or the detection period and a subframe offset value, pre-configured through the configuration signaling. Alternatively, the base station transmits the dedicated sequences in each subframe or a pre-defined subframe on the carrier or cell which uses the predetermined spectrum resource, the dedicated sequences are notified by the base station to a master base station in advance and pre-configured by the master base station for the UE through the configuration signaling (e.g., the dedicated sequences may be configured for the UE whose serving carrier or cell is the carrier or cell which uses the predetermined spectrum resource), and the pre-defined subframe is a particular subframe pre-configured through the configuration signaling or a subframe determined in accordance with a detection period, or the detection period and a subframe offset value, pre-configured through the configuration signaling.

The reference signal for measurement is transmitted on the OFDM symbol on which the synchronization signals are currently transmitted and using all the frequency domain resources other than the frequency domain resources occupied by the synchronization signals, For example, in an alternative embodiment, reference symbols may be continuously mapped to the OFDM symbol on which the synchronization signals are currently transmitted in a current carrier or cell, and transmitted using all REs other than the REs occupied by the synchronization signals in a bandwidth of the carrier or cell. Alternatively, the reference signal for measurement is transmitted on the OFDM symbol on which the synchronization signals are currently transmitted and using parts of the frequency domain resources other than the frequency domain resources occupied by the synchronization signals. For example, in an alternative embodiment, the reference symbols may be divided into several groups, and each group may be mapped, in accordance with a fixed RE interval, to a carrier, and then transmitted on the OFDM symbol on which the synchronization signals are currently transmitted and using the REs other than those occupied by the synchronization signals. Each group may occupy at least one continuous RE. Alternatively, the reference signal for measurement is transmitted on the OFDM symbol adjacent to, or separated by a fixed time domain interval from, the OFDM symbol on which synchronization signals are currently transmitted, and the reference signal for measurement and at least one synchronization signal in the synchronization signals are transmitted within an identical subframe. In an alternative embodiment, the reference signal for measurement is transmitted, in a frequency domain, on all or parts of the frequency resources in a cell on the OFDM symbol. During the mapping, the reference signal may be mapped to the continuous REs of the OFDM symbol, or discretely mapped to discontinuous REs. For example, a group of reference signals may be mapped in accordance with a fixed RE interval, and they may occupy at least one continuous RE. Alternatively, the reference signal for measurement may be the synchronization signal.

Alternatively, the reference signal for measurement is used for at least one of RSRP measurement, RSRQ measurement, positioning measurement, tracking measurement and CSI measurement.

To be specific, sequences of the reference signal for measurement are generated at least in association with an ID of a carrier or cell on which the reference signal is currently transmitted, or in the case that the reference signal for measurement is used for measuring RSRP and/or CSI, sequences of the reference signal for measurement are generated at least in association with an ID of a carrier or cell on which the reference signal is currently transmitted, or sequences of the reference signal for measurement are sequences of a UE-specific or cell-specific measurement reference signal and pre-configured through high-layer signaling, or in the case that the reference signal for measurement is used for measuring CSI, sequences of the reference signal for measurement is sequences of a UE-specific measurement reference signal and pre-configured through configuration signaling.

In addition, the dedicated sequences may be sequences of a particular reference signal for measurement pre-configured for the UE through the configuration signaling.

In addition, the synchronization signal may be transmitted on the carrier or cell which uses the predetermined spectrum resource and using a subframe and a frequency domain resource defined in LTE releases 8-11 for a FDD or TDD system.

Alternatively, the synchronization signal may be mapped to and transmitted over a first OFDM symbol or the preceding two OFDM symbols in a subframe predefined to transmit the synchronization signal on the carrier or cell which uses the predetermined spectrum resource, or in a first available subframe on the carrier or cell which uses the predetermined spectrum resource.

Alternatively, the synchronization signal may be mapped to and transmitted over a first OFDM symbol or the preceding two OFDM symbols, without other reference signal, in a subframe pre-defined to transmit the synchronization signal on the carrier or cell which uses the predetermined spectrum resource, or in a first available subframe on the carrier or cell which uses the predetermined spectrum resource.

Alternatively, the synchronization signal may be mapped to and transmitted over a first OFDM symbol or the preceding two OFDM symbols, other than a control region, in a subframe pre-defined to transmit the synchronization signal on the carrier or cell which uses the predetermined spectrum resource, or in a first available subframe on the carrier or cell which uses the predetermined spectrum resource.

Alternatively, the synchronization signal may be mapped to and transmitted over a first OFDM symbol or the preceding two OFDM symbols, other than a control region and without other reference signal, in a subframe for transmitting the synchronization signal on the carrier or cell which uses the predetermined spectrum resource, or in a first available subframe on the carrier or cell which uses the predetermined spectrum resource.

Alternatively, the subframe or OFDM symbol for transmitting the synchronization signal on the carrier or cell which uses the predetermined spectrum resource is acquired by the base station from a master base station in advance or pre-defined, and notified by the master base station to the UE in advance through the configuration signaling, or the subframe or OFDM symbol for transmitting the synchronization signal on the carrier or cell which uses the predetermined spectrum resource is predetermined by the base station and notified by the base station to a master base station in advance, and notified to the UE by the master base station in advance through the configuration signaling, or the subframe or OFDM symbol for transmitting the synchronization signal on the carrier or cell which uses the predetermined spectrum resource is predetermined by the base station and notified by the base station to the UE in advance through the configuration signaling. There may be one or more carriers or cells. In the case that there are a plurality of carriers or cells, the subframes or OFDM symbols for transmitting the synchronization signals on the carriers or cells may be identical to, or different from, each other, the subframe or OFDM symbol may be configured once, or the configuration may be updated at a fixed period, or the configuration may be updated in the case that the available resources of the predetermined spectrum resources are changed.

Alternatively, the subframe or OFDM symbol for transmitting the synchronization signal is determined in accordance with a pre-defined position of the subframe or OFDM symbol and an offset value for transmitting the synchronization signal on the carrier or cell which uses the predetermined spectrum resource. The offset value is acquired by the base station from a mater base station or pre-defined, and notified by the master base station to the UE in advance through the configuration signaling, or the offset value is predetermined by the base station and notified to a master base station in advance, and notified by the master base station to the UE in advance through the configuration signaling, or the offset value is predetermined by the base station and notified by the base station to the UE in advance through the configuration signaling. The offset values for transmitting the synchronization signals and configured for each carrier or cell may be identical to, or different from, each other. The offset value may be configured once, or the configuration may be updated at a fixed period, or the configuration may be updated in the case that the available resources of the predetermined spectrum resources are changed.

In the mapping mode of the synchronization signal, alternatively, the pre-defined subframe for transmitting the synchronous signal is the subframe for transmitting the synchronization signal defined in LTE releases 8-11 for the FDD or TDD system. The available subframe may be a free subframe or downlink subframe on the predetermined spectrum resources (i.e., no data for the other system is transmitted in the subframe). In addition, the synchronization signal may include a PSS and/or an SSS.

In addition, in the embodiments of the present disclosure, a bandwidth of the carrier or cell which uses the predetermined spectrum resource is notified by the base station to the UE in advance through signaling; or the bandwidth of the carrier or cell which uses the predetermined spectrum resource is notified by the base station to a master base station in advance, and notified by the master base station to the UE in advance through signaling; or the bandwidth of the carrier or cell which uses the predetermined spectrum resource is notified by the master base station to the UE in advance through configuration signaling. In the case that the bandwidth of the carrier or cell which uses the predetermined spectrum resource is not notified by the base station or the master base station to the UE in advance through the configuration signaling, the base station determines that the UE receives the reference signal for measurement and perform the measurement on a pre-defined bandwidth in the middle of the carrier or cell which uses the predetermined spectrum resource, and the pre-defined bandwidth is of a value not less than 6 RBs, or a value not less than a minimum bandwidth defined in an LTE system (e.g., the bandwidth may be 6 RBs).

Alternatively, the predetermined spectrum resource is an unlicensed spectrum resource.

In addition, the carrier or cell is a secondary carrier or secondary cell pre-configured for the UE through the configuration signaling.

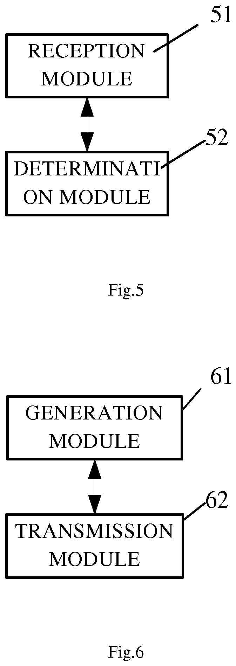

The present disclosure further provides in some embodiments a signal transmission apparatus which, as shown in Fig.5, includes: a reception module 51 configured to receive a signal; and a determination module 52 configured to, in the case that the reception module receives the signal on a carrier or cell which uses a predetermined spectrum resource, determines whether or not the received signal belongs to a serving carrier or serving cell of a UE. The reception module 51 is further configured to, in the case that the received signal belongs to the serving carrier or serving cell of the UE, perform measurement and/or data transmission in accordance with the received signal and/or a subsequently-received signal.

Alternatively, the reception module 51 is further configured to perform at least one of the following processings: performing the measurement by the UE in accordance with a received reference signal for measurement; receiving a further reference signal for measurement, and performing the measurement in accordance with the received further reference signal for measurement; performing the data transmission in accordance with received scheduling signaling; and receiving further scheduling signaling, and performing the data transmission in accordance with the received further scheduling signaling.

Alternatively, the reception module 51 is further configured to receive the reference signal for measurement on an OFDM symbol on which synchronization signals are currently transmitted and using all frequency domain resources other than the frequency domain resources occupied by the synchronization signals, or receive the reference signal for measurement on an OFDM symbol on which synchronization signals are currently transmitted and using parts of the frequency domain resources other than the frequency domain resources occupied by the synchronization signals, or receive the reference signal for measurement on an OFDM symbol adjacent to, or separated by a fixed time domain interval from, the OFDM symbol on which synchronization signals are currently transmitted, wherein the reference signal for measurement and at least one synchronization signal in the synchronization signals are transmitted within an identical subframe, or receive the synchronization signal as the reference signal for measurement.

Alternatively, the reception module 51 is further configured to generate sequences of the reference signal for measurement at least in association with an ID of a carrier or cell on which the reference signal is currently transmitted, or in the case that the reference signal for measurement is used for measuring RSRP and/or CSI, generate sequences of the reference signal for measurement at least in association with an ID of a carrier or cell on which the reference signal is currently transmitted, or determine sequences of a UE-specific or cell-specific measurement reference signal and pre-configured by configuration signaling as sequences of the reference signal for measurement, or in the case that the reference signal for measurement is used for measuring CSI, determine sequences of a UE-specific or cell-specific measurement reference signal and pre-configured through configuration signaling as sequences of the reference signal for measurement.

Alternatively, the reception module 51 is further configured to perform at least one of RSRP measurement, RSRQ measurement, positioning measurement, tracking measurement and CSI measurement using the reference signal for measurement.

In addition, the determination module 52 is further configured to perform at least one of the following processings: detecting a synchronization signal corresponding to the ID of the carrier or cell in accordance with the ID of the carrier or cell pre-configured through the configuration signaling, and in response to the synchronization signal corresponding to the ID of the carrier or cell being detected, determining that the received signal belongs to the serving carrier or serving cell; and detecting dedicated sequences corresponding to the serving carrier or serving cell of the UE or dedicated sequences for the UE pre-configured through the configuration signaling, and in response to the dedicated sequences being detected, determining that the received signal belongs to the serving carrier or serving cell.

In addition, in the case that the determination module 52 detects the synchronization signal corresponding to the ID of the carrier or cell in accordance with the ID of the carrier or cell pre-configured through the configuration signaling, the determination module 52 is further configured to detect the synchronization signal corresponding to the ID of the carrier or cell in each subframe or a predetermined subframe in which the synchronization signal is to be transmitted in accordance with the ID of the carrier or cell pre-configured through the configuration signaling. In the case that the determination module 52 detects the dedicated sequences pre-configured through the configuration signaling, the determination module 52 is further configured to detect the dedicated sequences in each subframe or a predetermined subframe, and the predetermined subframe is a particular subframe pre-configured through the configuration signaling, or a subframe determined in accordance with a detection period, or the detection period and a subframe offset value, pre-configured through the configuration signaling.

In addition, the determination module 52 is further configured to determine sequences of a particular reference signal for measurement pre-configured for the UE through the configuration signaling as the dedicated sequences. Alternatively, the determination module 52 may be further configured to detect the dedicated sequences in an energy detection manner.

In addition, the synchronization signal is transmitted on the carrier or cell which uses the predetermined spectrum resource and using a subframe and a frequency domain resource defined in LTE releases 8-11 for a FDD or TDD system.

Alternatively, the synchronization signal is mapped to and transmitted over a first OFDM symbol or the preceding two OFDM symbols in a subframe predefined to transmit the synchronization signal on the carrier or cell which uses the predetermined spectrum resource, or in a first available subframe on the carrier or cell which uses the predetermined spectrum resource.

Alternatively, the synchronization signal is mapped to and transmitted over a first OFDM symbol or the preceding two OFDM symbols, without other reference signal, in a subframe pre-defined to transmit the synchronization signal on the carrier or cell which uses the predetermined spectrum resource, or in a first available subframe on the carrier or cell which uses the predetermined spectrum resource.

Alternatively, the synchronization signal is mapped to and transmitted over a first OFDM symbol or the preceding two OFDM symbols, other than a control region, in a subframe pre-defined to transmit the synchronization signal on the carrier or cell which uses the predetermined spectrum resource, or in a first available subframe on the carrier or cell which uses the predetermined spectrum resource.

Alternatively, the synchronization signal is mapped to and transmitted over a first OFDM symbol or the preceding two OFDM symbols, other than a control region and without other reference signal, in a subframe for transmitting the synchronization signal on the carrier or cell which uses the predetermined spectrum resource, or in a first available subframe on the carrier or cell which uses the predetermined spectrum resource.

Alternatively, a subframe or OFDM symbol for transmitting the synchronization signal on the carrier or cell which uses the predetermined spectrum resource is acquired in advance in accordance with the configuration signaling.

Alternatively, an offset value for transmitting the synchronization signal on the carrier or cell which uses the predetermined spectrum resource is acquired in advance in accordance with the configuration signaling, and the UE determines a subframe or OFDM symbol for transmitting the synchronization signal on the carrier or cell which uses the predetermined spectrum resource in accordance with a pre-defined position of the subframe or OFDM symbol and the offset value.

In addition, the synchronization signal may include a PSS and/or an SSS.

In addition, a bandwidth of the carrier or cell which uses the predetermined spectrum resource is notified in advance through the configuration signaling, or in the case that the bandwidth of the carrier or cell which uses the predetermined spectrum resource is unknown, the UE receives the reference signal for measurement and performs the measurement on a pre-defined bandwidth in the middle of the carrier or cell which uses the predetermined spectrum resource, and the pre-defined bandwidth is of a value not less than 6 RBs, or a value not less than a minimum bandwidth defined in an LTE system.

In addition, the predetermined spectrum resource is an unlicensed spectrum resource. The carrier or cell is a secondary carrier or secondary cell pre-configured for the UE through the configuration signaling. Alternatively, the carrier or cell which uses the predetermined spectrum resource is a secondary carrier or secondary cell pre-configured for the UE through the configuration signaling.

The present disclosure further provides in some embodiments a signal transmission apparatus for a base station. As shown in Fig.6, the signal transmission apparatus includes: a generation module 61 configured to generate a signal; and a transmission module 62 configured to transmit the signal on a carrier or cell which uses a predetermined spectrum resource. The signal at least includes a judge signal for determining, by a UE, whether or not a signal received by the UE on the carrier or cell which uses the predetermined spectrum resource belongs to a serving carrier or serving cell of the UE and further includes a reference signal for measurement and/or a data signal, or the signal at least includes a judge signal for determining, by the UE, whether or not a signal received by the UE on the carrier or cell which uses the predetermined spectrum resource belongs to a serving carrier or serving cell of the UE or at least includes the judge signal and a data signal, the judge signal is further used for measurement.

Alternatively, the signal transmission apparatus may further include a judgment module (not shown) configured to determine whether or not a current channel resource on the carrier or cell which uses the predetermined spectrum resource is free. In the case that the current channel resource is free, the transmission module 62 is further configured to transmit the signal on the carrier or cell which uses the predetermined spectrum resource, and in the case that the current channel resource is busy, the transmission module 62 is further configured to prohibit the transmission of the signal on the carrier or cell which uses the predetermined spectrum resource, or transmit the signal on the carrier or cell which uses the predetermined spectrum resource after a predetermined time period. The predetermined time period has a length of a pre-defined fixed value, or the length of the predetermined time period is notified to the UE in advance through signaling.

In addition, in the case that the judge signal is a synchronization signal corresponding to an ID of the carrier or cell which uses the predetermined spectrum resource, the transmission module 62 is configured to transmit the synchronization signal and the reference signal for measurement and/or the data signal, or transmit the synchronization signal, or transmit the synchronization signal and the data signal, on the carrier or cell which uses the predetermined spectrum resource. The transmission module 62 is configured to transmit the synchronization signal in each subframe, or in a predetermined subframe in which the synchronization signal is to be transmitted, on the carrier or cell which uses the predetermined spectrum resource, and the ID of the carrier or cell which uses the predetermined spectrum resource is pre-configured by a master base station for the UE through configuration signaling. Alternatively, the transmission module 62 is further configured to transmit the synchronization signal in each subframe, or in a predetermined subframe in which the synchronization signal is to be transmitted, on the carrier or cell which uses the predetermined spectrum resource, and the ID of the carrier or cell which uses the predetermined spectrum resource is pre-configured by the base station for the UE through configuration signaling. Alternatively, the transmission module 62 is further configured to transmit the synchronization signal in each subframe, or in a predetermined subframe in which the synchronization signal is to be transmitted, on the carrier or cell which uses the predetermined spectrum resource, and the ID of the carrier or cell which uses the predetermined spectrum resource is notified by the base station to a master base station in advance and pre-configured by the master base station for the UE through the configuration signaling.

Alternatively, in the case that the judge signal is dedicated sequences corresponding to the carrier or cell which uses the predetermined spectrum resources or dedicated sequences of the UE, the transmission module 62 is configured to transmit the dedicated sequences and a reference signal for measurement and/or a data signal, or transmit the dedicated sequences, or transmit the dedicated sequences and the data signal, on the carrier or cell which uses the predetermined spectrum resources. The transmission module 62 is further configured to transmit the dedicated sequences in each subframe or a pre-defined subframe on the carrier or cell which uses the predetermined spectrum resource, the dedicated sequences are pre-configured by a master base station for the UE through configuration signaling, and the pre-defined subframe is a particular subframe pre-configured through the configuration signaling or a subframe determined in accordance with a detection period, or the detection period and a subframe offset value, pre-configured through the configuration signaling. Alternatively, the transmission module 62 is further configured to transmit the dedicated sequences in each subframe or a pre-defined subframe on the carrier or cell which uses the predetermined spectrum resource, the dedicated sequences are pre-configured by the base station for the UE through the configuration signaling, and the pre-defined subframe is a particular subframe pre-configured through the configuration signaling or a subframe determined in accordance with a detection period, or the detection period and a subframe offset value, pre-configured through the configuration signaling. Alternatively, the transmission module 62 is further configured to transmit the dedicated sequences in each subframe or a pre-defined subframe on the carrier or cell which uses the predetermined spectrum resource, the dedicated sequences are notified by the base station to a master base station in advance and pre-configured by the master base station for the UE through the configuration signaling, and the pre-defined subframe is a particular subframe pre-configured through the configuration signaling or a subframe determined in accordance with a detection period, or the detection period and a subframe offset value, pre-configured through the configuration signaling.

In addition, the transmission module 62 is further configured to transmit the reference signal for measurement on an OFDM symbol on which synchronization signals are currently transmitted and using all frequency domain resources other than the frequency domain resources occupied by the synchronization signals, or transmit the reference signal for measurement on an OFDM symbol on which synchronization signals are currently transmitted and using parts of the frequency domain resources other than the frequency domain resources occupied by the synchronization signals, or transmit the reference signal for measurement on an OFDM symbol adjacent to, or separated by a fixed time domain interval from, the OFDM symbol on which synchronization signals are currently transmitted wherein the reference signal for measurement and at least one synchronization signal in the synchronization signals are transmitted within an identical subframe, or transmit the synchronization signal as the reference signal for measurement.

In addition, the generation module 61 is further configured to generate sequences of the reference signal for measurement at least in association with an ID of a carrier or cell on which the reference signal is currently transmitted, or in the case that the reference signal for measurement is used for measuring RSRP and/or CSI, generate sequences of the reference signal for measurement at least in association with an ID of a carrier or cell on which the reference signal is currently transmitted, or determine sequences of a UE-specific or cell-specific measurement reference signal and pre-configured by configuration signaling as sequences of the reference signal for measurement, or in the case that the reference signal for measurement is used for measuring CSI, determine sequences of a UE-specific measurement reference signal and pre-configured through configuration signaling as sequences of the reference signal for measurement.

Alternatively, the generation module 61 is further configured to perform at least one of RSRP measurement, RSRQ measurement, positioning measurement, tracking measurement and CSI measurement using the reference signal for measurement.

In addition, the dedicated sequences are sequences of a particular reference signal for measurement pre-configured for the UE through the configuration signaling.

In addition, in the mapping mode of the synchronization signal, the synchronization signal is transmitted on the carrier or cell which uses the predetermined spectrum resource and using a subframe and a frequency domain resource defined in LTE releases 8-11 for a FDD or TDD system.

Alternatively, the synchronization signal is mapped to and transmitted over a first OFDM symbol or the preceding two OFDM symbols in a subframe pre-defined to transmit the synchronization signal on the carrier or cell which uses the predetermined spectrum resource, or in a first available subframe on the carrier or cell which uses the predetermined spectrum resource.

Alternatively, the synchronization signal is mapped to and transmitted over a first OFDM symbol or the preceding two OFDM symbols, without other reference signal, in a subframe pre-defined to transmit the synchronization signal on the carrier or cell which uses the predetermined spectrum resource, or in a first available subframe on the carrier or cell which uses the predetermined spectrum resource.

Alternatively, the synchronization signal is mapped to and transmitted over a first OFDM symbol or the preceding two OFDM symbols, other than a control region, in a subframe pre-defined to transmit the synchronization signal on the carrier or cell which uses the predetermined spectrum resource, or in a first available subframe on the carrier or cell which uses the predetermined spectrum resource.

Alternatively, the synchronization signal is mapped to and transmitted over a first OFDM symbol or the preceding two OFDM symbols, other than a control region and without other reference signal, in a subframe for transmitting the synchronization signal on the carrier or cell which uses the predetermined spectrum resource, or in a first available subframe on the carrier or cell which uses the predetermined spectrum resource.

Alternatively, the subframe or OFDM symbol for transmitting the synchronization signal on the carrier or cell which uses the predetermined spectrum resource is acquired by the base station from a master base station in advance or pre-defined, and notified by the master base station to the UE in advance through the configuration signaling, or the subframe or OFDM symbol for transmitting the synchronization signal on the carrier or cell which uses the predetermined spectrum resource is predetermined by the base station and notified by the base station to a master base station in advance, and notified to the UE by the master base station in advance through the configuration signaling, or the subframe or OFDM symbol for transmitting the synchronization signal on the carrier or cell which uses the predetermined spectrum resource is predetermined by the base station and notified by the base station to the UE in advance through the configuration signaling.

Alternatively, the subframe or OFDM symbol for transmitting the synchronization signal on the carrier or cell which uses the predetermined spectrum resource is determined in accordance with a pre-defined position of the subframe or OFDM symbol and an offset value for transmitting the synchronization signal on the carrier or cell which uses the predetermined spectrum resource. The offset value is acquired by the base station from a mater base station or pre-defined, and notified by the master base station to the UE in advance through the configuration signaling, or the offset value is predetermined by the base station and notified to a master base station in advance, and notified by the master base station to the UE in advance through the configuration signaling, or the offset value is predetermined by the base station and notified by the base station to the UE in advance through the configuration signaling.

In addition, the synchronization signal includes a PSS and/or an SSS.

In addition, the transmission module 62 is further configured to: notify a bandwidth of the carrier or cell which uses the predetermined spectrum resource to the UE in advance through signaling; or notify the bandwidth of the carrier or cell which uses the predetermined spectrum resource to a master base station in advance, so that the master base station notifies the bandwidth to the UE in advance through signaling; or in the case that the bandwidth of the carrier or cell which uses the predetermined spectrum resource is not notified by the base station or the master base station to the UE in advance through the configuration signaling, determine that the UE receives the reference signal for measurement and perform the measurement on a pre-defined bandwidth in the middle of the carrier or cell which uses the predetermined spectrum resource. The pre-defined bandwidth is of a value not less than 6 RBs, or a value not less than a minimum bandwidth defined in an LTE system.

Alternatively, the predetermined spectrum resource is an unlicensed spectrum resource, and the carrier or cell is a secondary carrier or secondary cell pre-configured for the UE through the configuration signaling.

The following embodiments are not according to the invention and are present for illustration purposes only.

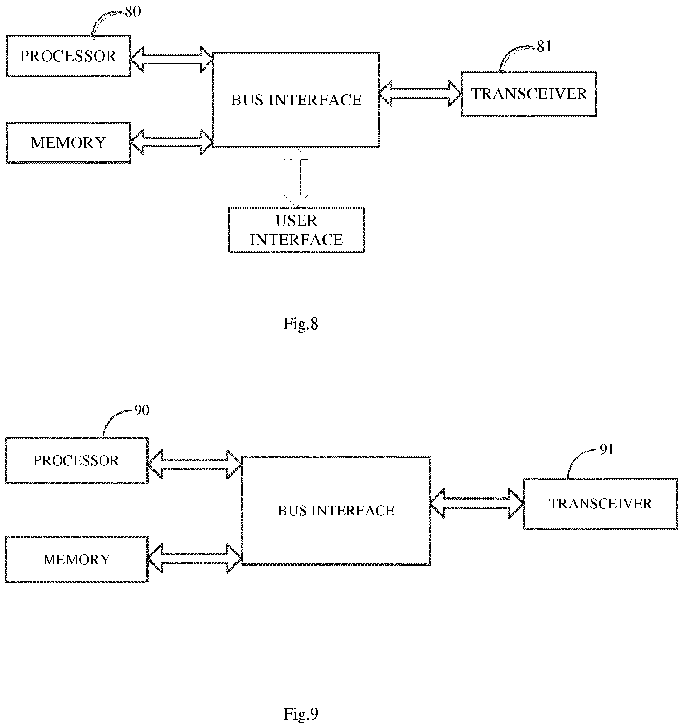

The present disclosure further provides in some embodiments a signal transmission apparatus which, as shown in Fig.8, includes a transceiver 81, a processor 80 and a memory. The transceiver 81 is configured to receive and transmit a signal under the control of the processor. The processor 80 is configured to read a program stored in a memory so as to, in the case that the signal is received by the transceiver 81 on a carrier or cell which uses a predetermined spectrum resource, determine whether or not the received signal belongs to a serving carrier or serving cell of a UE. The transceiver 81 is further configured to, in the case that the received signal belongs to the serving carrier or serving cell of the UE, perform measurement and/or data transmission in accordance with the received signal and/or a subsequently-received signal.

Alternatively, the transceiver 81 is configured to perform at least one of the following processings: performing the measurement in accordance with a received reference signal for measurement; receiving a further reference signal for measurement, and performing the measurement in accordance with the received further reference signal for measurement; performing the data in accordance with received scheduling signaling; and receiving further scheduling signaling, and performing the data transmission in accordance with the received further scheduling signaling.

Alternatively, the transceiver 81 is further configured to receive the reference signal for measurement on an OFDM symbol on which synchronization signals are currently transmitted and using all frequency domain resources other than the frequency domain resources occupied by the synchronization signals, or receive the reference signal for measurement an OFDM symbol on which synchronization signals are currently transmitted and using parts of the frequency domain resources other than the frequency domain resources occupied by the synchronization signals, or receive the reference signal for measurement on an OFDM symbol adjacent to, or separated by a fixed time domain interval from, the OFDM symbol on which synchronization signals are currently transmitted wherein the reference signal for measurement and at least one synchronization signal in the synchronization signals are transmitted within an identical subframe, or receive the synchronization signal as the reference signal for measurement.

Alternatively, the transceiver 81 is further configured to generate sequences of the reference signal for measurement at least in association with an ID of a carrier or cell on which the reference signal is currently transmitted, or in the case that the reference signal for measurement is used for measuring RSRP and/or CSI, generate sequences of the reference signal for measurement at least in association with an ID of a carrier or cell on which the reference signal is currently transmitted, or determine sequences of a UE-specific or cell-specific measurement reference signal and pre-configured by configuration signaling as sequences of the reference signal for measurement, or in the case that the reference signal for measurement is used for measuring CSI, determine sequences of a UE-specific or cell-specific measurement reference signal and pre-configured through configuration signaling as sequences of the reference signal for measurement.

Alternatively, the transceiver 81 is further configured to perform at least one of RSRP measurement, RSRQ measurement, positioning measurement, tracking measurement and CSI measurement using the reference signal for measurement.

Alternatively, the processor 80 is configured to perform at least one of the following processings: detecting a synchronization signal corresponding to the ID of the carrier or cell in accordance with the ID of the carrier or cell pre-configured through the configuration signaling, and in response to the synchronization signal corresponding to the ID of the carrier or cell being detected, determining that the received signal belongs to the serving carrier or serving cell; and detecting dedicated sequences corresponding to the serving carrier or serving cell of the UE or dedicated sequences for the UE pre-configured through the configuration signaling, and in response to the dedicated sequences being detected, determining that the received signal belongs to the serving carrier or serving cell.

Alternatively, in the case that the processor 80 detects the synchronization signal corresponding to the ID of the carrier or cell in accordance with the ID of the carrier or cell pre-configured through the configuration signaling, the processor 80 is further configured to detect the synchronization signal corresponding to the ID of the carrier or cell in each subframe or a predetermined subframe in which the synchronization signal is to be transmitted in accordance with the ID of the carrier or cell pre-configured through the configuration signaling. In the case that the processor 80 detects the dedicated sequences pre-configured through the configuration signaling, the processor 80 is further configured to detect the dedicated sequences in each subframe or a predetermined subframe, and the predetermined subframe is a particular subframe pre-configured through the configuration signaling, or a subframe determined in accordance with a detection period, or the detection period and a subframe offset value, pre-configured through the configuration signaling.

Alternatively, the processor 80 is further configured to determine sequences of a particular reference signal for measurement pre-configured for the UE through the configuration signaling as the dedicated sequences, and/or detect the dedicated sequences in an energy detection manner.

In addition, the synchronization signal is transmitted on the carrier or cell which uses the predetermined spectrum resource and using a subframe and a frequency domain resource defined in LTE releases 8-11 for a FDD or TDD system. Alternatively, the synchronization signal is mapped to and transmitted over a first OFDM symbol or the preceding two OFDM symbols in a subframe pre-defined to transmit the synchronization signal on the carrier or cell which uses the predetermined spectrum resource, or in a first available subframe on the carrier or cell which uses the predetermined spectrum resource. Alternatively, the synchronization signal is mapped to and transmitted over a first OFDM symbol or the preceding two OFDM symbols, without other reference signal, in a subframe pre-defined to transmit the synchronization signal on the carrier or cell which uses the predetermined spectrum resource, or in a first available subframe on the carrier or cell which uses the predetermined spectrum resource. Alternatively, the synchronization signal is mapped to and transmitted over a first OFDM symbol or the preceding two OFDM symbols, other than a control region, in a subframe pre-defined to transmit the synchronization signal on the carrier or cell which uses the predetermined spectrum resource, or in a first available subframe on the carrier or cell which uses the predetermined spectrum resource. Alternatively, the synchronization signal is mapped to and transmitted over a first OFDM symbol or the preceding two OFDM symbols, other than a control region and without other reference signal, in a subframe for transmitting the synchronization signal on the carrier or cell which uses the predetermined spectrum resource, or in a first available subframe on the carrier or cell which uses the predetermined spectrum resource. Alternatively, a subframe or OFDM symbol for transmitting the synchronization signal on the carrier or cell which uses the predetermined spectrum resource is acquired in advance in accordance with the configuration signaling. Alternatively, an offset value for transmitting the synchronization signal on the carrier or cell which uses the predetermined spectrum resource is acquired in advance in accordance with the configuration signaling, and the UE determines a subframe or OFDM symbol for transmitting the synchronization signal on the carrier or cell which uses the predetermined spectrum resource in accordance with a pre-defined position of the subframe or OFDM symbol and the offset value.

In addition, the synchronization signal includes a PSS and/or an SSS.

Alternatively, the transceiver 81 is further configured to notify a bandwidth of the carrier or cell which uses the predetermined spectrum in advance through the configuration signaling, or in the case that the bandwidth of the carrier or cell which uses the predetermined spectrum resource is unknown, receive the reference signal for measurement and performs the measurement on a pre-defined bandwidth in the middle of the carrier or cell which uses the predetermined spectrum resource, and the pre-defined bandwidth is of a value not less than 6 RBs, or a value not less than a minimum bandwidth defined in an LTE system.

Alternatively, the transceiver 81 or the processor 80 is further configured to determine the predetermined spectrum resource as an unlicensed spectrum resource.

Alternatively, the transceiver 81 is further configured to determine as a secondary carrier or secondary cell pre-configured for the UE through the configuration signaling as the serving carrier or serving cell, and/or determine the carrier or cell which uses the predetermined spectrum resource as a secondary carrier or secondary cell pre-configured for the UE through the configuration signaling.

In Fig.6, a bus architecture may include a number of buses and bridges connected to each other, so as to connect various circuits for one or more processors 80 and one or more memories. In addition, as is known in the art, the bus architecture may be used to connect any other circuits, such as a circuit for a peripheral device, a circuit for a voltage stabilizer and a power management circuit. Bus interfaces are provided, and the transceiver 81 may consist of more than one elements, e.g., a transmitter and a receiver for communication with any other devices over a transmission medium. With respect to different UEs, a user interface may also be provided for devices which are to be arranged inside or outside the UE, and these devices may include but not limited to a keypad, a display, a speaker, a microphone and a joystick. The processor 80 takes charge of managing the bus architecture as well as general processings. The memory may store therein data desired for the operation of the processor 80.

The present disclosure further provides in some embodiments a signal transmission apparatus for a base station. As shown in Fig.9, the signal transmission apparatus includes a processor 90, a transceiver 91 and a memory. The processor 90 is configured to read a program stored in the memory and generate a signal. The transceiver 91 is configured to receive and transmit the signal under the control of the processor 90. The transceiver 91 is further configured to transmit the signal on a carrier or cell which uses a predetermined spectrum resource. The signal at least includes a judge signal for determining, by a UE, whether or not a signal received by the UE on the carrier or cell which uses the predetermined spectrum resource belongs to a serving carrier or serving cell of the UE and further includes a reference signal for measurement and/or a data signal, or the signal at least includes a judge signal for determining, by the UE, whether or not a signal received by the UE on the carrier or cell which uses the predetermined spectrum resource belongs to a serving carrier or serving cell of the UE or at least includes the judge signal and a data signal, the judge signal is further used for measurement.

Alternatively, the processor 90 is further configured to determine whether or not a current channel resource on the carrier or cell which uses the predetermined spectrum resource is free. In the case that the current channel resource is free, the transceiver 91 is configured to transmit the signal on the carrier or cell which uses the predetermined spectrum resource. In the case that the current channel resource is busy, the transceiver 91 is configured to prohibit the transmission of the signal on the carrier or cell which uses the predetermined spectrum resource, or transmit the signal on the carrier or cell which uses the predetermined spectrum resource after a predetermined time period. The predetermined time period has a length of a pre-defined fixed value, or the length of the predetermined time period is notified to the UE in advance through signaling.

In addition, in the case that the judge signal is a synchronization signal corresponding to an ID Of the carrier or cell which uses the predetermined spectrum resource, the transceiver 91 is configured to transmit the synchronization signal and the reference signal for measurement and/or the data signal, or transmit the synchronization signal, or transmit the synchronization signal and the data signal, on the carrier or cell which uses the predetermined spectrum resource. The transceiver 91 is further configured to transmit the synchronization signal in each subframe, or in a predetermined subframe in which the synchronization signal is to be transmitted, on the carrier or cell which uses the predetermined spectrum resource, and the ID of the carrier or cell which uses the predetermined spectrum resource is pre-configured by a master base station for the UE through configuration signaling. Alternatively, the transceiver 91 is further configured to transmit the synchronization signal in each subframe, or in a predetermined subframe in which the synchronization signal is to be transmitted, on the carrier or cell which uses the predetermined spectrum resource, and the ID of the carrier or cell which uses the predetermined spectrum resource is pre-configured by the base station for the UE through configuration signaling. Alternatively, the transceiver 91 is further configured to transmit the synchronization signal in each subframe, or in a predetermined subframe in which the synchronization signal is to be transmitted, on the carrier or cell which uses the predetermined spectrum resource, and the ID of the carrier or cell which uses the predetermined spectrum resource is notified by the base station to a master base station in advance and pre-configured by the master base station for the UE through the configuration signaling.

Alternatively, in the case that the judge signal is dedicated sequences corresponding to the carrier or cell which uses the predetermined spectrum resources or dedicated sequences of the UE, the transceiver 91 is configured to transmit the dedicated sequences and a reference signal for measurement and/or a data signal, or transmit the dedicated sequences, or transmit the dedicated sequences and the data signal, on the carrier or cell which uses the predetermined spectrum resources. The transceiver 91 is further configured to transmit the dedicated sequences in each subframe or a pre-defined subframe on the carrier or cell which uses the predetermined spectrum resource, the dedicated sequences are pre-configured by a master base station for the UE through configuration signaling, and the pre-defined subframe is a particular subframe pre-configured through the configuration signaling or a subframe determined in accordance with a detection period, or the detection period and a subframe offset value, pre-configured through the configuration signaling. Alternatively, the transceiver 91 is further configured to transmit the dedicated sequences in each subframe or a pre-defined subframe on the carrier or cell which uses the predetermined spectrum resource, the dedicated sequences are pre-configured by the base station for the UE through the configuration signaling, and the pre-defined subframe is a particular subframe pre-configured through the configuration signaling or a subframe determined in accordance with a detection period, or the detection period and a subframe offset value, pre-configured through the configuration signaling. Alternatively, the transceiver 91 is further configured to transmit the dedicated sequences in each subframe or a pre-defined subframe on the carrier or cell which uses the predetermined spectrum resource, the dedicated sequences are notified by the base station to a master base station in advance and pre-configured by the master base station for the UE through the configuration signaling, and the pre-defined subframe is a particular subframe pre-configured through the configuration signaling or a subframe determined in accordance with a detection period, or the detection period and a subframe offset value, pre-configured through the configuration signaling.

Alternatively, the transceiver 91 is further configured to transmit the reference signal for measurement on an OFDM symbol on which synchronization signals are currently transmitted and using all frequency domain resources other than the frequency domain resources occupied by the synchronization signals, or transmit the reference signal for measurement on an OFDM symbol on which synchronization signals are currently transmitted and using parts of the frequency domain resources other than the frequency domain resources occupied by the synchronization signals, or transmit the reference signal for measurement on an OFDM symbol adjacent to, or separated by a fixed time domain interval from, the OFDM symbol on which synchronization signals are currently transmitted wherein the reference signal for measurement and at least one synchronization signal in the synchronization signals are transmitted within an identical subframe, or transmit the synchronization signal as the reference signal for measurement.

Alternatively, the processor 90 is further configured to generate sequences of the reference signal for measurement at least in association with an ID of a carrier or cell on which the reference signal is currently transmitted, or in the case that the reference signal for measurement is used for measuring RSRP and/or CSI, generate sequences of the reference signal for measurement at least in association with an ID of a carrier or cell on which the reference signal is currently transmitted, or determine sequences of a UE-specific or cell-specific measurement reference signal and pre-configured by configuration signaling as sequences of the reference signal for measurement, or in the case that the reference signal for measurement is used for measuring CSI, determine sequences of a UE-specific measurement reference signal and pre-configured through configuration signaling as sequences of the reference signal for measurement.

Alternatively, the processor 90 is further configured to perform at least one of RSRP measurement, RSRQ measurement, positioning measurement, tracking measurement and CSI measurement using the reference signal for measurement.

Alternatively, the processor 90 is further configured to determine sequences of a particular reference signal for measurement pre-configured for the UE through the configuration signaling as the dedicated sequences.

Alternatively, the transceiver 91 is further configured to determine that: the synchronization signal is transmitted on the carrier or cell which uses the predetermined spectrum resource and using a subframe and a frequency domain resource defined in LTE releases 8-11 for a FDD or TDD system; or the synchronization signal is mapped to and transmitted over a first OFDM symbol or the preceding two OFDM symbols in a subframe pre-defined to transmit the synchronization signal on the carrier or cell which uses the predetermined spectrum resource, or in a first available subframe on the carrier or cell which uses the predetermined spectrum resource; or the synchronization signal is mapped to and transmitted over a first OFDM symbol or the preceding two OFDM symbols, without other reference signal, in a subframe pre-defined to transmit the synchronization signal on the carrier or cell which uses the predetermined spectrum resource, or in a first available subframe on the carrier or cell which uses the predetermined spectrum resource; or the synchronization signal is mapped to and transmitted over a first OFDM symbol or the preceding two OFDM symbols, other than a control region, in a subframe pre-defined to transmit the synchronization signal on the carrier or cell which uses the predetermined spectrum resource, or in a first available subframe on the carrier or cell which uses the predetermined spectrum resource; or the synchronization signal is mapped to and transmitted over a first OFDM symbol or the preceding two OFDM symbols, other than a control region and without other reference signal, in a subframe for transmitting the synchronization signal on the carrier or cell which uses the predetermined spectrum resource, or in a first available subframe on the carrier or cell which uses the predetermined spectrum resource; or the subframe or OFDM symbol for transmitting the synchronization signal on the carrier or cell which uses the predetermined spectrum resource is acquired by the base station from a master base station in advance or pre-defined, and notified by the master base station to the UE in advance through the configuration signaling, or the subframe or OFDM symbol for transmitting the synchronization signal on the carrier or cell which uses the predetermined spectrum resource is predetermined by the base station and notified by the base station to a master base station in advance, and notified to the UE by the master base station in advance through the configuration signaling, or the subframe or OFDM symbol for transmitting the synchronization signal on the carrier or cell which uses the predetermined spectrum resource is predetermined by the base station and notified by the base station to the UE in advance through the configuration signaling; or the subframe or OFDM symbol for transmitting the synchronization signal on the carrier or cell which uses the predetermined spectrum resource is determined in accordance with a pre-defined position of the subframe or OFDM symbol and an offset value for transmitting the synchronization signal on the carrier or cell which uses the predetermined spectrum resource. The offset value is acquired by the base station from a mater base station or pre-defined, and notified by the master base station to the UE in advance through the configuration signaling, or the offset value is predetermined by the base station and notified to a master base station in advance, and notified by the master base station to the UE in advance through the configuration signaling, or the offset value is predetermined by the base station and notified by the base station to the UE in advance through the configuration signaling.

Alternatively, the synchronization signal includes a PSS and/or an SSS.

Alternatively, the transceiver 91 is further configured to notify a bandwidth of the carrier or cell which uses the predetermined spectrum resource to the UE in advance through signaling; or notify the bandwidth of the carrier or cell which uses the predetermined spectrum resource to a master base station in advance, so that the master base station notifies the bandwidth to the UE in advance through signaling, or in the case that the bandwidth of the carrier or cell which uses the predetermined spectrum resource is not notified by the base station or the master base station to the UE in advance through the configuration signaling, determine that the UE receives the reference signal for measurement and perform the measurement on a pre-defined bandwidth in the middle of the carrier or cell which uses the predetermined spectrum resource, and the pre-defined bandwidth is of a value not less than 6 RBs, or a value not less than a minimum bandwidth defined in an LTE system.

Alternatively, the transceiver 91 is further configured to determine the predetermined spectrum resource as an unlicensed spectrum resource, and/or determine a secondary carrier or secondary cell pre-configured for the UE through the configuration signaling as the serving carrier or serving cell.

In Fig.9, a bus architecture may include a number of buses and bridges connected to each other, so as to connect various circuits for one or more processors 90 and one or more memories. In addition, as is known in the art, the bus architecture may be used to connect any other circuits, such as a circuit for a peripheral device, a circuit for a voltage stabilizer and a power management circuit. Bus interfaces are provided, and the transceiver 91 may consist of more than one elements, e.g., a transmitter and a receiver for communication with any other devices over a transmission medium. The processor 90 takes charge of managing the bus architecture as well as general processings. The memory may store therein data desired for the operation of the processor 90.

According to the embodiments of the present disclosure, the UE may identify the cell and determine whether or not the signal is currently received from the serving cell, and in the case that the signal is currently received from the serving cell, perform the measurement and/or the data transmission. As a result, it is able to prevent the UE from receiving the erroneous data or performing the measurement and/or the data transmission based on the erroneous signal, thereby to prevent the system performance from being degraded and to utilize the predetermined spectrum resource appropriately. For example, in the case that the signal transmission method in the embodiments of the present disclosure is applied to an unlicensed spectrum resource, it is able to provide an effective, feasible scheme about how an LTE system operates at the unlicensed spectrum resource, thereby to prevent the mutual interferences among the systems due to the resource preemption, improve the measurement performance and the data transmission performance of the LTE system over the unlicensed spectrum resource, and improve the system performance.

The basic principle of the present disclosure has been described hereinbefore in conjunction with the embodiments. However, it should be appreciated that, after reading the descriptions of the present disclosure, it is able for a person skilled in the art, using a basic programming skill, to implement any or all steps of the method and any or all members of the device in any computing device (including a processor and a storage medium) or a network consisting of the computing devices, in the form of hardware, firmware, software or a combination thereof.

Hence, the purposes of the present disclosure may also be implemented by one program or a set of programs running on any computing device, e.g., a known general-purpose computer, or implemented merely by a program product including programs codes capable of implementing the method or device. In other words, this program product and a storage medium storing therein the program product also constitute a part of the present disclosure. Obviously, the storage medium may be any known storage medium or a storage medium that may occur in future.

The present disclosure further provides in some embodiments a storage medium (e.g., a Read Only Memory (ROM), a Random Access Memory (RAM), a hard disk, or a removable memory). The computer program for the signal transmission may be stored in the storage medium, and include program codes so as to receive the signal on the carrier or cell which uses the predetermined spectrum resource, determine whether or not the received signal belongs to a serving carrier or cell of the UE, and in the case that the received signal belongs to the serving carrier or cell of the UE, perform the measurement and/or data transmission in accordance with the received signal and/or the subsequently-received signal.

The present disclosure further provides in some embodiments a storage medium (e.g., a Read Only Memory (ROM), a Random Access Memory (RAM), a hard disk, or a removable memory). The computer program for the signal transmission may be stored in the storage medium, and include program codes so as to transmit the signal on the carrier or cell which uses the predetermined spectrum resource. The signal at least includes a judge signal for determining, by a UE, whether or not a signal received by the UE on the carrier or cell which uses the predetermined spectrum resource belongs to a serving carrier or serving cell of the UE and further includes a reference signal for measurement and/or a data signal, or the signal at least includes a judge signal for determining, by a UE, whether or not a signal received by the UE on the carrier or cell which uses the predetermined spectrum resource belongs to a serving carrier or serving cell of the UE or at least includes the judge signal and a data signal, the judge signal is further used for measurement.

The present disclosure further provides in some embodiments a computer program, which include program codes so as to receive the signal on the carrier or cell which uses the predetermined spectrum resource, determine whether or not the received signal belongs to a serving carrier or cell of the UE, and in the case that the received signal belongs to the serving carrier or cell of the UE, perform the measurement and/or data transmission in accordance with the received signal and/or the subsequently-received signal.

The present disclosure further provides in some embodiments a computer program, which include program codes so as to transmit the signal on the carrier or cell which uses the predetermined spectrum resource. The signal at least includes a judge signal for determining, by a UE, whether or not a signal received by the UE on the carrier or cell which uses the predetermined spectrum resource belongs to a serving carrier or serving cell of the UE and further includes a reference signal for measurement and/or a data signal, or the signal at least includes a judge signal for determining, by a UE, whether or not a signal received by the UE on the carrier or cell which uses the predetermined spectrum resource belongs to a serving carrier or serving cell of the UE or at least includes the judge signal and a data signal, the judge signal is further used for measurement.

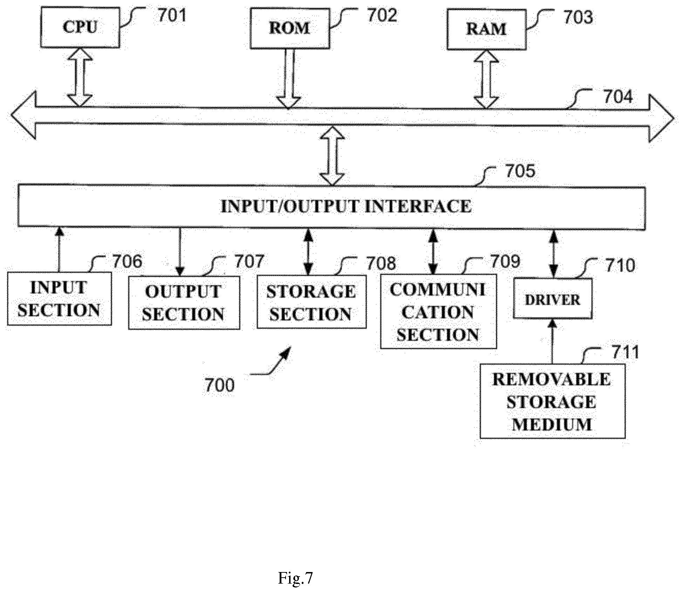

In the case that the present disclosure is implemented in the form of software and/or firmware, programs may be installed in a computer with a dedicated hardware structure, e.g., a general-purpose computer 700 in Fig.7, via the storage medium or a network, so as to achieve various functions.

In Fig.7, a Central Processing Unit (CPU) 701 may execute various processings in accordance with the programs stored in a ROM 702 or the programs loaded into a RAM 703 via a storage section 708. Data desired for the operation of the CPU 701 may also be stored in the RAM 703 according to the practical need. The CPU 701, the ROM 702 and the RAM 703 are connected to each other via a bus 704. In addition, an input/output interface 705 is also connected to the bus 704.

An input section 706 (including a keyboard and a mouse), an output section 707 (including a display such as Cathode Ray Tube (CRT) or a Liquid Crystal Display (LCD), and a speaker), a storage section 708 (including a hard disk) and a communication section 709 (including a network interface card such as Local Area Network (LAN) card, and a Modem) may also be connected to the input/output interface 705. The communication section 709 is configured to perform the communication over a network, e.g., Internet.

If desired, a driver 710 may also be connected to the input/output interface 705, and a removable storage medium 711 such as a magnetic disk, an optical disk, a magneto-optical disk or a semiconductor memory may be installed on the driver 710, so as to read the computer programs therefrom and install them into the storage section 708.

In the case that the above-mentioned processings are implemented via software, the programs may be installed from the network, e.g., Internet, or the storage medium, e.g., the removable storage medium 711.

It should be appreciated that, the storage medium is not limited to the removable storage medium 711 in Fig.7 in which the programs are stored and which may be distributed in such a manner as to be detachable from the device so as to provide the programs to a user. The removable storage medium 711 may include a magnetic disk (including a floppy disk (registered trademark), an optical disk (including Compact Disk Read Only Memory (CD-ROM) and Digital Video Disk (DVD), a magneto-optical disk (including Mini Disk (registered trademark)) and a semiconductor memory. Alternatively, the storage media may be a hard disk included in the storage section 708 and the ROM 702 in which the programs are stored, and the storage media may be distributed to the user together with the device including them.

It should be further appreciated that, according to the device and the method in the embodiments of the present disclosure, the members and/or steps may be subdivided and/or recombined, which shall also be deemed as equivalents of the present disclosure. In addition, the steps for executing the above-mentioned processings may be performed in a chronological order. Of course, some steps may also be performed in parallel, or independently of each other.

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to disk memory, CD-ROM and optical memory) including computer-readable program codes.

The present disclosure is described with reference to the flow charts and/or block diagrams showing the method, device (system) and computer program product according to the embodiments of the present disclosure. It should be appreciated that each process and/or block, or combinations thereof, in the flow charts and/or block diagrams may be implemented via computer program commands. These computer program commands may be applied to a general-purpose computer, a special-purpose computer, an embedded processor or any other processor of programmable data processing equipment, so as to form a machine, thereby to obtain the means capable of effecting the functions specified in one or more processes in the flow charts and/or one or more blocks in the block diagrams in accordance with the commands executed by the computer or the processor of the other programmable data processing equipment.

These computer program commands may also be stored in a computer-readable memory capable of guiding the computer or the other programmable data processing equipment to work in a special manner, so as to form a product including a command device capable of effecting the functions specified in one or more processes in the flow charts and/or one or more blocks in the block diagrams.

These computer program commands may also be loaded onto a computer or the other programmable data processing equipment, so as to perform a series of operations thereon and generate the processings implemented by the computer, thereby to provide the steps capable of effecting the functions specified one or more processes in the flow charts and/or one or more blocks in the block diagrams in accordance with the instructions.

Although the preferred embodiments are described above, a person skilled in the art may make modifications and alterations to these embodiments in accordance with the basic concept of the present disclosure. The scope of the invention is limited solely by the appended claims.

**Claims**

1. A signal transmission method, comprising the steps of:

   receiving, by a User Equipment, UE, a signal on a carrier or cell which uses a predetermined spectrum resource, wherein the predetermined spectrum resource is an unlicensed spectrum resource;
   determining whether or not the received signal belongs to a serving carrier or serving cell of the UE (S301); and
   in the case that the received signal belongs to the serving carrier or serving cell of the UE, performing measurement and/or data transmission by the UE in accordance with the received signal and/or a subsequently-received signal (S303);
   wherein the step of determining by the UE whether or not the received signal belongs to the serving carrier or serving cell comprises at least one of:

   detecting, by the UE, a synchronization signal corresponding to the ID of the carrier or cell in accordance with the ID of the carrier or cell pre-configured through the configuration signaling, and in response to the synchronization signal corresponding to the ID of the carrier or cell being detected, determining that the received signal belongs to the serving carrier or serving cell;
   detecting, by the UE, dedicated sequences corresponding to the serving carrier or serving cell of the UE or dedicated sequences for the UE pre-configured through the configuration signaling, and in response to the dedicated sequences being detected, determining that the received signal belongs to the serving carrier or serving cell.

2. The signal transmission method according to claim 1, wherein the step of performing the measurement and/or data transmission by the UE in accordance with the received signal and/or the subsequently-received signal (S303) comprises at least one of:

   performing the measurement by the UE in accordance with a received reference signal for measurement;
   receiving by the UE a further reference signal for measurement, and performing the measurement in accordance with the received further reference signal for measurement;
   performing the data transmission by the UE in accordance with received scheduling signaling;
   receiving by the UE further scheduling signaling, and performing the data transmission in accordance with the received further scheduling signaling.

3. The signal transmission method according to claim 2, wherein the reference signal for measurement is transmitted on an Orthogonal Frequency Division Multiplexing, OFDM, symbol on which synchronization signals are currently transmitted and using all frequency domain resources other than the frequency domain resources occupied by the synchronization signals, or

the reference signal for measurement is transmitted on an OFDM symbol on which synchronization signals are currently transmitted and using parts of the frequency domain resources other than the frequency domain resources occupied by the synchronization signals, or the reference signal for measurement is transmitted on an OFDM symbol adjacent to, or separated by a fixed time domain interval from, the OFDM symbol on which synchronization signals are currently transmitted, and the reference signal for measurement and at least one synchronization signal in the synchronization signals are transmitted within an identical subframe, or the reference signal for measurement is the synchronization signal, and/or, wherein sequences of the reference signal for measurement are generated at least in association with an Identifier, ID, of a carrier or cell on which the reference signal is currently transmitted, or in the case that the reference signal for measurement is used for measuring Reference Signal Received Power, RSRP, and/or Channel State Information, CSI, sequences of the reference signal for measurement are generated at least in association with an ID of a carrier or cell on which the reference signal is currently transmitted, or sequences of the reference signal for measurement are sequences of a UE-specific or cell-specific measurement reference signal and pre-configured by configuration signaling, or in the case that the reference signal for measurement is used for measuring CSI, sequences of the reference signal for measurement is sequences of a UE-specific or cell-specific measurement reference signal and pre-configured through configuration signaling, and/or, wherein the reference signal for measurement is used for at least one of RSRP measurement, Reference Signal Received Quality, RSRQ, measurement, positioning measurement, tracking measurement and CSI measurement.

4. The signal transmission method according to claim 3, wherein the step of detecting, by the UE, the synchronization signal corresponding to the ID of the carrier or cell in accordance with the ID of the carrier or cell pre-configured through the configuration signaling comprises:

   detecting, by the UE, the synchronization signal corresponding to the ID of the carrier or cell in each subframe or a predetermined subframe in which the synchronization signal is to be transmitted in accordance with the ID of the carrier or cell pre-configured through the configuration signaling; and/or
the step of detecting, by the UE, the dedicated sequences pre-configured through the configuration signaling comprises:

   detecting, by the UE, the dedicated sequences in each subframe or a predetermined subframe, the predetermined subframe being a particular subframe pre-configured through the configuration signaling, or a subframe determined in accordance with a detection period, or the detection period and a subframe offset value, pre-configured through the configuration signaling, and/or, wherein the dedicated sequences are sequences of a particular reference signal for measurement pre-configured for the UE through the configuration signaling, and/or the UE detects the dedicated sequences in an energy detection manner.

5. The signal transmission method according to any one of claims 1, 3 and 4 wherein

   the synchronization signal is transmitted on the carrier or cell which uses the predetermined spectrum resource and using a subframe and a frequency domain resource defined in Long-Term Evolution, LTE, Releases 8-11 for a Frequency Division Duplex, FDD, or Time Division Duplex, TDD, system; or the synchronization signal is mapped to and transmitted over a first OFDM symbol or the preceding two OFDM symbols in a subframe pre-defined to transmit the synchronization signal on the carrier or cell which uses the predetermined spectrum resource, or in a first available subframe on the carrier or cell which uses the predetermined spectrum resource; or the synchronization signal is mapped to and transmitted over a first OFDM symbol or the preceding two OFDM symbols, without other reference signal, in a subframe pre-defined to transmit the synchronization signal on the carrier or cell which uses the predetermined spectrum resource, or in a first available subframe on the carrier or cell which uses the predetermined spectrum resource; or the synchronization signal is mapped to and transmitted over a first OFDM symbol or the preceding two OFDM symbols, other than a control region, in a subframe pre-defined to transmit the synchronization signal on the carrier or cell which uses the predetermined spectrum resource, or in a first available subframe on the carrier or cell which uses the predetermined spectrum resource; or

the synchronization signal is mapped to and transmitted over a first OFDM symbol or the preceding two OFDM symbols, other than a control region and without other reference signal, in a subframe for transmitting the synchronization signal on the carrier or cell which uses the predetermined spectrum resource, or in a first available subframe on the carrier or cell which uses the predetermined spectrum resource; or

a subframe or OFDM symbol for transmitting the synchronization signal on the carrier or cell which uses the predetermined spectrum resource is acquired in advance in accordance with the configuration signaling; or

an offset value for transmitting the synchronization signal on the carrier or cell which uses the predetermined spectrum resource is acquired in advance in accordance with the configuration signaling, and the UE determines a subframe or OFDM symbol for transmitting the synchronization signal on the carrier or cell which uses the predetermined spectrum resource in accordance with a pre-defined position of the subframe or OFDM symbol for transmitting the synchronization signal and the offset value; and/or

the synchronization signal comprises a Primary Synchronization Signal, PSS, and/or a Secondary Synchronization Signal, SSS.

6. The signal transmission method according to any one of claims 1 to 4, wherein

a bandwidth of the carrier or cell which uses the predetermined spectrum resource is notified in advance through the configuration signaling, or in the case that the bandwidth of the carrier or cell which uses the predetermined spectrum resource is unknown, the UE receives the reference signal for measurement and performs the measurement on a pre-defined bandwidth in the middle of the carrier or cell which uses the predetermined spectrum resource, and the pre-defined bandwidth is of a value not less than 6 Resource Blocks, RBs, or a value not less than a minimum bandwidth defined in an LTE system; and/or

the serving carrier or serving cell is a secondary carrier or secondary cell pre-configured for the UE through the configuration signaling; and/or the carrier or cell which uses the predetermined spectrum resource is a secondary carrier or secondary cell pre-configured for the UE through the configuration signaling.

7. A signal transmission method, comprising a step of:

transmitting, by a base station, a signal on a carrier or cell which uses a predetermined spectrum resource, wherein the predetermined spectrum resource is an unlicensed spectrum resource and the signal at least comprises a judge signal for determining, by a User Equipment, UE, whether or not a signal received by the UE on the carrier or cell which uses the predetermined spectrum resource belongs to a serving carrier or serving cell of the UE and further comprises a reference signal for measurement and/or a data signal, or the signal at least comprises a judge signal for determining, by the UE, whether or not a signal received by the UE on the carrier or cell which uses the predetermined spectrum resource belongs to a serving carrier or serving cell of the UE or at least includes the judge signal and a data signal, and the judge signal is further used for measurement (S403);

wherein the judge signal is a synchronization signal corresponding to an Identifier, ID, of the carrier or cell which uses the predetermined spectrum resource, and/or

the judge signal is dedicated sequences corresponding to the carrier or cell which uses the predetermined spectrum resources or dedicated sequences of the UE.

8. The signal transmission method according to claim 7, further comprising:

determining, by the base station, whether or not a current channel resource on the carrier or cell which uses the predetermined spectrum resource is free;

in the case that the current channel resource is free, transmitting, by the base station, the signal on the carrier or cell which uses the predetermined spectrum resource; and

in the case that the current channel resource is busy, prohibiting, by the base station, the transmission of the signal on the carrier or cell which uses the predetermined spectrum resource, or transmitting, by the base station, the signal on the carrier or cell which uses the predetermined spectrum resource after a predetermined time period, wherein the predetermined time period has a length of a pre-defined fixed value, or the length of the predetermined time period is notified to the UE in advance through signaling, and/or

wherein in the case that the judge signal is the synchronization signal corresponding to the ID of the carrier or cell which uses the predetermined spectrum resource, and the base station transmits the synchronization signal and the reference signal for measurement and/or the data signal, or transmits the synchronization signal, or transmits the synchronization signal and the data signal, on the carrier or cell which uses the predetermined spectrum resource, wherein the base station transmits the synchronization signal in each subframe, or in a predetermined subframe in which the synchronization signal is to be transmitted, on the carrier or cell which uses the predetermined spectrum resource, and the ID of the carrier or cell which uses the predetermined spectrum resource is pre-configured by a master base station for the UE through configuration signaling; or the base station transmits the synchronization signal in each subframe, or in a predetermined subframe in which the synchronization signal is to be transmitted, on the carrier or cell which uses the predetermined spectrum resource, and the ID of the carrier or cell which uses the predetermined spectrum resource is pre-configured by the base station for the UE through configuration signaling; or the base station transmits the synchronization signal in each subframe, or in a predetermined subframe in which the synchronization signal is to be transmitted, on the carrier or cell which uses the predetermined spectrum resource, and the ID of the carrier or cell which uses the predetermined spectrum resource is notified by the base station to a master base station in advance and pre-configured by the master base station for the UE through the configuration signaling; and/or

in a case that the judge signal is the dedicated sequences corresponding to the carrier or cell which uses the predetermined spectrum resources or dedicated sequences of the UE, and the base station transmits the dedicated sequences and a reference signal for measurement and/or a data signal, or transmits the dedicated sequences, or transmits the dedicated sequences and the data signal, on the carrier or cell which uses the predetermined spectrum resources, wherein the base station transmits the dedicated sequences in each subframe or a pre-defined subframe on the carrier or cell which uses the predetermined spectrum resource, the dedicated sequences are pre-configured by a master base station for the UE through configuration signaling, and the pre-defined subframe is a particular subframe pre-configured through the configuration signaling or a subframe determined in accordance with a detection period, or the detection period and a subframe offset value, pre-configured through the configuration signaling; or the base station transmits the dedicated sequences in each subframe or a pre-defined subframe on the carrier or cell which uses the predetermined spectrum resource, the dedicated sequences are pre-configured for the UE through the configuration signaling, and the pre-defined subframe is a particular subframe pre-configured through the configuration signaling or a subframe determined in accordance with a detection period, or the detection period and a subframe offset value, pre-configured through the configuration signaling; or the base station transmits the dedicated sequences in each subframe or a pre-defined subframe on the carrier or cell which uses the predetermined spectrum resource, the dedicated sequences are notified by the base station to a master base station in advance and pre-configured by the master base station for the UE through the configuration signaling, and the pre-defined subframe is a particular subframe pre-configured through the configuration signaling or a subframe determined in accordance with a detection period, or the detection period and a subframe offset value, pre-configured through the configuration signaling.

9. The signal transmission method according to claim 8, wherein

the reference signal for measurement is transmitted on an Orthogonal Frequency Division Multiplexing, OFDM, symbol on which synchronization signals are currently transmitted and using all frequency domain resources other than the frequency domain resources occupied by the synchronization signals, or the reference signal for measurement is transmitted on an OFDM symbol on which synchronization signals are currently transmitted and using parts of the frequency domain resources other than the frequency domain resources occupied by the synchronization signals, or the reference signal for measurement is transmitted on an OFDM symbol adjacent to, or separated by a fixed time domain interval from, the OFDM symbol on which synchronization signals are currently transmitted and the reference signal for measurement and at least one synchronization signal in the synchronization signals are transmitted within an identical subframe, or the reference signal for measurement is the synchronization signal; and/or

sequences of the reference signal for measurement are generated at least in association with an ID of a carrier or cell on which the reference signal is currently transmitted, or in the case that the reference signal for measurement is used for measuring Reference Signal Received Power, RSRP, and/or Channel State Information, CSI, sequences of the reference signal for measurement are generated at least in association with the ID of a carrier or cell on which the reference signal is currently transmitted, or sequences of the reference signal for measurement are sequences of a UE-specific or cell-specific measurement reference signal and pre-configured by configuration signaling, or in the case that the reference signal for measurement is used for measuring CSI, sequences of the reference signal for measurement is sequences of a UE-specific measurement reference signal and pre-configured through configuration signaling; and/or

the reference signal for measurement is used for at least one of RSRP measurement, Reference Signal Received Quality, RSRQ, measurement, positioning measurement, tracking measurement and CSI measurement; and/or

the dedicated sequences are sequences of a particular reference signal for measurement pre-configured for the UE through the configuration signaling, and/or,

wherein the synchronization signal is transmitted on the carrier or cell which uses the predetermined spectrum resource and using a subframe and a frequency domain resource defined in Long-Term Evolution, LTE, releases 8-11 for a Frequency Division Duplex, FDD, or Time Division Duplex, TDD, system; or

the synchronization signal is mapped to and transmitted over a first OFDM symbol or the preceding two OFDM symbols in a subframe pre-defined to transmit the synchronization signal on the carrier or cell which uses the predetermined spectrum resource, or in a first available subframe on the carrier or cell which uses the predetermined spectrum resource; or

the synchronization signal is mapped to and transmitted over a first OFDM symbol or the preceding two OFDM symbols, without other reference signal, in a subframe pre-defined to transmit the synchronization signal on the carrier or cell which uses the predetermined spectrum resource, or in a first available subframe on the carrier or cell which uses the predetermined spectrum resource; or

the synchronization signal is mapped to and transmitted over a first OFDM symbol or the preceding two OFDM symbols, other than a control region, in a subframe pre-defined to transmit the synchronization signal on the carrier or cell which uses the predetermined spectrum resource, or in a first available subframe on the carrier or cell which uses the predetermined spectrum resource; or

the synchronization signal is mapped to and transmitted over a first OFDM symbol or the preceding two OFDM symbols, other than a control region and without other reference signal, in a subframe for transmitting the synchronization signal on the carrier or cell which uses the predetermined spectrum resource, or in a first available subframe on the carrier or cell which uses the predetermined spectrum resource; or

the subframe or OFDM symbol for transmitting the synchronization signal on the carrier or cell which uses the predetermined spectrum resource is acquired by the base station from a master base station in advance or pre-defined, and notified by the master base station to the UE in advance through the configuration signaling, or the subframe or OFDM symbol for transmitting the synchronization signal on the carrier or cell which uses the predetermined spectrum resource is predetermined by the base station and notified by the base station to a master base station in advance, and notified to the UE by the master base station in advance through the configuration signaling, or the subframe or OFDM symbol for transmitting the synchronization signal on the carrier or cell which uses the predetermined spectrum resource is predetermined by the base station and notified by the base station to the UE in advance through the configuration signaling; or

the subframe or OFDM symbol for transmitting the synchronization signal is determined in accordance with a pre-defined position of the subframe or OFDM symbol and an offset value for transmitting the synchronization signal on the carrier or cell which uses the predetermined spectrum resource, the offset value is acquired by the base station from a mater base station or pre-defined, and notified by the master base station to the UE in advance through the configuration signaling, or the offset value is predetermined by the base station and notified to a master base station in advance, and notified by the master base station to the UE in advance through the configuration signaling, or the offset value is predetermined by the base station and notified by the base station to the UE in advance through the configuration signaling; and/or

the synchronization signal comprises a Primary Synchronization Signal, PSS, and/or a Secondary Synchronization Signal, SSS.

10. The signal transmission method according to any one of claims 7 to 9, wherein a bandwidth of the carrier or cell which uses the predetermined spectrum resource is notified by the base station to the UE in advance through signaling; or the bandwidth of the carrier or cell which uses the predetermined spectrum resource is notified by the base station to a master base station in advance, and notified by the master base station to the UE in advance through signaling; or the bandwidth of the carrier or cell which uses the predetermined spectrum resource is notified by the master base station to the UE in advance through configuration signaling; or in the case that the bandwidth of the carrier or cell which uses the predetermined spectrum resource is not notified by the base station or the master base station to the UE in advance through the configuration signaling, the base station determines that the UE receives the reference signal for measurement and perform the measurement on a pre-defined bandwidth in the middle of the carrier or cell which uses the predetermined spectrum resource, wherein the pre-defined bandwidth is of a value not less than 6 Resource Blocks, RBs, or a value not less than a minimum bandwidth defined in an LTE system; and/or
the carrier or cell is a secondary carrier or secondary cell pre-configured for the UE through the configuration signaling.

11. A signal transmission apparatus, comprising:

a reception module (51) configured to receive a signal; and
a determination module (52) configured to, in the case that the reception module receives the signal on a carrier or cell which uses a predetermined spectrum resource, determine whether or not the received signal belongs to a serving carrier or serving cell of a User Equipment, UE, wherein the predetermined spectrum resource is an unlicensed spectrum resource, and
the reception module (51) is further configured to, in the case that the received signal belongs to the serving carrier or serving cell of the UE, perform measurement and/or data transmission in accordance with the received signal and/or a subsequently-received signal,
wherein the determination module (52) is further configured to perform at least one of the following processings:

detecting a synchronization signal corresponding to the ID of the carrier or cell in accordance with the ID of the carrier or cell pre-configured through the configuration signaling, and in response to the synchronization signal corresponding to the ID of the carrier or cell being detected, determining that the received signal belongs to the serving carrier or serving cell; and
detecting dedicated sequences corresponding to the serving carrier or serving cell of the UE or dedicated sequences for the UE pre-configured through the configuration signaling, and in response to the dedicated sequences being detected, determining that the received signal belongs to the serving carrier or serving cell.

12. The signal transmission apparatus according to claim 11, wherein the reception module (51) is further configured to perform at least one of the following processings:

performing the measurement by the UE in accordance with a received reference signal for measurement;
receiving a further reference signal for measurement, and performing the measurement in accordance with the received further reference signal for measurement;
performing the data transmission in accordance with received scheduling signaling; and
receiving further scheduling signaling, and performing the data transmission in accordance with the received further scheduling signaling.

13. The signal transmission apparatus according to claim 12, wherein the reception module (51) is further configured to:

receive the reference signal for measurement on an Orthogonal Frequency Division Multiplexing, OFDM, symbol on which synchronization signals are currently transmitted and using all frequency domain resources other than the frequency domain resources occupied by the synchronization signals, or receive the reference signal for measurement on an OFDM symbol on which synchronization signals are currently transmitted and using parts of the frequency domain resources other than the frequency domain resources occupied by the synchronization signals, or receive the reference signal for measurement on an OFDM symbol adjacent to, or separated by a fixed time domain interval from, the OFDM symbol on which synchronization signals are currently transmitted, wherein the reference signal for measurement and at least one synchronization signal in the synchronization signals are transmitted within an identical subframe, or receive the synchronization signal as the reference signal for measurement; and/or
the reception module (51) is further configured to generate sequences of the reference signal for measurement at least in association with an Identifier, ID, of a carrier or cell on which the reference signal is currently transmitted, or in the case that the reference signal for measurement is used for measuring Reference Signal Received Power, RSRP, and/or Channel State Information , CSI, generate sequences of the reference signal for measurement at least in association with an ID of a carrier or cell on which the reference signal is currently transmitted, or determine sequences of a UE-specific or cell-specific measurement reference signal and pre-configured by configuration signaling as sequences of the reference signal for measurement, or in the case that the reference signal for measurement is used for measuring CSI, determine sequences of a UE-specific or cell-specific measurement reference signal and pre-configured through configuration signaling as sequences of the reference signal for measurement; and/or

the reception module (51) is further configured to perform at least one of RSRP measurement, Reference Signal Received Quality, RSRQ, measurement, positioning measurement, tracking measurement and CSI measurement using the reference signal for measurement.

14. The signal transmission apparatus according to claim 13, wherein in the case that the determination module (52) detects the synchronization signal corresponding to the ID of the carrier or cell in accordance with the ID of the carrier or cell pre-configured through the configuration signaling, the determination module (52) is further configured to detect the synchronization signal corresponding to the ID of the carrier or cell in each subframe or a predetermined subframe in which the synchronization signal is to be transmitted in accordance with the ID of the carrier or cell pre-configured through the configuration signaling; and/or

in the case that the determination module (52) detects the dedicated sequences pre-configured through the configuration signaling, the determination module is further configured to detect the dedicated sequences in each subframe or a predetermined subframe, and the predetermined subframe is a particular subframe pre-configured through the configuration signaling, or a subframe determined in accordance with a detection period, or the detection period and a subframe offset value, pre-configured through the configuration signaling, and/or, wherein the determination module (52) is further configured to determine sequences of a particular reference signal for measurement pre-configured for the UE through the configuration signaling as the dedicated sequences, and/or detect the dedicated sequences in an energy detection manner.

15. The signal transmission apparatus according to any one of claims 12, 13 and 14, wherein

the synchronization signal is transmitted on the carrier or cell which uses the predetermined spectrum resource and using a subframe and a frequency domain resource defined in Long-Term Evolution, LTE, Releases 8-11 for a Frequency Division Duplex, FDD, or Time Division Duplex, TDD; system; or

the synchronization signal is mapped to and transmitted over a first OFDM symbol or the preceding two OFDM symbols in a subframe predefined to transmit the synchronization signal on the carrier or cell which uses the predetermined spectrum resource, or in a first available subframe on the carrier or cell which uses the predetermined spectrum resource; or

the synchronization signal is mapped to and transmitted over a first OFDM symbol or the preceding two OFDM symbols, without other reference signal, in a subframe pre-defined to transmit the synchronization signal on the carrier or cell which uses the predetermined spectrum resource, or in a first available subframe on the carrier or cell which uses the predetermined spectrum resource; or

the synchronization signal is mapped to and transmitted over a first OFDM symbol or the preceding two OFDM symbols, other than a control region, in a subframe pre-defined to transmit the synchronization signal on the carrier or cell which uses the predetermined spectrum resource, or in a first available subframe on the carrier or cell which uses the predetermined spectrum resource; or

the synchronization signal is mapped to and transmitted over a first OFDM symbol or the preceding two OFDM symbols, other than a control region and without other reference signal, in a subframe for transmitting the synchronization signal on the carrier or cell which uses the predetermined spectrum resource, or in a first available subframe on the carrier or cell which uses the predetermined spectrum resource; or

a subframe or OFDM symbol for transmitting the synchronization signal on the carrier or cell which uses the predetermined spectrum resource is acquired in advance in accordance with the configuration signaling; or

an offset value for transmitting the synchronization signal on the carrier or cell which uses the predetermined spectrum resource is acquired in advance in accordance with the configuration signaling, and the UE determines a subframe or OFDM symbol for transmitting the synchronization signal on the carrier or cell which uses the predetermined spectrum resource in accordance with a pre-defined position of the subframe or OFDM symbol and the offset value; and/or

the synchronization signal comprises a Primary Synchronization Signal, PSS, and/or a Secondary Synchronization Signal, SSS.

16. The signal transmission apparatus according to any one of claims 11 to 14, wherein the reception module (51) is further configured to determine that a bandwidth of the carrier or cell which uses the predetermined spectrum resource is notified in advance through the configuration signaling, or in the case that the bandwidth of the carrier or cell which uses the predetermined spectrum resource is unknown, receive the reference signal for measurement and perform the measurement on a pre-defined bandwidth in the middle of the carrier or cell which uses the predetermined spectrum resource, and the predefined bandwidth is of a value not less than 6 Resource Blocks, RBs, or a value not less than a minimum bandwidth defined in an LTE system; and/or

the reception module (51) is further configured to determine that the carrier or cell is a secondary carrier or secondary cell pre-configured for the UE through the configuration signaling; and/or
the reception module (51) is further configured to determine that the carrier or cell which uses the predetermined spectrum resource is a secondary carrier or secondary cell pre-configured for the UE through the configuration signaling.

17. A signal transmission apparatus for a base station, comprising:

a generation module (61) configured to generate a signal; and
a transmission module (62) configured to transmit the signal on a carrier or cell which uses a predetermined spectrum resource, wherein the predetermined spectrum resource is an unlicensed spectrum resource, and,
wherein the signal at least comprises a judge signal for determining, by a User Equipment, UE, whether or not a signal received by the UE on the carrier or cell which uses the predetermined spectrum resource belongs to a serving carrier or serving cell of the UE and further includes a reference signal for measurement and/or a data signal, or the signal at least includes a judge signal for determining, by the UE, whether or not a signal received by the UE on the carrier or cell which uses the predetermined spectrum resource belongs to a serving carrier or serving cell of the UE or at least includes the judge signal and a data signal, and the judge signal is further used for measurement, wherein the judge signal is a synchronization signal corresponding to an Identifier, ID, of the carrier or cell which uses the predetermined spectrum resource, and/or
the judge signal is dedicated sequences corresponding to the carrier or cell which uses the predetermined spectrum resources or dedicated sequences of the UE.

18. The signal transmission apparatus according to claim 17, further comprising:

a judgment module configured to determine whether or not a current channel resource on the carrier or cell which uses the predetermined spectrum resource is free,
wherein in the case that the current channel resource is free, the transmission module (62) is further configured to transmit the signal on the carrier or cell which uses the predetermined spectrum resource, and in the case that the current channel resource is busy, the transmission module (62) is further configured to prohibit the transmission of the signal on the carrier or cell which uses the predetermined spectrum resource, or transmit the signal on the carrier or cell which uses the predetermined spectrum resource after a predetermined time period, wherein the predetermined time period has a length of a pre-defined fixed value, or the length of the predetermined time period is notified to the UE in advance through signaling, and /or
in the case that the judge signal is a synchronization signal corresponding to an Identifier, ID, of the carrier or cell which uses the predetermined spectrum resource, the transmission module (62) is configured to transmit the synchronization signal and the reference signal for measurement and/or the data signal, or transmit the synchronization signal, or transmit the synchronization signal and the data signal, on the carrier or cell which uses the predetermined spectrum resource, wherein the transmission module (62) is configured to transmit the synchronization signal in each subframe, or in a predetermined subframe in which the synchronization signal is to be transmitted, on the carrier or cell which uses the predetermined spectrum resource, and the ID of the carrier or cell which uses the predetermined spectrum resource is pre-configured by a master base station for the UE through configuration signaling; or the transmission module (62) is further configured to transmit the synchronization signal in each subframe, or in a predetermined subframe in which the synchronization signal is to be transmitted, on the carrier or cell which uses the predetermined spectrum resource, and the ID of the carrier or cell which uses the predetermined spectrum resource is pre-configured by the base station for the UE through configuration signaling; or the transmission module (62) is further configured to transmit the synchronization signal in each subframe, or in a predetermined subframe in which the synchronization signal is to be transmitted, on the carrier or cell which uses the predetermined spectrum resource, and the ID of the carrier or cell which uses the predetermined spectrum resource is notified by the base station to a master base station in advance and pre-configured by the master base station for the UE through the configuration signaling; and/or

in the case that the judge signal is dedicated sequences corresponding to the carrier or cell which uses the predetermined spectrum resources or dedicated sequences of the UE, the transmission module (62) is configured to transmit the dedicated sequences and a reference signal for measurement and/or a data signal, or transmit the dedicated sequences, or transmit the dedicated sequences and the data signal, on the carrier or cell which uses the predetermined spectrum resources, wherein the transmission module (62) is further configured to transmit the dedicated sequences in each subframe or a pre-defined subframe on the carrier or cell which uses the predetermined spectrum resource, the dedicated sequences are pre-configured by a master base station for the UE through configuration signaling, and the pre-defined subframe is a particular subframe pre-configured through the configuration signaling or a subframe determined in accordance with a detection period, or the detection period and a subframe offset value, pre-configured through the configuration signaling; or the transmission module (62) is further configured to transmit the dedicated sequences in each subframe or a pre-defined subframe on the carrier or cell which uses the predetermined spectrum resource, the dedicated sequences are pre-configured by the base station for the UE through the configuration signaling, and the pre-defined subframe is a particular subframe pre-configured through the configuration signaling or a subframe determined in accordance with a detection period, or the detection period and a subframe offset value, pre-configured through the configuration signaling; or the transmission module (62) is further configured to transmit the dedicated sequences in each subframe or a pre-defined subframe on the carrier or cell which uses the predetermined spectrum resource, the dedicated sequences are notified by the base station to a master base station in advance and pre-configured by the master base station for the UE through the configuration signaling, and the pre-defined subframe is a particular subframe pre-configured through the configuration signaling or a subframe determined in accordance with a detection period, or the detection period and a subframe offset value, pre-configured through the configuration signaling.

19. The signal transmission apparatus according to claim 18, wherein the transmission module (62) is further configured to transmit the reference signal for measurement on an Orthogonal Frequency Division Multiplexing, OFDM, symbol on which synchronization signals are currently transmitted and using all frequency domain resources other than the frequency domain resources occupied by the synchronization signals, or transmit the reference signal for measurement on an OFDM symbol on which synchronization signals are currently transmitted and using parts of the frequency domain resources other than the frequency domain resources occupied by the synchronization signals, or transmit the reference signal for measurement on an OFDM symbol adjacent to, or separated by a fixed time domain interval from, the OFDM symbol on which synchronization signals are currently transmitted wherein the reference signal for measurement and at least one synchronization signal in the synchronization signals are transmitted within an identical subframe, or transmit the synchronization signal as the reference signal for measurement; and/or

the generation module (61) is further configured to generate sequences of the reference signal for measurement at least in association with an ID of a carrier or cell on which the reference signal is currently transmitted, or in the case that the reference signal for measurement is used for measuring Reference Signal Received Power, RSRP, and/or Channel State Information, CSI, generate sequences of the reference signal for measurement at least in association with an ID of a carrier or cell on which the reference signal is currently transmitted, or determine sequences of a UE-specific or cell-specific measurement reference signal and pre-configured by configuration signaling as sequences of the reference signal for measurement, or in the case that the reference signal for measurement is used for measuring CSI, determine sequences of a UE-specific measurement reference signal and pre-configured through configuration signaling as sequences of the reference signal for measurement; and/or

the generation module (61) is further configured to perform at least one of RSRP measurement, Reference Signal Received Quality, RSRQ, measurement, positioning measurement, tracking measurement and CSI measurement using the reference signal for measurement; and/or

the generation module (61) is further configured to determine sequences of a particular reference signal for measurement pre-configured for the UE through the configuration signaling as the dedicated sequences, and/or

wherein the transmission module (62) is further configured to determine that:

the synchronization signal is transmitted on the carrier or cell which uses the predetermined spectrum resource and using a subframe and a frequency domain resource defined in Long-Term Evolution, LTE, Releases 8-11 for a Frequency Division Duplex, FDD, or Time Division Duplex, TDD, system; or

the synchronization signal is mapped to and transmitted over a first OFDM symbol or the preceding two OFDM symbols in a subframe pre-defined to transmit the synchronization signal on the carrier or cell which uses the predetermined spectrum resource, or in a first available subframe on the carrier or cell which uses the predetermined spectrum resource; or

the synchronization signal is mapped to and transmitted over a first OFDM symbol or the preceding two OFDM symbols, without other reference signal, in a subframe pre-defined to transmit the synchronization signal on the carrier or cell which uses the predetermined spectrum resource, or in a first available subframe on the carrier or cell which uses the predetermined spectrum resource; or

the synchronization signal is mapped to and transmitted over a first OFDM symbol or the preceding two OFDM symbols, other than a control region, in a subframe pre-defined to transmit the synchronization signal on the carrier or cell which uses the predetermined spectrum resource, or in a first available subframe on the carrier or cell which uses the predetermined spectrum resource; or

the synchronization signal is mapped to and transmitted over a first OFDM symbol or the preceding two OFDM symbols, other than a control region and without other reference signal, in a subframe for transmitting the synchronization signal on the carrier or cell which uses the predetermined spectrum resource, or in a first available subframe on the carrier or cell which uses the predetermined spectrum resource; or

the subframe or OFDM symbol for transmitting the synchronization signal on the carrier or cell which uses the predetermined spectrum resource is acquired by the base station from a master base station in advance or pre-defined, and notified by the master base station to the UE in advance through the configuration signaling, or the subframe or OFDM symbol for transmitting the synchronization signal on the carrier or cell which uses the predetermined spectrum resource is predetermined by the base station and notified by the base station to a master base station in advance, and notified to the UE by the master base station in advance through the configuration signaling, or the subframe or OFDM symbol for transmitting the synchronization signal on the carrier or cell which uses the predetermined spectrum resource is predetermined by the base station and notified by the base station to the UE in advance through the configuration signaling; or

the subframe or OFDM symbol for transmitting the synchronization signal on the carrier or cell which uses the predetermined spectrum resource is determined in accordance with a pre-defined position of the subframe or OFDM symbol and an offset value for transmitting the synchronization signal on the carrier or cell which uses the predetermined spectrum resource, wherein the offset value is acquired by the base station from a mater base station or pre-defined, and notified by the master base station to the UE in advance through the configuration signaling, or the offset value is predetermined by the base station and notified to a master base station in advance, and notified by the master base station to the UE in advance through the configuration signaling, or the offset value is predetermined by the base station and notified by the base station to the UE in advance through the configuration signaling; and/or

the synchronization signal comprises a Primary Synchronization Signal, PSS, and/or a Secondary Synchronization Signal, SSS.

20. The signal transmission apparatus according to any one of claims 17 to 19, wherein the transmission module (62) is further configured to:

notify a bandwidth of the carrier or cell which uses the predetermined spectrum resource to the UE in advance through signaling; or notify the bandwidth of the carrier or cell which uses the predetermined spectrum resource to a master base station in advance, so that the master base station notifies the bandwidth to the UE in advance through signaling; or in the case that the bandwidth of the carrier or cell which uses the predetermined spectrum resource is not notified by the base station or the master base station to the UE in advance through the configuration signaling, determine that the UE receives the reference signal for measurement and perform the measurement on a pre-defined bandwidth in the middle of the carrier or cell which uses the predetermined spectrum resource, wherein the pre-defined bandwidth is of a value not less than 6 Resource Blocks (RBs), or a value not less than a minimum bandwidth defined in an LTE system; and/or

the transmission module (62) is further configured to determine a secondary carrier or secondary cell pre-configured for the UE through the configuration signaling as the serving carrier or serving cell.

**Patentansprüche**

1.  Signalübertragungsverfahren, das die folgenden Schritte umfasst:

Empfangen, mittels eines Benutzerendgeräts, UE, eines Signals auf einem Träger oder einer Zelle, der/die eine vorbestimmte Spektrumsressource verwendet, wobei die vorbestimmte Spektrumsressource eine unlizenzierte Spektrumsressource ist;

Bestimmen, ob das empfangene Signal zu einem bedienenden Träger oder einer bedienenden Zelle des UE gehört oder nicht (S301); und

in dem Fall, dass das empfangene Signal zu dem dienenden Träger oder der dienenden Zelle des UE gehört, Durchführen einer Messung und/oder Datenübertragung mittels des UE in Übereinstimmung mit dem empfangenen Signal und/oder einem nachfolgend empfangenen Signal (S303);

wobei der Schritt des Bestimmens mittels des UE, ob das empfangene Signal zu dem dienenden Träger oder der dienenden Zelle gehört oder nicht, mindestens eines aus Folgendem umfasst:

Detektieren, mittels des UE, eines Synchronisationssignals, das der ID des Trägers oder der Zelle entspricht, in Übereinstimmung mit der ID des Trägers oder der Zelle, der/die durch die Konfigurationssignalisierung vorkonfiguriert wird, und als Reaktion darauf, dass Synchronisationssignal detektiert wird, das der ID des Trägers oder der Zelle entspricht, Bestimmen, dass das empfangene Signal zu dem dienenden Träger oder der dienenden Zelle gehört;

Detektieren, mittels des UE, dedizierter Sequenzen, die dem dienenden Träger oder der dienenden Zelle des UE entsprechen, oder dedizierter Sequenzen für das UE, die durch die Konfigurationssignalisierung vorkonfiguriert werden, und als Reaktion darauf, dass die dedizierten Sequenzen detektiert werden, Bestimmen, dass das empfangene Signal dem dienenden Träger oder der dienenden Zelle gehört.

2.  Signalübertragungsverfahren nach Anspruch 1, wobei der Schritt des Durchführens der Messung und/oder Datenübertragung mittels des UE in Übereinstimmung mit dem empfangenen Signal und/oder dem nachfolgend empfangenen Signal (S303) mindestens eines aus Folgendem umfasst:

Durchführen der Messung mittels des UE in Übereinstimmung mit einem empfangenen Referenzsignal für die Messung;

Empfangen eines weiteren Referenzsignals für die Messung mittels des UE, und

Durchführen der Messung in Übereinstimmung mit dem empfangenen weiteren Referenzsignal für die Messung;

Durchführen der Datenübertragung mittels des UE in Übereinstimmung mit der empfangenen Scheduling-Signalisierung;

Empfangen weiterer Scheduling-Signalisierung mittels des UE und Durchführen der Datenübertragung in Übereinstimmung mit der empfangenen weiteren Scheduling-Signalisierung.

3.  Signalübertragungsverfahren nach Anspruch 2, wobei das Referenzsignal für die Messung auf einem Symbol eines orthogonalen Frequenzmultiplexverfahrens, OFDM, auf dem aktuell Synchronisationssignale übertragen werden, und unter Verwendung sämtlicher Frequenzbereichsressourcen außer den von den Synchronisationssignalen belegten Frequenzbereichsressourcen übertragen wird, oder

das Referenzsignal für die Messung auf einem OFDM-Symbol, auf dem aktuell Synchronisationssignale übertragen werden, und unter Verwendung anderer Teile der Frequenzbereichsressourcen als die von den Synchronisationssignalen belegten Frequenzbereichsressourcen übertragen wird, oder

das Referenzsignal für die Messung auf einem OFDM-Symbol übertragen wird, das an das OFDM-Symbol, auf dem aktuell Synchronisationssignale übertragen werden, angrenzt oder durch ein festes Zeitbereichsintervall davon getrennt ist, und das Referenzsignal für die Messung und mindestens ein Synchronisationssignal in den Synchronisationssignalen innerhalb eines identischen Subframes übertragen werden, oder

das Referenzsignal für die Messung das Synchronisationssignale ist, und/oder,

wobei Sequenzen des Referenzsignals für die Messung zumindest in Verbindung mit einem Identifikator, ID, eines Trägers oder einer Zelle, auf der das Referenzsignal aktuell übertragen wird, erzeugt werden, oder

in dem Fall, dass das Referenzsignal für die Messung zur Messung der Empfangsleistung des Referenzsignals RSRP, und/oder der Kanalzustandsinformationen, CSI, verwendet wird, Sequenzen des Referenzsignals für die Messung zumindest in Verbindung mit einer ID eines Trägers oder einer Zelle, auf dem/der das Referenzsignal aktuell übertragen wird, erzeugt werden, oder

Sequenzen des Referenzsignals für die Messung Sequenzen eines UE-spezifischen oder zellenspezifischen Messreferenzsignals sind und durch Konfigurationssignalisierung vorkonfiguriert werden, oder

in dem Fall, dass das Referenzsignal für die Messung zur Messung der CSI verwendet wird, Sequenzen des Referenzsignals für die Messung Sequenzen eines UE-spezifischen oder zellenspezifischen Messreferenzsignals sind und durch Konfigurationssignalisierung vorkonfiguriert werden, und/oder,

wobei das Referenzsignal für die Messung für mindestens eines aus RSRP-Messung, Reference-Signal-Received-Quality-, RSRQ, Messung, Positionsmessung, Tracking-Messung und CSI-Messung verwendet wird.

4. Signalübertragungsverfahren nach Anspruch 3, wobei der Schritt des Detektierens, mittels des UE, des Synchronisationssignals, das der ID des Trägers oder der Zelle entspricht, in Übereinstimmung mit der ID des Trägers oder der Zelle, der/die durch Konfigurationssignalisierung vorkonfiguriert wird, umfasst:

Detektieren, mittels des UE, des Synchronisationssignals, das der ID des Trägers oder der Zelle entspricht, in jedem Subframe oder einem vorbestimmten Subframe, in dem das Synchronisationssignal in Übereinstimmung mit der ID des Trägers oder der Zelle, der/die durch die Konfigurationssignalisierung vorkonfiguriert wird, übertragen werden soll; und/oder der Schritt des Detektierens, mittels des UE, der dedizierten Sequenzen, die durch die Konfigurationssignalisierung vorkonfiguriert werden, umfasst:

Detektieren, mittels des UE, der dedizierten Sequenzen in jedem Subframe oder einem vorbestimmten Subframe, wobei der vorbestimmte Subframe ein bestimmter Subframe ist, der durch die Konfigurationssignalisierung vorkonfiguriert wird, oder ein Subframe ist, der in Übereinstimmung mit einem Detektionszeitraum oder dem Detektionszeitraum und einem Subframe-Offset-Wert bestimmt wird, die durch die Konfigurationssignalisierung vorkonfiguriert werden, und/oder,

wobei die dedizierten Sequenzen Sequenzen eines bestimmten Referenzsignals für die Messung sind, das für das UE durch die Konfigurationssignalisierung vorkonfiguriert wird, und/oder

das UE die dedizierten Sequenzen mit Hilfe von Energieerfassung detektiert.

5. Signalübertragungsverfahren nach einem der Ansprüche 1, 3 und 4, wobei das Synchronisationssignal auf dem Träger oder der Zelle, der/die die vorbestimmte Spektrumsressource verwendet, und unter Verwendung eines Subframes und einer Frequenzbereichsressource übertragen wird, die in den Long-Term Evolution, LTE, Releases 8-11 für ein Frequenzduplex-, FDD, oder Zeitduplex-, TDD, System definiert sind; oder

das Synchronisationssignal auf ein erstes OFDM-Symbol oder die vorangehenden zwei OFDM-Symbole in einem Subframe abgebildet und über diese übertragen wird, der vordefiniert ist, um das Synchronisationssignal auf dem Träger oder der Zelle zu übertragen, der/die die vorbestimmte Spektrumsressource verwendet, oder in einem ersten verfügbaren Subframe auf dem Träger oder der Zelle, der/die die vorbestimmte Spektrumsressource verwendet; oder

das Synchronisationssignal auf ein erstes OFDM-Symbol oder die vorangehenden zwei OFDM-Symbole abgebildet und über diese übertragen wird, ohne ein anderes Referenzsignal, in einem Subframe, der vordefiniert ist, um das Synchronisationssignal auf dem Träger oder der Zelle zu übertragen, der/die die vorbestimmte Frequenzressource verwendet, oder in einem ersten verfügbaren Subframe auf dem Träger oder der Zelle, der/die die vorbestimmte Frequenzressource verwendet; oder

das Synchronisationssignal auf ein erstes OFDM-Symbol oder die vorangehenden zwei OFDM-Symbole, die keine Kontrollbereiche sind, in einem Subframe abgebildet und über diese übertragen wird, der vordefiniert ist, um das Synchronisationssignal auf dem Träger oder der Zelle zu übertragen, der/die die vorbestimmte Spektrumsressource verwendet, oder in einem ersten verfügbaren Subframe auf dem Träger oder der Zelle, der/die die vorbestimmte Spektrumsressource verwendet; oder

das Synchronisationssignal auf ein erstes OFDM-Symbol oder die vorangehenden zwei OFDM-Symbole, die keine Kontrollbereiche sind und ohne andere Referenzsignale, in einem Subframe abgebildet und über diese übertragen wird, um das Synchronisationssignal auf dem Träger oder der Zelle zu übertragen, der/die die vorbestimmte Spektrumsressource verwendet, oder in einem ersten verfügbaren Subframe auf dem Träger oder der Zelle, der/die die vorbestimmte Spektrumsressource verwendet; oder ein Subframe oder OFDM-Symbol zur Übertragung des Synchronisationssignals auf dem Träger oder der Zelle, der/die die vorbestimmte Spektrumsressource verwendet, im Voraus in Übereinstimmung mit der Konfigurationssignalisierung erfasst wird; oder ein Offset-Wert zur Übertragung des Synchronisationssignals auf dem Träger oder der Zelle, der/die die vorbestimmte Spektrumsressource verwendet, im Voraus in Übereinstimmung mit der Konfigurationssignalisierung erfasst wird, und das UE einen Subframe oder ein OFDM-Symbol zur Übertragung des Synchronisationssignals auf dem Träger oder der Zelle, der/die die vorbestimmte Spektrumsressource verwendet, in Übereinstimmung mit einer vordefinierten Position des Subframes oder OFDM-Symbols bestimmt, um das Synchronisationssignal und den Offset-Wert zu übertragen; und/oder das Synchronisationssignal ein primäres Synchronisationssignal, PSS, und/oder ein sekundäres Synchronisationssignal, SSS, aufweist.

6. Signalübertragungsverfahren nach einem der Ansprüche 1 bis 4, wobei

> eine Bandbreite des Trägers oder der Zelle, der/die die vorbestimmte Spektrumsressource verwendet, im Voraus durch die Konfigurationssignalisierung mitgeteilt wird, oder in dem Fall, dass die Bandbreite des Trägers oder der Zelle, der/die die vorbestimmte Spektrumsressource verwendet, unbekannt ist, das UE das Referenzsignal für die Messung empfängt und die Messung und eine vordefinierte Bandbreite in der Mitte des Trägers oder der Zelle durchführt, der/die die vorbestimmte Spektrumsressource verwendet, und die vordefinierte Bandbreite einen Wert von nicht weniger als 6 Ressourcenblöcken, RBs, oder einen Wert von nicht weniger als einer in einem LTE-System definierten Mindestbandbreite hat; und/oder der bedienenden Träger oder die bedienende Zelle ein sekundärer Träger oder eine sekundäre Zelle ist, die für das UE durch die Konfigurationssignalisierung vorkonfiguriert wird; und/oder der Träger oder die Zelle, der/die die vorbestimmte Spektrumsressource verwendet, ein sekundärer Träger oder eine sekundäre Zelle ist, der/die für das UE durch die Konfigurationssignalisierung vorkonfiguriert wird.

7. Signalübertragungsverfahren, das den folgenden Schritt umfasst:

> Übertragen, mittels einer Basisstation, eines Signals auf einem Träger oder einer Zelle, der/die eine vorbestimmte Spektrumsressource verwendet, wobei die vorbestimmte Spektrumsressource eine unlizenzierte Spektrumsressource ist und das Signal zumindest ein Beurteilungssignal aufweist, um mittels eines Benutzerendgeräts, UE, zu bestimmen, ob ein von dem UE empfangenes Signal auf dem Träger oder der Zelle, der/die die vorbestimmte Spektrumsressource verwendet, zu einem bedienenden Träger oder einer bedienenden Zelle des UE gehört oder nicht und ferner ein Referenzsignal für die Messung und/oder ein Datensignal aufweist, oder das Signal zumindest ein Beurteilungssignal aufweist, um mittels des UE zu bestimmen, ob ein von dem UE empfangenes Signal auf dem Träger oder der Zelle, der/die die vorbestimmte Spektrumsressource verwendet, zu einem bedienenden Träger oder einer bedienenden Zelle des UE gehört oder nicht oder zumindest das Beurteilungssignal und ein Datensignal aufweist, und wobei das Beurteilungssignal ferner für die Messung verwendet wird (S403); wobei das Beurteilungssignal ein Synchronisationssignal ist, das einem Identifikator, ID, des Träger oder der Zelle entspricht, der/die die vorbestimmte Spektrumsressource verwendet, und/oder das Beurteilungssignal dedizierte Sequenzen sind, die dem Träger oder der Zelle entsprechen, der/die die vorbestimmten Spektrumsressource oder dedizierte Sequenzen des UE nutzt.

8. Signalübertragungsverfahren nach Anspruch 7, das ferner umfasst:

> Bestimmen, mittels der Basisstation, ob eine aktuelle Kanalressource auf dem Träger oder der Zelle, der/die die vorbestimmte Spektrumsressource verwendet, frei ist; in dem Fall, dass die aktuelle Kanalressource frei ist, Übertragen, mittels der Basisstation, des Signals auf dem Träger oder der Zelle, der/die die vorbestimmte Spektrumsressource verwendet; und in dem Fall, dass die aktuelle Kanalressource belegt ist, Unterbinden, mittels der Basisstation, der Übertragung des Signals auf dem Träger oder der Zelle, der/die die vorbestimmte Spektrumsressource verwendet, oder Übertragen, mittels der Basisstation, des Signals auf dem Träger oder der Zelle, der/die die vorbestimmte Spektrumsressource verwendet, nach einem vorbestimmten Zeitraum, wobei der vorbestimmte Zeitraum eine Länge eines vordefinierten festen Wertes hat, oder die Länge des vorbestimmten Zeitraums dem UE im Voraus durch Signalisierung mitgeteilt wird, und/oder

wobei in dem Fall, dass das Beurteilungssignal das Synchronisationssignal ist, das der ID des Trägers oder der Zelle entspricht, der/die die vorbestimmte Spektrumsressource verwendet, und die Basisstation das Synchronisationssignal und das Referenzsignal für die Messung und/oder das Datensignal überträgt, oder das Synchronisationssignal überträgt, oder das Synchronisationssignal und das Datensignal überträgt, auf dem Träger oder der Zelle, der/die die vorbestimmte Spektrumsressource verwendet,

wobei die Basisstation das Synchronisationssignal in jedem Subframe oder in einem vorbestimmten Subframe, in dem das Synchronisationssignal zu übertragen ist, auf dem Träger oder der Zelle überträgt, der/die die vorbestimmte Spektrumsressource verwendet, und die ID des Trägers oder der Zelle, der/die die vorbestimmte Spektrumsressource verwendet, durch eine Master-Basisstation für das UE durch Konfigurationssignalisierung vorkonfiguriert wird; oder die Basisstation das Synchronisationssignal in jedem Subframe oder in einem vorbestimmten Subframe, in dem das Synchronisationssignal zu übertragen ist, auf dem Träger oder der Zelle überträgt, der/die die vorbestimmte Spektrumsressource verwendet, und die ID des Trägers oder der Zelle, der/die die vorbestimmte Spektrumsressource verwendet, durch die Basisstation für das UE durch Konfigurationssignalisierung vorkonfiguriert wird; oder die Basisstation das Synchronisationssignal in jedem Subframe oder in einem vorbestimmten Subframe, in dem das Synchronisationssignal zu übertragen ist, auf dem Träger oder der Zelle, der/die die vorbestimmte Spektrumsressource verwendet, überträgt, und die ID des Trägers oder der Zelle, der/die die vorbestimmte Spektrumsressource verwendet, von der Basisstation einer Master-Basisstation im Voraus mitgeteilt wird und von der Master-Basisstation für das UE durch die Konfigurationssignalisierung vorkonfiguriert wird; und/oder

in einem Fall, in dem das Beurteilungssignal die dedizierten Sequenzen sind, die dem Träger oder der Zelle entsprechen, der/die die vorbestimmten Spektrumsressourcen oder dedizierte Sequenzen des UE verwendet, und die Basisstation die dedizierten Sequenzen und ein Referenzsignal für die Messung und/oder ein Datensignal überträgt, oder die dedizierten Sequenzen überträgt, oder die dedizierten Sequenzen und das Datensignal überträgt, auf dem Träger oder der Zelle, der/die die vorbestimmten Spektrumsressourcen verwendet, wobei die Basisstation die dedizierten Sequenzen in jedem Subframe oder einem vordefinierten Subframe auf dem Träger oder der Zelle überträgt, der/die die vorbestimmte Spektrumsressource verwendet, die dedizierten Sequenzen von einer Master-Basisstation für das UE durch Konfigurationssignalisierung vorkonfiguriert werden und der vordefinierte Subframe ein bestimmter Subframe ist, der durch die Konfigurationssignalisierung vorkonfiguriert wird, oder ein Subframe ist, der in Übereinstimmung mit einem Erfassungszeitraum oder dem Erfassungszeitraum und einem Subframe-Offset-Wert bestimmt wird, der durch die Konfigurationssignalisierung vorkonfiguriert wird;

oder die Basisstation die dedizierten Sequenzen in jedem Subframe oder einem vordefinierten Subframe auf dem Träger oder der Zelle überträgt, der/die die vorbestimmte Spektrumsressource verwendet, wobei die dedizierten Sequenzen für das UE durch die Konfigurationssignalisierung vorkonfiguriert werden, und wobei der vorbestimmte Subframe ein bestimmter Subframe ist, der durch die Konfigurationssignalisierung vorkonfiguriert wird, oder ein Subframe ist, der in Übereinstimmung mit einem Erfassungszeitraum oder dem Erfassungszeitraum und einem Subframe-Offset-Wert bestimmt wird, die durch die Konfigurationssignalisierung vorkonfiguriert werden;

oder die Basisstation die dedizierten Sequenzen in jedem Subframe oder einem vordefinierten Subframe auf dem Träger oder der Zelle übertragen, der/die die vorbestimmte Spektrumsressource verwendet, die dedizierten Sequenzen von der Basisstation an eine Master-Basisstation im Voraus mitgeteilt werden und von der Master-Basisstation für das UE durch Konfigurationssignalisierung vorkonfiguriert werden, und wobei der vordefinierte Subframe ein bestimmter Subframe ist, der durch die Konfigurationssignalisierung vorkonfiguriert wird, oder ein Subframe ist, der in Übereinstimmung mit einem Erfassungszeitraum oder dem Erfassungszeitraum und einem Subframe-Offset-Wert bestimmt wird, die durch die Konfigurationssignalisierung vorkonfiguriert werden.

9. Signalübertragungsverfahren nach Anspruch 8, wobei das Referenzsignal für die Messung auf einem Symbol eines orthogonalen Frequenzmultiplexverfahrens, OFDM, und unter Verwendung sämtlicher Frequenzbereichsressourcen außer den von den Synchronisationssignalen belegten Frequenzbereichsressourcen übertragen wird, oder das Referenzsignal für die Messung auf einem OFDM-Symbol, auf dem aktuell Synchronisationssignale übertragen werden, und unter Verwendung von Teilen der Frequenzbereichsressourcen außer den von den Synchronisationssignalen belegten Frequenzbereichsressourcen übertragen wird, oder das Referenzsignal für die Messung auf einem OFDM-Symbol übertragen wird, das an das OFDM-Symbol, auf dem aktuell Synchronisationssignale übertragen werden, angrenzt oder durch ein festes Zeitbereichsintervall davon getrennt ist, und das Referenzsignal für die Messung und mindestens ein Synchronisationssignal in den Synchronisationssignalen innerhalb eines identischen Subframes übertragen werden, oder das Referenzsignal für die Messung das Synchronisationssignal ist; und/oder

Sequenzen des Referenzsignals für die Messung zumindest in Verbindung mit einem Identifikator, ID, eines Trägers oder einer Zelle, auf dem/der das Referenzsignal aktuell übertragen wird, erzeugt werden, oder in dem Fall, dass das Referenzsignal für die Messung zur Messung der Empfangsleistung des Referenzsignals RSRP, und/oder der Kanalzustandsinformationen, CSI, verwendet wird, Sequenzen des Referenzsignals für die Messung zumindest in Verbindung mit einer ID eines Trägers oder einer Zelle, auf dem/der das Referenzsignal aktuell übertragen wird, erzeugt werden, oder Sequenzen des Referenzsignals für die Messung Sequenzen eines UE-spezifischen oder zellenspezifischen Messreferenzsignals sind und durch Konfigurationssignalisierung vorkonfiguriert werden, oder in dem Fall, dass das Referenzsignal für die Messung zur Messung der CSI verwendet wird, Sequenzen des Referenzsignals für die Messung Sequenzen eines UE-spezifischen oder zellenspezifischen Messreferenzsignals sind und durch Konfigurationssignalisierung vorkonfiguriert werden; und/oder
das Referenzsignal für die Messung für mindestens eines aus RSRP-Messung, Reference-Signal-Received-Quality-, RSRQ, Messung, Positionsmessung, Tracking-Messung und CSI-Messung verwendet wird; und/oder
die dedizierten Sequenzen Sequenzen eines bestimmten Referenzsignals für die Messung sind, das für das UE durch die Konfigurationssignalisierung vorkonfiguriert wird, und/oder
wobei das Synchronisationssignal auf dem Träger oder der Zelle, der/die die vorbestimmte Spektrumsressource verwendet, und unter Verwendung eines Subframes und einer Frequenzbereichsressource übertragen wird, die in den Long-Term Evolution, LTE, Releases 8-11 für ein Frequenzduplex-, FDD, oder Zeitduplex-, TDD, System definiert sind; oder

das Synchronisationssignal auf ein erstes OFDM-Symbol oder die vorangehenden zwei OFDM-Symbole in einem Subframe abgebildet und über diese übertragen wird, der vordefiniert ist, um das Synchronisationssignal auf dem Träger oder der Zelle zu übertragen, der/die die vorbestimmte Spektrumsressource verwendet, oder in einem ersten verfügbaren Subframe auf dem Träger oder der Zelle, der/die die vorbestimmte Spektrumsressource verwendet; oder
das Synchronisationssignal auf ein erstes OFDM-Symbol oder die vorangehenden zwei OFDM-Symbole abgebildet und über diese übertragen wird, ohne ein anderes Referenzsignal, in einem Subframe, der vordefiniert ist, um das Synchronisationssignal auf dem Träger oder der Zelle zu übertragen, der/die die vorbestimmte Frequenzressource verwendet, oder in einem ersten verfügbaren Subframe auf dem Träger oder der Zelle, der/die die vorbestimmte Frequenzressource verwendet; oder
das Synchronisationssignal auf ein erstes OFDM-Symbol oder die vorangehenden zwei OFDM-Symbole, die keine Kontrollbereiche sind, in einem Subframe abgebildet und über diese übertragen wird, der vordefiniert ist, um das Synchronisationssignal auf dem Träger oder der Zelle zu übertragen, der/die die vorbestimmte Spektrumsressource verwendet, oder in einem ersten verfügbaren Subframe auf dem Träger oder der Zelle, der/die die vorbestimmte Spektrumsressource verwendet; oder
das Synchronisationssignal auf ein erstes OFDM-Symbol oder die vorangehenden zwei OFDM-Symbole, die keine Kontrollbereiche sind und ohne andere Referenzsignale, in einem Subframe abgebildet und über diese übertragen wird, um das Synchronisationssignal auf dem Träger oder der Zelle zu übertragen, der/die die vorbestimmte Spektrumsressource verwendet, oder in einem ersten verfügbaren Subframe auf dem Träger oder der Zelle, der/die die vorbestimmte Spektrumsressource verwendet; oder
der Subframe oder das OFDM-Symbol zur Übertragung des Synchronisationssignals auf dem Träger oder der Zelle, der/die die vorbestimmte Spektrumsressource verwendet, durch die Basisstation von einer Master-Basisstation im Voraus erfasst oder vordefiniert wird und von der Master-Basisstation dem UE im Voraus durch die Konfigurationssignalisierung mitgeteilt wird, oder der Subframe oder das OFDM-Symbol zur Übertragung des Synchronisationssignals auf dem Träger oder der Zelle, der/die die vorbestimmte Spektrumsressource verwendet, von der Basisstation vorbestimmt und von der Basisstation einer Master-Basisstation im Voraus mitgeteilt wird, und dem UE von der Master-Basisstation im Voraus durch die Konfigurationssignalisierung mitgeteilt wird, oder der Subframe oder das OFDM-Symbol zur Übertragung des Synchronisationssignals auf dem Träger oder der Zelle, der/die die vorbestimmte Spektrumsressource verwendet, von der Basisstation vorbestimmt und von der Basisstation dem UE im Voraus durch die Konfigurationssignalisierung mitgeteilt wird; oder

der Subframe oder das OFDM-Symbol zur Übertragung des Synchronisationssignals in Übereinstimmung mit einer vordefinierten Position des Subframes oder OFDM-Symbols und einem Offset-Wert zur Übertragung des Synchronisationssignals auf dem Träger oder der Zelle bestimmt wird, der/die die vorbestimmte Spektrumsressource verwendet, wobei der Offset-Wert durch die Basisstation von einer Master-Basisstation erfasst oder vordefiniert wird und von der Master-Basisstation dem UE im Voraus durch die Konfigurationssignalisierung mitgeteilt wird, oder der Offset-Wert von der Basisstation vorbestimmt und einer Master-Basisstation im Voraus mitgeteilt wird, und von der Master-Basisstation dem UE im Voraus durch die Konfigurationssignalisierung mitgeteilt wird, oder der Offset-Wert von der Basisstation vorbestimmt und von der Basisstation dem UE im Voraus durch die Konfigurationssignalisierung mitgeteilt wird; und/oder

das Synchronisationssignal ein primäres Synchronisationssignal, PSS, und/oder ein sekundäres Synchronisationssignal, SSS, aufweist.

10. Signalübertragungsverfahren nach einem der Ansprüche 7 bis 9, wobei eine Bandbreite des Trägers oder der Zelle, der/die die vorbestimmte Spektrumsressource verwendet, von der Basisstation dem UE im Voraus durch Signalisierung mitgeteilt wird; oder die Bandbreite des Trägers oder der Zelle, der/die die vorbestimmte Spektrumsressource verwendet, von der Basisstation einer Master-Basisstation im Voraus mitgeteilt wird und von der Master-Basisstation dem UE im Voraus durch Signalisierung mitgeteilt wird; oder die Bandbreite des Trägers oder der Zelle, der/die die vorbestimmte Spektrumsressource verwendet, von der Master-Basisstation dem UE im Voraus durch Konfigurationssignalisierung mitgeteilt wird; oder in dem Fall, dass die Bandbreite des Trägers oder der Zelle, der/die die vorbestimmte Spektrumsressource verwendet, dem UE nicht im Voraus von der Basisstation oder der Master-Basisstation durch die Konfigurationssignalisierung mitgeteilt wird, bestimmt die Basisstation, dass das UE das Referenzsignal für die Messung empfängt und die Messung und eine vordefinierte Bandbreite in der Mitte des Trägers oder der Zelle durchführt, der/die die vorbestimmte Spektrumsressource verwendet, wobei die vordefinierte Bandbreite einen Wert von nicht weniger als 6 Ressourcenblöcken, RBs, oder einen Wert von nicht weniger als einer in einem LTE-System definierten Mindestbandbreite hat; und/oder der Träger oder die Zelle ein sekundärer Träger oder eine sekundäre Zelle ist, die für das UE durch die Konfigurationssignalisierung vorkonfiguriert wird.

11. Signalübertragungsvorrichtung, die aufweist:

ein Empfangsmodul (51), das dazu ausgebildet ist, ein Signal zu empfangen; und
ein Bestimmungsmodul (52), das dazu ausgebildet ist, in dem Fall, dass das Empfangsmodul das Signal auf einem Träger oder einer Zelle empfängt, der/die die vorbestimmte Spektrumsressource verwendet, zu bestimmen, ob das empfangene Signal zu einem bedienenden Träger oder einer bedienenden Zeller eines Benutzerendgeräts, UE, gehört oder nicht, wobei die vorbestimmte Spektrumsressource eine unlizenzierte Spektrumsressource ist, und das Empfangsmodul (51) ferner dazu ausgebildet ist, in dem Fall, dass das empfangene Signal zu dem dienenden Träger oder der dienenden Zelle des UE gehört, eine Messung und/oder Datenübertragung in Übereinstimmung mit dem empfangenen Signal und/oder einem nachfolgend empfangenen Signal durchzuführen;
wobei das Bestimmungsmodul (52) ferner dazu ausgebildet ist, mindestens eine der folgenden Verarbeitungen durchzuführen:

Detektieren eines Synchronisationssignals, das der ID des Trägers oder der Zelle entspricht, in Übereinstimmung mit der ID des Trägers oder der Zelle, der/die durch die Konfigurationssignalisierung vorkonfiguriert wird, und als Reaktion darauf, dass Synchronisationssignal detektiert wird, das der ID des Trägers oder der Zelle entspricht, Bestimmen, dass das empfangene Signal zu dem dienenden Träger oder der dienenden Zelle gehört; und
Detektieren dedizierter Sequenzen, die dem dienenden Träger oder der dienenden Zelle des UE entsprechen, oder dedizierter Sequenzen für das UE, die durch die Konfigurationssignalisierung vorkonfiguriert werden, und als Reaktion darauf, dass die dedizierten Sequenzen detektiert werden, Bestimmen, dass das empfangene Signal dem dienenden Träger oder der dienenden Zelle gehört.

12. Signalübertragungsvorrichtung nach Anspruch 11, wobei das Empfangsmodul (51) ferner dazu ausgebildet ist, mindestens eine der folgenden Verarbeitungen durchzuführen:

Durchführen der Messung mittels des UE in Übereinstimmung mit einem empfangenen Referenzsignal für die Messung;

Empfangen eines weiteren Referenzsignals für eine Messung, und Durchführen der Messung in Übereinstimmung mit dem empfangenen weiteren Referenzsignal für die Messung;

Durchführen der Datenübertragung in Übereinstimmung mit der empfangenen Scheduling-Signalisierung; und

Empfangen weiterer Scheduling-Signalisierung und Durchführen der Datenübertragung in Übereinstimmung mit der empfangenen weiteren Scheduling-Signalisierung.

13. Signalübertragungsvorrichtung nach Anspruch 12, wobei das Empfangsmodul (51) ferner für Folgendes ausgebildet ist:

Empfangen des Referenzsignals für die Messung auf einem Symbol eines orthogonalen Frequenzmultiplexverfahrens, OFDM, auf dem aktuell Synchronisationssignale übertragen werden, und unter Verwendung sämtlicher Frequenzbereichsressourcen außer den von den Synchronisationssignalen belegten Frequenzbereichsressourcen, oder Empfangen des Referenzsignals für die Messung auf einem OFDM-Symbol, auf dem aktuell Synchronisationssignale übertragen werden, und unter Verwendung von Teilen der Frequenzbereichsressourcen außer den von den Synchronisationssignalen belegten Frequenzbereichsressourcen, oder Empfangen des Referenzsignals für die Messung auf einem OFDM-Symbol, das an das OFDM-Symbol, auf dem aktuell Synchronisationssignale übertragen werden, angrenzt oder durch ein festes Zeitbereichsintervall davon getrennt ist, wobei das Referenzsignal für die Messung und mindestens ein Synchronisationssignal in den Synchronisationssignalen innerhalb eines identischen Subframes übertragen werden, oder Empfangen des Referenzsignals als das Referenzsignal für die Messung; und/oder wobei das Empfangsmodul (51) ferner dazu ausgebildet ist, Sequenzen des Referenzsignals für die Messung zumindest in Verbindung mit einem Identifikator, ID, eines Trägers oder einer Zelle, auf dem/der das Referenzsignal aktuell übertragen wird, zu erzeugen, oder in dem Fall, dass das Referenzsignal für die Messung zur Messung der Empfangsleistung des Referenzsignals, RSRP, und/oder der Kanalzustandsinformationen, CSI, verwendet wird, Sequenzen des Referenzsignals für die Messung zumindest in Verbindung mit einer ID eines Trägers oder einer Zelle, auf dem/der das Referenzsignal aktuell übertragen wird, zu erzeugen, oder Sequenzen eines UE-spezifischen oder zellenspezifischen Messreferenzsignals zu bestimmen und durch Konfigurationssignalisierung als Sequenzen des Referenzsignals für die Messung vorzukonfigurieren, oder in dem Fall, dass das Referenzsignal für die Messung zur Messung von CSI verwendet wird, Sequenzen eines UE-spezifischen oder zellenspezifischen Messreferenzsignals zu bestimmen und durch Konfigurationssignalisierung als Sequenzen des Referenzsignals für die Messung vorzukonfigurieren; und/oder

das Empfangsmodul (51) ferner dazu ausgebildet ist, mindestens eines aus RSRP-Messung, Reference-Signal-Received-Quality-, RSRQ, Messung, Positionsmessung, Tracking-Messung und CSI-Messung unter Verwendung des Referenzsignals für die Messung durchzuführen.

14. Signalübertragungsvorrichtung nach Anspruch 13, wobei in dem Fall, dass das Bestimmungsmodul (52) das Synchronisationssignal, das der ID des Trägers oder der Zelle entspricht, in Übereinstimmung mit der ID des Träger oder der Zelle detektiert, die durch die Konfigurationssignalisierung vorkonfiguriert werden, das Bestimmungsmodul (52) ferner dazu ausgebildet ist, das Synchronisationssignal zu detektieren, das der ID des Trägers oder der Zelle in jedem Subframe oder einem vorbestimmten Subframe entspricht, in dem das Synchronisationssignal in Übereinstimmung mit der ID des Träger oder der Zelle übertragen werden soll, die durch die Konfigurationssignalisierung vorkonfiguriert werden; und/oder

in dem Fall, dass das Bestimmungsmodul (52) die dedizierten Sequenzen detektiert, die durch die Konfigurationssignalisierung detektiert werden, das Bestimmungsmodul ferner dazu ausgebildet ist, die dedizierten Sequenzen in jedem Subframe oder einem vorbestimmten Subframe zu detektieren, und der vorbestimmte Subframe ein bestimmter Subframe ist, der durch die Konfigurationssignalisierung vorkonfiguriert wird, oder ein Subframe ist, der in Übereinstimmung mit einem Detektionszeitraum oder dem Detektionszeitraum und einem Subframe-Offset-Wert bestimmt wird, die durch die Konfigurationssignalisierung vorkonfiguriert werden, und/oder, wobei das Bestimmungsmodul (52) ferner dazu ausgebildet ist, Sequenzen eines bestimmten Referenzsignals für die Messung, das für das UE durch die Konfigurationssignalisierung vorkonfiguriert wird, als die dedizierten Sequenzen zu bestimmen, und/oder die dedizierten Sequenzen mit Hilfe von Energieerfassung zu detektieren.

15. Signalübertragungsvorrichtung nach einem der Ansprüche 12, 13 und 14, wobei

das Synchronisationssignal auf dem Träger oder der Zelle, der/die die vorbestimmte Spektrumsressource verwendet, und unter Verwendung eines Subframes und einer Frequenzbereichsressource übertragen wird, die in den Long-Term Evolution, LTE, Releases 8-11 für ein Frequenzduplex-, FDD, oder Zeitduplex-, TDD, System definiert sind; oder
das Synchronisationssignal auf ein erstes OFDM-Symbol oder die vorangehenden zwei OFDM-Symbole in einem Subframe abgebildet und über diese übertragen wird, der vordefiniert ist, um das Synchronisationssignal auf dem Träger oder der Zelle zu übertragen, der/die die vorbestimmte Spektrumsressource verwendet, oder in einem ersten verfügbaren Subframe auf dem Träger oder der Zelle, der/die die vorbestimmte Spektrumsressource verwendet; oder
das Synchronisationssignal auf ein erstes OFDM-Symbol oder die vorangehenden zwei OFDM-Symbole abgebildet und über diese übertragen wird, ohne ein anderes Referenzsignal, in einem Subframe, der vordefiniert ist, um das Synchronisationssignal auf dem Träger oder der Zelle zu übertragen, der/die die vorbestimmte Frequenzressource verwendet, oder in einem ersten verfügbaren Subframe auf dem Träger oder der Zelle, der/die die vorbestimmte Frequenzressource verwendet; oder
das Synchronisationssignal auf ein erstes OFDM-Symbol oder die vorangehenden zwei OFDM-Symbole, die keine Kontrollbereiche sind, in einem Subframe abgebildet und über diese übertragen wird, der vordefiniert ist, um das Synchronisationssignal auf dem Träger oder der Zelle zu übertragen, der/die die vorbestimmte Spektrumsressource verwendet, oder in einem ersten verfügbaren Subframe auf dem Träger oder der Zelle, der/die die vorbestimmte Spektrumsressource verwendet; oder
das Synchronisationssignal auf ein erstes OFDM-Symbol oder die vorangehenden zwei OFDM-Symbole, die keine Kontrollbereiche sind und ohne andere Referenzsignale, in einem Subframe abgebildet und über diese übertragen wird, um das Synchronisationssignal auf dem Träger oder der Zelle zu übertragen, der/die die vorbestimmte Spektrumsressource verwendet, oder in einem ersten verfügbaren Subframe auf dem Träger oder der Zelle, der/die die vorbestimmte Spektrumsressource verwendet; oder
ein Subframe oder OFDM-Symbol zur Übertragung des Synchronisationssignals auf dem Träger oder der Zelle, der/die die vorbestimmte Spektrumsressource verwendet, im Voraus in Übereinstimmung mit der Konfigurationssignalisierung erfasst wird; oder
ein Offset-Wert zur Übertragung des Synchronisationssignals auf dem Träger oder der Zelle, der/die die vorbestimmte Spektrumsressource verwendet, im Voraus in Übereinstimmung mit der Konfigurationssignalisierung erfasst wird, und das UE einen Subframe oder ein OFDM-Symbol zur Übertragung des Synchronisationssignals auf dem Träger oder der Zelle, der/die die vorbestimmte Spektrumsressource verwendet, in Übereinstimmung mit einer vordefinierten Position des Subframes oder OFDM-Symbols bestimmt, um das Synchronisationssignal und den Offset-Wert zu übertragen; und/oder
das Synchronisationssignal ein primäres Synchronisationssignal, PSS, und/oder ein sekundäres Synchronisationssignal, SSS, aufweist.

16. Signalübertragungsvorrichtung nach einem der Ansprüche 11 bis 14, wobei das Empfangsmodul (51) ferner dazu ausgebildet ist, zu bestimmen, dass eine Bandbreite des Trägers oder der Zelle, der/die die vorbestimmte Spektrumsressource verwendet, im Voraus durch die Konfigurationssignalisierung mitgeteilt wird, oder in dem Fall, dass die Bandbreite des Trägers oder der Zelle, der/die die vorbestimmte Spektrumsressource verwendet, unbekannt ist, das Referenzsignal für die Messung zu empfangen und die Messung und eine vordefinierte Bandbreite in der Mitte des Trägers oder der Zelle, der/die die vorbestimmte Spektrumsressource verwendet, durchzuführen, und wobei die vordefinierte Bandbreite einen Wert von nicht weniger als 6 Ressourcenblöcken, RBs, oder einen Wert von nicht weniger als einer in einem LTE-System definierten Mindestbandbreite hat; und/oder

das Empfangsmodul (51) ferner dazu ausgebildet ist, zu bestimmen, dass der Träger oder die Zelle ein sekundärer Träger oder eine sekundäre Zelle ist, die für das UE durch die Konfigurationssignalisierung vorkonfiguriert werden; und/oder
das Empfangsmodul (51) ferner dazu ausgebildet ist, zu bestimmen, dass der Träger oder die Zelle ein sekundärer Träger oder eine sekundäre Zelle ist, der/die für das UE durch die Konfigurationssignalisierung vorkonfiguriert wird; und/oder

17. Signalübertragungsvorrichtung für eine Basisstation, die aufweist:

ein Erzeugungsmodul (61), das dazu ausgebildet ist, ein Signal zu erzeugen; und

ein Übertragungsmodul (62), das dazu ausgebildet ist, das Signal auf einem Träger oder einer Zelle zu übertragen, der/die eine vorbestimmte Spektrumsressource verwendet, wobei die vorbestimmte Spektrumsressource eine unlizenzierte Spektrumsressource ist, und wobei das Signal zumindest ein Beurteilungssignal aufweist, um mittels eines Benutzerendgeräts, UE, zu bestimmen, ob ein von dem UE empfangenes Signal auf dem Träger oder der Zelle, der/die die vorbestimmte Spektrumsressource verwendet, zu einem bedienenden Träger oder einer bedienenden Zelle des UE gehört oder nicht und ferner ein Referenzsignal für die Messung und/oder ein Datensignal aufweist, oder das Signal zumindest ein Beurteilungssignal aufweist, um mittels des UE zu bestimmen, ob ein von dem UE empfangenes Signal auf dem Träger oder der Zelle, der/die die vorbestimmte Spektrumsressource verwendet, zu einem bedienenden Träger oder einer bedienenden Zelle des UE gehört oder nicht oder zumindest das Beurteilungssignal und ein Datensignal aufweist, und wobei das Beurteilungssignal ferner für die Messung verwendet wird,

wobei das Beurteilungssignal ein Synchronisationssignal ist, das einem Identifikator, ID, des Trägers oder der Zelle entspricht, der/die die vorbestimmte Spektrumsressource verwendet, und/oder

das Beurteilungssignal dedizierte Sequenzen sind, die dem Träger oder der Zelle entsprechen, der/die die vorbestimmten Spektrumsressource oder dedizierte Sequenzen des UE nutzt.

18. Signalübertragungsvorrichtung nach Anspruch 17, die ferner aufweist:

ein Beurteilungsmodul, das dazu ausgebildet ist, zu bestimmen, ob eine aktuelle Kanalressource auf dem Träger oder der Zelle frei ist, der/die die vorbestimmte Spektrumsressource verwendet,

wobei in dem Fall, dass die aktuelle Kanalressource frei ist, das Übertragungsmodul (62) ferner dazu ausgebildet ist, das Signal auf dem Träger oder der Zelle, der/die die vorbestimmte Spektrumsressource verwendet, zu übertragen, und in dem Fall, dass die aktuelle Kanalressource belegt ist, das Übertragungsmodul (62) ferner dazu ausgebildet ist, die Übertragung des Signals auf dem Träger oder der Zelle, der/die die Spektrumsressource verwendet, zu unterbinden, oder das Signal auf dem Träger oder der Zelle, der/die die Spektrumsressource verwendet, nach einem vorbestimmten Zeitraum zu übertragen, wobei der vorbestimmte Zeitraum eine Länge eines vordefinierten festen Wertes hat, oder die Länge des vorbestimmten Zeitraums dem UE im Voraus durch Signalisierung mitgeteilt wird, und/oder

in dem Fall, dass das Beurteilungssignal ein Synchronisationssignal ist, das einem Identifikator, ID, des Trägers oder der Zelle entspricht, der/die die vorbestimmte Spektrumsressource verwendet, das Übertragungsmodul (62) ferner dazu ausgebildet ist, das Synchronisationssignal und das Referenzsignal für die Messung und/oder das Datensignal zu übertragen, oder das Synchronisationssignal zu übertragen, oder das Synchronisationssignal und das Datensignal zu übertragen, auf dem Träger oder der Zelle, der/die die vorbestimmte Spektrumsressource verwendet, wobei das Übertragungsmodul (62) ferner dazu ausgebildet ist, das Synchronisationssignal in jedem Subframe oder in einem vorbestimmten Subframe zu übertragen, in dem das Synchronisationssignal zu übertragen ist, auf dem Träger und der Zelle, der/die die vorbestimmte Spektrumsressource verwendet, und wobei die ID des Trägers oder der Zelle, der/die die vorbestimmte Spektrumsressource verwendet, von einer Master-Basisstation für das UE durch Konfigurationssignalisierung vorkonfiguriert wird; oder das Übertragungsmodul (62) ferner dazu ausgebildet ist, das Synchronisationssignal in jedem Subframe oder in einem vorbestimmten Subframe, in dem das Synchronisationssignal zu übertragen ist, auf dem Träger oder der Zelle zu übertragen, der/die die vorbestimmte Spektrumsressource verwendet, und die ID des Trägers oder der Zelle, der/die die vorbestimmte Spektrumsressource verwendet, von der Basisstation für das UE durch Konfigurationssignalisierung vorkonfiguriert wird; oder das Übertragungsmodul (62) ferner dazu ausgebildet ist, das Synchronisationssignal in jedem Subframe oder in einem vorbestimmten Subframe, in dem das Synchronisationssignal zu übertragen ist, auf dem Träger oder der Zelle, der/die die vorbestimmte Spektrumsressource verwendet, zu übertragen, und die ID des Trägers oder der Zelle, der/die die vorbestimmte Spektrumsressource verwendet, von der Basisstation einer Master-Basisstation im Voraus mitgeteilt wird und von der Master-Basisstation für das UE durch die Konfigurationssignalisierung vorkonfiguriert wird; und/oder in dem Fall, dass das Beurteilungssignal die dedizierten Sequenzen sind, die dem Träger oder der Zelle entsprechen, der/die die vorbestimmten Spektrumsressourcen oder dedizierte Sequenzen des UE verwendet, das Übertragungsmodul (62) dazu ausgebildet ist, die dedizierten Sequenzen und ein Referenzsignal für die Messung und/oder ein Datensignal zu übertragen, oder die dedizierten Sequenzen zu übertragen, oder die dedizierten Sequenzen und das Datensignal zu übertragen, auf dem Träger oder der Zelle, der/die die vorbestimmten Spektrumsressourcen verwendet, wobei das Übertragungsmodul (62) ferner dazu ausgebildet ist, die dedizierten Sequenzen in jedem Subframe oder einem vordefinierten Subframe auf dem Träger oder der Zelle, der/die die vorbestimmte Spektrumsressource verwendet, zu übertragen, wobei die dedizierten Sequenzen von einer Master-Basisstation für das UE durch Konfigurationssignalisierung vorkonfiguriert werden, und wobei der vordefinierte Subframe ein bestimmter Subframe ist, der durch die Konfigurationssignalisierung vorkonfiguriert wird, oder ein Subframe ist, der in Übereinstimmung mit einem Erfassungszeitraum oder dem Erfassungszeitraum und einem Subframe-Offset-Wert bestimmt wird, der durch die Konfigurationssignalisierung vorkonfiguriert wird; oder das Übertragungsmodul (62) ferner dazu ausgebildet ist, die dedizierten Sequenzen in jedem Subframe oder einem vordefinierten Subframe auf dem Träger oder der Zelle, der/die die vorbestimmte Spektrumsressource verwendet, zu übertragen, wobei die dedizierten Sequenzen von der Basisstation für das UE durch Konfigurationssignalisierung vorkonfiguriert werden, und wobei der vordefinierte Subframe ein bestimmter Subframe ist, der durch die Konfigurationssignalisierung vorkonfiguriert wird, oder ein Subframe ist, der in Übereinstimmung mit einem Erfassungszeitraum oder dem Erfassungszeitraum und einem Subframe-Offset-Wert bestimmt wird, die durch die Konfigurationssignalisierung vorkonfiguriert werden; oder das Übertragungsmodul (62) ferner dazu ausgebildet ist, die dedizierten Sequenzen in jedem Subframe oder einem vordefinierten Subframe auf dem Träger oder der Zelle, der/die die vorbestimmte Spektrumsressource verwendet, zu übertragen, die dedizierten Sequenzen von der Basisstation an eine Master-Basisstation im Voraus mitgeteilt werden und von der Master-Basisstation für das UE durch Konfigurationssignalisierung vorkonfiguriert werden, und wobei der vordefinierte Subframe ein bestimmter Subframe ist, der durch die Konfigurationssignalisierung vorkonfiguriert wird, oder ein Subframe ist, der in Übereinstimmung mit einem Erfassungszeitraum oder dem Erfassungszeitraum und einem Subframe-Offset-Wert bestimmt wird, die durch die Konfigurationssignalisierung vorkonfiguriert werden.

19. Signalübertragungsvorrichtung nach Anspruch 18, wobei das Übertragungsmodul (62) ferner dazu ausgebildet ist, das Referenzsignal für die Messung auf einem Symbol eines orthogonalen Frequenzmultiplexverfahrens, OFDM, auf dem aktuell Synchronisationssignal übertragen werden, und unter Verwendung sämtlicher Frequenzbereichsressourcen außer den von den Synchronisationssignalen belegten Frequenzbereichsressourcen zu übertragen, oder das Referenzsignal für die Messung auf einem OFDM-Symbol, auf dem aktuell Synchronisationssignale übertragen werden, und unter Verwendung von Teilen der Frequenzbereichsressourcen außer den von den Synchronisationssignalen belegten Frequenzbereichsressourcen zu übertragen, oder das Referenzsignal für die Messung auf einem OFDM-Symbol, das an das OFDM-Symbol, auf dem aktuell Synchronisationssignale übertragen werden, angrenzt oder durch ein festes Zeitbereichsintervall davon getrennt ist, zu übertragen, wobei das Referenzsignal für die Messung und mindestens ein Synchronisationssignal in den Synchronisationssignalen innerhalb eines identischen Subframes übertragen werden, oder das Referenzsignals als das Referenzsignal für die Messung zu übertragen; und/oder

das Erzeugungsmodul (61) ferner dazu ausgebildet ist, Sequenzen des Referenzsignals für die Messung zumindest in Verbindung mit einer ID eines Trägers oder einer Zelle, auf dem/der das Referenzsignal aktuell übertragen wird, zu erzeugen, oder in dem Fall, dass das Referenzsignal für die Messung zur Messung der Empfangsleistung des Referenzsignals, RSRP, und/oder der Kanalzustandsinformationen verwendet wird, Sequenzen des Referenzsignals für die Messung zumindest in Verbindung mit einer ID eines Trägers oder einer Zelle, auf dem/der das Referenzsignal aktuell übertragen wird, zu erzeugen, oder Sequenzen eines UE-spezifischen oder zellenspezifischen Messreferenzsignals zu bestimmen und durch Konfigurationssignalisierung als Sequenzen des Referenzsignals für die Messung vorzukonfigurieren, oder in dem Fall, dass das Referenzsignal für die Messung zur Messung von CSI verwendet wird, Sequenzen eines UE-spezifischen Messreferenzsignals zu bestimmen und durch Konfigurationssignalisierung als Sequenzen des Referenzsignals für die Messung vorzukonfigurieren; und/oder das Erzeugungsmodul (61) ferner dazu ausgebildet ist, mindestens eines aus RSRP-Messung, Reference-Signal-Received-Quality-, RSRQ, Messung, Positionsmessung, Tracking-Messung und CSI-Messung unter Verwendung des Referenzsignals für die Messung durchzuführen; und/oder das Erzeugungsmodul (61) ferner dazu ausgebildet ist, Sequenzen eines bestimmten Referenzsignals für die Messung zu bestimmen, das für das UE durch die Konfigurationssignalisierung vorkonfiguriert wird, und/oder
wobei das Übertragungsmodul (62) ferner dazu ausgebildet ist, zu bestimmen, dass:

das Synchronisationssignal auf dem Träger oder der Zelle, der/die die vorbestimmte Spektrumsressource verwendet, und unter Verwendung eines Subframes und einer Frequenzbereichsressource übertragen wird, die in den Long-Term Evolution, LTE, Releases 8-11 für ein Frequenzduplex-, FDD, oder Zeitduplex-, TDD, System definiert sind; oder
das Synchronisationssignal auf ein erstes OFDM-Symbol oder die vorangehenden zwei OFDM-Symbole in einem Subframe abgebildet und über diese übertragen wird, der vordefiniert ist, um das Synchronisationssignal auf dem Träger oder der Zelle zu übertragen, der/die die vorbestimmte Spektrumsressource verwendet, oder in einem ersten verfügbaren Subframe auf dem Träger oder der Zelle, der/die die vorbestimmte Spektrumsressource verwendet; oder
das Synchronisationssignal auf ein erstes OFDM-Symbol oder die vorangehenden zwei OFDM-Symbole abgebildet und über diese übertragen wird, ohne ein anderes Referenzsignal, in einem Subframe, der vordefiniert ist, um das Synchronisationssignal auf dem Träger oder der Zelle zu übertragen, der/die die vorbestimmte Frequenzressource verwendet, oder in einem ersten verfügbaren Subframe auf dem Träger oder der Zelle, der/die die vorbestimmte Frequenzressource verwendet; oder
das Synchronisationssignal auf ein erstes OFDM-Symbol oder die vorangehenden zwei OFDM-Symbole, die keine Kontrollbereiche sind, in einem Subframe abgebildet und über diese übertragen wird, der vordefiniert ist, um das Synchronisationssignal auf dem Träger oder der Zelle zu übertragen, der/die die vorbestimmte Spektrumsressource verwendet, oder in einem ersten verfügbaren Subframe auf dem Träger oder der Zelle, der/die die vorbestimmte Spektrumsressource verwendet; oder
das Synchronisationssignal auf ein erstes OFDM-Symbol oder die vorangehenden zwei OFDM-Symbole, die keine Kontrollbereiche sind und ohne andere Referenzsignale, in einem Subframe abgebildet und über diese übertragen wird, um das Synchronisationssignal auf dem Träger oder der Zelle zu übertragen, der/die die vorbestimmte Spektrumsressource verwendet, oder in einem ersten verfügbaren Subframe auf dem Träger oder der Zelle, der/die die vorbestimmte Spektrumsressource verwendet; oder
der Subframe oder das OFDM-Symbol zur Übertragung des Synchronisationssignals auf dem Träger oder der Zelle, der/die die vorbestimmte Spektrumsressource verwendet, durch die Basisstation von einer Master-Basisstation im Voraus erfasst oder vordefiniert wird und von der Master-Basisstation dem UE im Voraus durch die Konfigurationssignalisierung mitgeteilt wird, oder der Subframe oder das OFDM-Symbol zur Übertragung des Synchronisationssignals auf dem Träger oder der Zelle, der/die die vorbestimmte Spektrumsressource verwendet, von der Basisstation vorbestimmt und von der Basisstation einer Master-Basisstation im Voraus mitgeteilt wird, und dem UE von der Master-Basisstation im Voraus durch die Konfigurationssignalisierung mitgeteilt wird, oder der Subframe oder das OFDM-Symbol zur Übertragung des Synchronisationssignals auf dem Träger oder der Zelle, der/die die vorbestimmte Spektrumsressource verwendet, von der Basisstation vorbestimmt und von der Basisstation dem UE im Voraus durch die Konfigurationssignalisierung mitgeteilt wird; oder
der Subframe oder das OFDM-Symbol zur Übertragung des Synchronisationssignals auf dem Träger oder der Zelle, der/die die vorbestimmte Spektrumsressource verwendet, in Übereinstimmung mit einer vordefinierten Position des Subframes oder OFDM-Symbols und einem Offset-Wert zur Übertragung des Synchronisationssignals auf dem Träger oder der Zelle bestimmt wird, der/die die vorbestimmte Spektrumsressource verwendet, wobei der Offset-Wert durch die Basisstation von einer Master-Basisstation erfasst oder vordefiniert wird und von der Master-Basisstation dem UE im Voraus durch die Konfigurationssignalisierung mitgeteilt wird, oder der Offset-Wert von der Basisstation vorbestimmt und einer Master-Basisstation im Voraus mitgeteilt wird, und von der Master-Basisstation dem UE im Voraus durch die Konfigurationssignalisierung mitgeteilt wird, oder der Offset-Wert von der Basisstation vorbestimmt und von der Basisstation dem UE im Voraus durch die Konfigurationssignalisierung mitgeteilt wird; und/oder das Synchronisationssignal ein primäres Synchronisationssignal, PSS, und/oder ein sekundäres Synchronisationssignal, SSS, aufweist.

20. Signalübertragungsvorrichtung nach einem der Ansprüche 17 bis 19, wobei das Übertragungsmodul (62) ferner für Folgendes ausgebildet ist:

Mitteilen einer Bandbreite des Trägers oder der Zelle, der/die die vorbestimmte Spektrumsressource verwendet, an das UE im Voraus durch Signalisierung; oder Mitteilen der Bandbreite des Trägers oder der Zelle, der/die die vorbestimmte Spektrumsressource verwendet, an eine Master-Basisstation im Voraus, so dass die Master-Basisstation dem UE die Bandbreite im Voraus durch Signalisierung mitteilt; oder in dem Fall, dass die Bandbreite des Trägers oder der Zelle, der/die die vorbestimmte Spektrumsressource verwendet, dem UE nicht im Voraus von der Basisstation oder der Master-Basisstation durch die Konfigurationssignalisierung mitgeteilt wird, Bestimmen, dass das UE das Referenzsignal für die Messung empfängt und Durchführen der Messung und einer vordefinierten Bandbreite in der Mitte des Trägers oder der Zelle, der/die die vorbestimmte Spektrumsressource verwendet, wobei die vordefinierte Bandbreite einen Wert von nicht weniger als 6 Ressourcenblöcken (RBs) oder einen Wert von nicht weniger als einer in einem LTE-System definierten Mindestbandbreite hat; und/oder das Übertragungsmodul (62) ferner dazu ausgebildet ist, einen sekundären Träger oder eine sekundäre Zelle, der/die für das UE durch die Konfigurationssignalisierung vorkonfiguriert wird, als den dienenden Träger oder die dienende Zelle zu bestimmen.

## Revendications

1. Procédé de transmission de signal, comprenant les étapes consistant à :

recevoir, par un équipement utilisateur, UE, un signal sur une porteuse ou une cellule qui utilise une ressource de spectre prédéterminée, dans lequel la ressource de spectre prédéterminée est une ressource de spectre sans licence ; déterminer si le signal reçu appartient ou non à une porteuse de desserte ou à une cellule de desserte de l'UE (S301) ; et dans le cas où le signal reçu appartient à la porteuse de desserte ou à la cellule de desserte de l'UE, réaliser une mesure et/ou une transmission de données par l'UE conformément au signal reçu et/ou à un signal reçu ultérieurement (S303) ;

dans lequel l'étape de détermination par l'UE du fait que le signal reçu appartient ou non à la porteuse de desserte ou à la cellule de desserte comprend au moins l'une parmi :

la détection, par l'UE, d'un signal de synchronisation correspondant à l'ID de la porteuse ou de la cellule conformément à l'ID de la porteuse ou de la cellule préconfigurée par le biais de la signalisation de configuration et, en réponse à la détection du signal de synchronisation correspondant à l'ID de la porteuse ou de la cellule, la détermination du fait que le signal reçu appartient à la porteuse de desserte ou à la cellule de desserte ; la détection, par l'UE, de séquences dédiées correspondant à la porteuse de desserte ou à la cellule de desserte de l'UE ou de séquences dédiées pour l'UE préconfigurées par le biais de la signalisation de configuration et, en réponse à la détection des séquences dédiées, la détermination du fait que le signal reçu appartient à la porteuse de desserte ou à la cellule de desserte.

2. Procédé de transmission de signal selon la revendication 1, dans lequel l'étape de réalisation de la mesure et/ou de la transmission de données par l'UE conformément au signal reçu et/ou au signal reçu ultérieurement (S303) comprend au moins l'une parmi :

la réalisation de la mesure par l'UE conformément à un signal de référence reçu pour une mesure ; la réception par l'UE d'un autre signal de référence pour une mesure, et la réalisation de la mesure conformément à l'autre signal de référence reçu pour une mesure ; la réalisation de la transmission de données par l'UE conformément à une signalisation de planification reçue ; la réception par l'UE d'une autre signalisation de planification, et la réalisation de la transmission de données conformément à l'autre signalisation de planification reçue.

3. Procédé de transmission de signal selon la revendication 2, dans lequel le signal de référence pour une mesure est transmis sur un symbole de multiplexage par répartition orthogonale de la fréquence, OFDM, sur lequel des signaux de synchronisation sont actuellement transmis et à l'aide de toutes les ressources de domaine fréquentiel autres que les ressources de domaine fréquentiel occupées par les signaux de synchronisation, ou

le signal de référence pour une mesure est transmis sur un symbole OFDM sur lequel des signaux de synchronisation sont actuellement transmis et à l'aide de parties des ressources de domaine fréquentiel autres que les ressources de domaine fréquentiel occupées par les signaux de synchronisation, ou

le signal de référence pour une mesure est transmis sur un symbole OFDM adjacent au, ou séparé par un intervalle de domaine temporel fixe du, symbole OFDM sur lequel des signaux de synchronisation sont actuellement transmis, et le signal de référence pour une mesure et au moins un signal de synchronisation dans les signaux de synchronisation sont transmis dans une sous-trame identique, ou

le signal de référence pour une mesure est le signal de synchronisation, et/ou, dans lequel des séquences du signal de référence pour une mesure sont générées au moins en association avec un identificateur, ID, d'une porteuse ou d'une cellule sur laquelle le signal de référence est actuellement transmis, ou

dans le cas où le signal de référence pour une mesure est utilisé pour mesurer une puissance reçue de signal de référence, RSRP, et/ou des informations d'état de canal, CSI, des séquences du signal de référence pour une mesure sont générées au moins en association avec un ID d'une porteuse ou d'une cellule sur laquelle le signal de référence est actuellement transmis, ou

des séquences du signal de référence pour une mesure sont des séquences d'un signal de référence de mesure spécifique à l'UE ou spécifique à la cellule et préconfigurées par signalisation de configuration, ou

dans le cas où le signal de référence pour une mesure est utilisé pour mesurer des CSI, des séquences du signal de référence pour une mesure sont des séquences d'un signal de référence de mesure spécifique à l'UE ou spécifique à la cellule et préconfigurées par le biais d'une signalisation de configuration, et/ou,

dans lequel le signal de référence pour une mesure est utilisé pour au moins l'une parmi une mesure de RSRP, une mesure de qualité reçue de signal de référence, RSRQ, une mesure de positionnement, une mesure de suivi et une mesure de CSI.

4. Procédé de transmission de signal selon la revendication 3, dans lequel l'étape de détection, par l'UE, du signal de synchronisation correspondant à l'ID de la porteuse ou de la cellule conformément à l'ID de la porteuse ou de la cellule préconfigurée par le biais de la signalisation de configuration comprend :

la détection, par l'UE, du signal de synchronisation correspondant à l'ID de la porteuse ou de la cellule dans chaque sous-trame ou une sous-trame prédéterminée dans laquelle le signal de synchronisation doit être transmis conformément à l'ID de la porteuse ou de la cellule préconfigurée par le biais de la signalisation de configuration ; et/ou

l'étape de détection, par l'UE, des séquences dédiées préconfigurées par le biais de la signalisation de configuration comprend :

la détection, par l'UE, des séquences dédiées dans chaque sous-trame ou une sous-trame prédéterminée, la sous-trame prédéterminée étant une sous-trame particulière préconfigurée par le biais de la signalisation de configuration, ou une sous-trame déterminée conformément à une période de détection, ou la période de détection et une valeur de décalage de sous-trame, préconfigurées par le biais de la signalisation de configuration, et/ou,

dans lequel les séquences dédiées sont des séquences d'un signal de référence particulier pour une mesure préconfigurées pour l'UE par le biais de la signalisation de configuration, et/ou

l'UE détecte les séquences dédiées d'une manière de détection d'énergie.

5. Procédé de transmission de signal selon l'une quelconque des revendications 1, 3 et 4, dans lequel

le signal de synchronisation est transmis sur la porteuse ou la cellule qui utilise la ressource de spectre prédéterminée et à l'aide d'une sous-trame et une ressource de domaine fréquentiel définies dans les versions 8 à 11 de la norme d'évolution à long terme, LTE, pour un système de duplex à répartition en fréquence, DRF, ou de duplex à répartition dans le temps, DRT ; ou

le signal de synchronisation est mis en correspondance avec et transmis sur un premier symbole OFDM ou les deux symboles OFDM précédents dans une sous-trame prédéfinie pour transmettre le signal de synchronisation sur la porteuse ou la cellule qui utilise la ressource de spectre prédéterminée, ou dans une première sous-trame disponible sur la porteuse ou la cellule qui utilise la ressource de spectre prédéterminée ; ou

le signal de synchronisation est mis en correspondance avec et transmis sur un premier symbole OFDM ou les deux symboles OFDM précédents, sans autre signal de référence, dans une sous-trame prédéfinie pour transmettre le signal de synchronisation sur la porteuse ou la cellule qui utilise la ressource de spectre prédéterminée, ou dans une première sous-trame disponible sur la porteuse ou la cellule qui utilise la ressource de spectre prédéterminée ; ou

le signal de synchronisation est mis en correspondance avec et transmis sur un premier symbole OFDM ou les deux symboles OFDM précédents, autre qu'une région de commande, dans une sous-trame prédéfinie pour transmettre le signal de synchronisation sur la porteuse ou la cellule qui utilise la ressource de spectre prédéterminée, ou dans une première sous-trame disponible sur la porteuse ou la cellule qui utilise la ressource de spectre prédéterminée ; ou

le signal de synchronisation est mis en correspondance avec et transmis sur un premier symbole OFDM ou les deux symboles OFDM précédents, autre qu'une région de commande et sans autre signal de référence, dans une sous-trame pour transmettre le signal de synchronisation sur la porteuse ou la cellule qui utilise la ressource de spectre prédéterminée, ou dans une première sous-trame disponible sur la porteuse ou la cellule qui utilise la ressource de spectre prédéterminée ; ou

une sous-trame ou un symbole OFDM pour transmettre le signal de synchronisation sur la porteuse ou la cellule qui utilise la ressource de spectre prédéterminée est acquis à l'avance conformément à la signalisation de configuration ; ou

une valeur de décalage pour transmettre le signal de synchronisation sur la porteuse ou la cellule qui utilise la ressource de spectre prédéterminée est acquise à l'avance conformément à la signalisation de configuration, et l'UE détermine une sous-trame ou un symbole OFDM pour transmettre le signal de synchronisation sur la porteuse ou la cellule qui utilise la ressource de spectre prédéterminée conformément à une position prédéfinie de la sous-trame ou du symbole OFDM pour transmettre le signal de synchronisation et la valeur de décalage ; et/ou

le signal de synchronisation comprend un signal de synchronisation primaire, PSS, et/ou un signal de synchronisation secondaire, SSS.

**6.** Procédé de transmission de signal selon l'une quelconque des revendications 1 à 4, dans lequel

une largeur de bande de la porteuse ou de la cellule qui utilise la ressource de spectre prédéterminée est notifiée à l'avance par le biais de la signalisation de configuration, ou

dans le cas où la largeur de bande de la porteuse ou de la cellule qui utilise la ressource de spectre prédéterminée est inconnue, l'UE reçoit le signal de référence pour une mesure et réalise la mesure sur une largeur de bande prédéfinie au milieu de la porteuse ou de la cellule qui utilise la ressource de spectre prédéterminée, et la largeur de bande prédéfinie est d'une valeur au moins égale à 6 blocs de ressources, RB, ou d'une valeur au moins égale à une largeur de bande minimale définie dans un système LTE ; et/ou

la porteuse de desserte ou la cellule de desserte est une porteuse secondaire ou une cellule secondaire préconfigurée pour l'UE par le biais de la signalisation de configuration ; et/ou

la porteuse ou la cellule qui utilise la ressource de spectre prédéterminée est une porteuse secondaire ou une cellule secondaire préconfigurée pour l'UE par le biais de la signalisation de configuration.

**7.** Procédé de transmission de signal, comprenant une étape consistant à :

transmettre, par une station de base, un signal sur une porteuse ou une cellule qui utilise une ressource de spectre prédéterminée, dans lequel la ressource de spectre prédéterminée est une ressource de spectre sans licence et le signal comprend au moins un signal d'évaluation pour déterminer, par un équipement utilisateur, UE, si un signal reçu par l'UE sur la porteuse ou la cellule qui utilise la ressource de spectre prédéterminée appartient ou non à une porteuse de desserte ou une cellule de desserte de l'UE et comprend en outre un signal de référence pour une mesure et/ou un signal de données, ou le signal comprend au moins un signal d'évaluation pour déterminer, par l'UE, si un signal reçu par l'UE sur la porteuse ou la cellule qui utilise la ressource de spectre prédéterminée appartient ou non à une porteuse de desserte ou à une cellule de desserte de l'UE ou au moins comporte le signal d'évaluation et un signal de données, et le signal d'évaluation est en outre utilisé pour une mesure (S403) ;

dans lequel le signal d'évaluation est un signal de synchronisation correspondant à un identificateur, ID, de la porteuse ou de la cellule qui utilise la ressource de spectre prédéterminée, et/ou

le signal d'évaluation est constitué de séquences dédiées correspondant à la porteuse ou à la cellule qui utilise les ressources de spectre prédéterminées ou des séquences dédiées de l'UE.

**8.** Procédé de transmission de signal selon la revendication 7, comprenant en outre :

le fait de déterminer, par la station de base, si une ressource de canal actuelle sur la porteuse ou la cellule qui utilise la ressource de spectre prédéterminée est libre ou non ;

dans le cas où la ressource de canal actuelle est libre, la transmission, par la station de base, du signal sur la porteuse ou la cellule qui utilise la ressource de spectre prédéterminée ; et

dans le cas où la ressource de canal actuelle est occupée, l'interdiction, par la station de base, de la transmission du signal sur la porteuse ou la cellule qui utilise la ressource de spectre prédéterminée, ou la transmission, par la station de base, du signal sur la porteuse ou la cellule qui utilise la ressource de spectre prédéterminée après une période de temps prédéterminée, dans lequel la période de temps prédéterminée a une longueur d'une valeur fixe prédéfinie, ou la longueur de la période de temps prédéterminée est notifiée à l'UE à l'avance par le biais de la signalisation, et/ou

dans lequel, dans le cas où le signal d'évaluation est le signal de synchronisation correspondant à l'ID de la porteuse ou de la cellule qui utilise la ressource de spectre prédéterminée, et que la station de base transmet le signal de synchronisation et le signal de référence pour une mesure et/ou le signal de données, ou transmet le signal de synchronisation, ou transmet le signal de synchronisation et le signal de données, sur la porteuse ou la cellule qui utilise la ressource de spectre prédéterminée, dans lequel la station de base transmet le signal de synchronisation dans chaque sous-trame, ou dans une sous-trame prédéterminée dans laquelle le signal de synchronisation doit être transmis, sur la porteuse ou la cellule qui utilise la ressource de spectre prédéterminée, et l'ID de la porteuse ou de la cellule qui utilise la ressource de spectre prédéterminée est préconfiguré par une station de base principale pour l'UE par le biais d'une signalisation de configuration ; ou la station de base transmet le signal de synchronisation dans chaque sous-trame, ou dans une sous-trame prédéterminée dans laquelle le signal de synchronisation doit être transmis, sur la porteuse ou la cellule qui utilise la ressource de spectre prédéterminée, et l'ID de la porteuse ou de la cellule qui utilise la ressource de spectre prédéterminée est préconfiguré par la station de base pour l'UE par le biais d'une signalisation de configuration ; ou la station de base transmet le signal de synchronisation dans chaque sous-trame, ou dans une sous-trame prédéterminée dans laquelle le signal de synchronisation doit être transmis, sur la porteuse ou la cellule qui utilise la ressource de spectre prédéterminée, et l'ID de la porteuse ou de la cellule qui utilise la ressource de spectre prédéterminée est notifiée à l'avance par la station de base à une station de base principale et préconfigurée par la station de base principale pour l'UE par le biais de la signalisation de configuration ; et/ou

dans un cas où le signal d'évaluation est constitué les séquences dédiées correspondant à la porteuse ou à la cellule qui utilise les ressources de spectres prédéterminées ou des séquences dédiées de l'UE, et la station de base transmet les séquences dédiées et un signal de référence pour une mesure et/ou un signal de données, ou transmet les séquences dédiées, ou transmet les séquences dédiées et le signal de données, sur la porteuse ou la cellule qui utilise les ressources de spectres prédéterminées, dans lequel la station de base transmet les séquences dédiées dans chaque sous-trame ou une sous-trame prédéfinie sur la porteuse ou la cellule qui utilise la ressource de spectre prédéterminée, les séquences dédiées sont préconfigurées par une station de base principale pour l'UE par le biais d'une signalisation de configuration, et la sous-trame prédéfinie est une sous-trame particulière préconfigurée par le biais de la signalisation de configuration ou d'une sous-trame déterminée conformément à une période de détection, ou la période de détection et une valeur de décalage de sous-trame, préconfigurées par le biais de la signalisation de configuration ; ou la station de base transmet les séquences dédiées dans chaque sous-trame ou une sous-trame prédéfinie sur la porteuse ou la cellule qui utilise la ressource de spectre prédéterminée, les séquences dédiées sont préconfigurées pour l'UE par le biais de la signalisation de configuration, et la sous-trame prédéfinie est une sous-trame particulière préconfigurée par le biais de la signalisation de configuration ou d'une sous-trame déterminée conformément à une période de détection, ou la période de détection et une valeur de décalage de sous-trame, préconfigurées par le biais de la signalisation de configuration ; ou la station de base transmet les séquences dédiées dans chaque sous-trame ou une sous-trame prédéfinie sur la porteuse ou la cellule qui utilise la ressource de spectre prédéterminée, les séquences dédiées sont notifiées à l'avance par la station de base à une station de base principale et préconfigurées par la station de base principale pour l'UE par le biais de la signalisation de configuration, et la sous-trame prédéfinie est une sous-trame particulière préconfigurée par le biais de la signalisation de configuration ou d'une sous-trame déterminée conformément à une période de détection, ou la période de détection et une valeur de décalage de sous-trame, préconfigurées par le biais de la signalisation de configuration.

9. Procédé de transmission de signal selon la revendication 8, dans lequel le signal de référence pour une mesure est transmis sur un symbole de multiplexage par répartition orthogonale de la fréquence, OFDM, sur lequel des signaux de synchronisation sont actuellement transmis, et à l'aide de toutes les ressources de domaine fréquentiel autres que les ressources de domaine fréquentiel occupées par les signaux de synchronisation, ou le signal de référence pour mesure est transmis sur un symbole OFDM sur lequel des signaux de synchronisation sont actuellement transmis et à l'aide de parties des ressources de domaine fréquentiel autres que les ressources de domaine fréquentiel occupées par les signaux de synchronisation, ou le signal de référence pour une mesure est transmis sur un symbole OFDM adjacent au, ou séparé par un intervalle de domaine temporel fixe du, symbole OFDM sur lequel des signaux de synchronisation sont actuellement transmis et le signal de référence pour une mesure et au moins un signal de synchronisation dans les signaux de synchronisation sont transmis à l'intérieur d'une sous-trame identique, ou le signal de référence pour une mesure est le signal de synchronisation ; et/ou

des séquences du signal de référence pour une mesure sont générées au moins en association avec un ID d'une porteuse ou d'une cellule sur laquelle le signal de référence est actuellement transmis, ou dans le cas où le signal de référence pour une mesure est utilisé pour mesurer une puissance reçue de signal de référence, RSRP, et/ou des informations d'état de canal, CSI, des séquences du signal de référence pour une mesure sont générées au moins en association avec l'ID d'une porteuse ou d'une cellule sur laquelle le signal de référence est actuellement transmis, ou des séquences du signal de référence pour une mesure sont des séquences d'un signal de référence de mesure spécifique à l'UE ou spécifique à la cellule et préconfigurées par une signalisation de configuration, ou dans le cas où le signal de référence pour une mesure est utilisé pour mesurer des CSI, des séquences du signal de référence pour une mesure sont des séquences d'un signal de référence de mesure spécifique à l'UE et préconfigurées par le biais d'une signalisation de configuration ; et/ou
le signal de référence pour une mesure est utilisé pour au moins l'une parmi une mesure de RSRP, une mesure de qualité reçue de signal de référence, RSRQ, une mesure de positionnement, une mesure de suivi et une mesure de CSI ; et/ou
les séquences dédiées sont des séquences d'un signal de référence particulier pour une mesure préconfigurées pour l'UE par le biais de la signalisation de configuration, et/ou,
dans lequel le signal de synchronisation est transmis sur la porteuse ou la cellule qui utilise la ressource de spectre prédéterminée et à l'aide d'une sous-trame et une ressource de domaine fréquentiel définies dans les versions 8 à 11 de la norme d'évolution à long terme, LTE, pour un système de duplex à répartition en fréquence, DRF, ou de duplex à répartition dans le temps, DRT ; ou
le signal de synchronisation est mis en correspondance avec et transmis sur un premier symbole OFDM ou les deux symboles OFDM précédents dans une sous-trame prédéfinie pour transmettre le signal de synchronisation sur la porteuse ou la cellule qui utilise la ressource de spectre prédéterminée, ou dans une première sous-trame disponible sur la porteuse ou la cellule qui utilise la ressource de spectre prédéterminée ; ou
le signal de synchronisation est mis en correspondance avec et transmis sur un premier symbole OFDM ou les deux symboles OFDM précédents, sans autre signal de référence, dans une sous-trame prédéfinie pour transmettre le signal de synchronisation sur la porteuse ou la cellule qui utilise la ressource de spectre prédéterminée, ou dans une première sous-trame disponible sur la porteuse ou la cellule qui utilise la ressource de spectre prédéterminée ; ou
le signal de synchronisation est mis en correspondance avec et transmis sur un premier symbole OFDM ou les deux symboles OFDM précédents, autre qu'une région de commande, dans une sous-trame prédéfinie pour transmettre le signal de synchronisation sur la porteuse ou la cellule qui utilise la ressource de spectre prédéterminée, ou dans une première sous-trame disponible sur la porteuse ou la cellule qui utilise la ressource de spectre prédéterminée ; ou
le signal de synchronisation est mis en correspondance avec et transmis sur un premier symbole OFDM ou les deux symboles OFDM précédents, autre qu'une région de commande et sans autre signal de référence, dans une sous-trame pour transmettre le signal de synchronisation sur la porteuse ou la cellule qui utilise la ressource de spectre prédéterminée, ou dans une première sous-trame disponible sur la porteuse ou la cellule qui utilise la ressource de spectre prédéterminée ; ou
la sous-trame ou le symbole OFDM pour transmettre le signal de synchronisation sur la porteuse ou la cellule qui utilise la ressource de spectre prédéterminée est acquis par la station de base à partir d'une station de base principale à l'avance ou prédéfini et notifié par la station de base principale à l'UE à l'avance par le biais de la signalisation de configuration, ou la sous-trame ou le symbole OFDM pour transmettre le signal de synchronisation sur la porteuse ou la cellule qui utilise la ressource de spectre prédéterminée est prédéterminé par la station de base et notifié par la station de base à une station de base principale à l'avance, et notifié à l'UE par la station de base principale à l'avance par le biais de la signalisation de configuration, ou la sous-trame ou le symbole OFDM pour transmettre le signal de synchronisation sur la porteuse ou la cellule qui utilise la ressource de spectre prédéterminée est prédéterminé par la station de base et notifié par la station de base à l'UE à l'avance par le biais de la signalisation de configuration ; ou

la sous-trame ou le symbole OFDM pour transmettre le signal de synchronisation est déterminé conformément à une position prédéfinie de la sous-trame ou du symbole OFDM et une valeur de décalage pour transmettre le signal de synchronisation sur la porteuse ou la cellule qui utilise la ressource de spectre prédéterminée, la valeur de décalage est acquise par la station de base à partir d'une station de base principale ou prédéfinie, et notifiée par la station de base principale à l'UE à l'avance par le biais de la signalisation de configuration, ou la valeur de décalage est prédéterminée par la station de base et notifiée à une station de base principale à l'avance, et notifiée par la station de base principale à l'UE à l'avance par le biais de la signalisation de configuration, ou la valeur de décalage est prédéterminée par la station de base et notifiée par la station de base à l'UE à l'avance par le biais de la signalisation de configuration ; et/ou

le signal de synchronisation comprend un signal de synchronisation primaire, PSS, et/ou un signal de synchronisation secondaire, SSS.

10. Procédé de transmission de signal selon l'une quelconque des revendications 7 à 9, dans lequel une largeur de bande de la porteuse ou de la cellule qui utilise la ressource de spectre prédéterminée est notifiée par la station de base à l'UE à l'avance par le biais d'une signalisation ; ou la largeur de bande de la porteuse ou de la cellule qui utilise la ressource de spectre prédéterminée est notifiée par la station de base à une station de base principale à l'avance, et notifiée par la station de base principale à l'UE à l'avance par le biais d'une signalisation ; ou la largeur de bande de la porteuse ou de la cellule qui utilise la ressource de spectre prédéterminée est notifiée par la station de base principale à l'UE à l'avance par le biais d'une signalisation de configuration ; ou dans le cas où la largeur de bande de la porteuse ou de la cellule qui utilise la ressource de spectre prédéterminée n'est pas notifiée par la station de base ou la station de base principale à l'UE à l'avance par le biais de la signalisation de configuration, la station de base détermine que l'UE reçoit le signal de référence pour une mesure et réalise la mesure sur une largeur de bande prédéfinie au milieu de la porteuse ou de la cellule qui utilise la ressource de spectre prédéterminée, dans lequel la largeur de bande prédéfinie est d'une valeur au moins égale à 6 blocs de ressources, RB, ou d'une valeur au moins égale à une largeur de bande minimale définie dans un système LTE ; et/ou

la porteuse ou la cellule est une porteuse secondaire ou une cellule secondaire préconfigurée pour l'UE par le biais de la signalisation de configuration.

11. Appareil de transmission de signal, comprenant :

un module de réception (51) configuré pour recevoir un signal ; et
un module de détermination (52) configuré pour, dans le cas où le module de réception reçoit le signal sur une porteuse ou une cellule qui utilise une ressource de spectre prédéterminée, déterminer si le signal reçu appartient ou non à une porteuse de desserte ou une cellule de desserte d'un équipement utilisateur, UE, dans lequel la ressource de spectre prédéterminée est une ressource de spectre sans licence, et
le module de réception (51) est en outre configuré pour, dans le cas où le signal reçu appartient à la porteuse de desserte ou à la cellule de desserte de l'UE, réaliser une mesure et/ou une transmission de données conformément au signal reçu et/ou à un signal reçu ultérieurement, dans lequel le module de détermination (52) est en outre configuré pour réaliser au moins l'un des traitements suivants :

la détection d'un signal de synchronisation correspondant à l'ID de la porteuse ou de la cellule conformément à l'ID de la porteuse ou de la cellule préconfigurée par le biais de la signalisation de configuration, et en réponse à la détection du signal de synchronisation correspondant à l'ID de la porteuse ou à la cellule, la détermination du fait que le signal reçu appartient à la porteuse de desserte ou à la cellule de desserte ; et
la détection de séquences dédiées correspondant à la porteuse de desserte ou à la cellule de desserte de l'UE ou de séquences dédiées pour l'UE préconfigurées par le biais de la signalisation de configuration, et en réponse à la détection des séquences dédiées, la détermination du fait que le signal reçu appartient à la porteuse de desserte ou à la cellule de desserte.

12. Appareil de transmission de signal selon la revendication 11, dans lequel le module de détermination (51) est configuré pour réaliser au moins l'un des traitements suivants :

la réalisation de la mesure par l'UE conformément à un signal de référence reçu pour une mesure ;
la réception d'un autre signal de référence pour une mesure, et la réalisation de la mesure conformément à l'autre signal de référence reçu pour une mesure ;
la réalisation de la transmission de données conformément à une signalisation de planification reçue ; et
la réception d'une autre signalisation de planification, et la réalisation de la transmission de données conformément à l'autre signalisation de planification reçue.

13. Appareil de transmission de signal selon la revendication 12, dans lequel le module de réception (51) est en outre configuré pour :

recevoir le signal de référence pour une mesure sur un symbole de multiplexage par répartition orthogonale de la fréquence, OFDM, sur lequel des signaux de synchronisation sont actuellement transmis et à l'aide de toutes les ressources de domaine fréquentiel autres que les ressources de domaine fréquentiel occupées par les signaux de synchronisation, ou recevoir le signal de référence pour une mesure sur un symbole OFDM sur lequel des signaux de synchronisation sont actuellement transmis et à l'aide de parties des ressources de domaine fréquentiel autres que les ressources de domaine fréquentiel occupées par les signaux de synchronisation, ou recevoir le signal de référence pour une mesure sur un symbole OFDM adjacent au, ou séparé par un intervalle de domaine temporel fixe du, symbole OFDM sur lequel des signaux de synchronisation sont actuellement transmis, dans lequel le signal de référence pour une mesure et au moins un signal de synchronisation dans les signaux de synchronisation sont transmis à l'intérieur d'une sous-trame identique, ou recevoir le signal de synchronisation en tant que signal de référence pour une mesure ; et/ou
le module de réception (51) est en outre configuré pour générer des séquences du signal de référence pour une mesure au moins en association avec un identificateur, ID, d'une porteuse ou d'une cellule sur laquelle le signal de référence est actuellement transmis, ou dans le cas où le signal de référence pour une mesure est utilisé pour mesurer une puissance reçue de signal de référence, RSRP, et/ou des informations d'état de canal, CSI, génère des séquences du signal de référence pour une mesure au moins en association avec un ID d'une porteuse ou d'une cellule sur laquelle le signal de référence est actuellement transmis, ou déterminer des séquences d'un signal de référence de mesure spécifique à l'UE ou spécifique à la cellule et préconfigurées par une signalisation de configuration en tant que séquences du signal de référence pour une mesure, ou dans le cas où le signal de référence pour une mesure est utilisé pour mesurer des CSI, déterminer des séquences d'un signal de référence de mesure spécifique à l'UE ou spécifique à la cellule et préconfigurées par le biais d'une signalisation de configuration en tant que séquences du signal de référence pour une mesure ; et/ou
le module de réception (51) est en outre configuré pour réaliser au moins l'une parmi une mesure de RSRP, une mesure de qualité reçue de signal de référence, RSRQ,
une mesure de positionnement, une mesure de suivi et une mesure de CSI à l'aide du signal de référence pour une mesure.

14. Appareil de transmission de signal selon la revendication 13, dans lequel, dans le cas où le module de détermination (52) détecte le signal de synchronisation correspondant à l'ID de la porteuse ou de la cellule conformément à l'ID de la porteuse ou de la cellule préconfigurée par le biais de la signalisation de configuration, le module de détermination (52) est en outre configuré pour détecter le signal de synchronisation correspondant à l'ID de la porteuse ou de la cellule dans chaque sous-trame ou une sous-trame prédéterminée dans laquelle le signal de synchronisation doit être transmis conformément à l'ID de la porteuse ou de la cellule préconfigurée par le biais de la signalisation de configuration ; et/ou

dans le cas où le module de détermination (52) détecte les séquences dédiées préconfigurées par le biais de la signalisation de configuration, le module de détermination est en outre configuré pour détecter les séquences dédiées dans chaque sous-trame ou une sous-trame prédéterminée, et la sous-trame prédéterminée est une sous-trame particulière préconfigurée par le biais de la signalisation de configuration, ou une sous-trame déterminée conformément à une période de détection, ou la période de détection et une valeur de décalage de sous-trame, préconfigurées par le biais de la signalisation de configuration, et/ou,

dans lequel le module de détermination (52) est en outre configuré pour déterminer des séquences d'un signal de référence particulier pour une mesure préconfigurées pour l'UE par le biais de la signalisation de configuration en tant que séquences dédiées, et/ou détecter les séquences dédiées d'une manière de détection d'énergie.

**15.** Appareil de transmission de signal selon l'une quelconque des revendications 12, 13 et 14, dans lequel

le signal de synchronisation est transmis sur la porteuse ou la cellule qui utilise la ressource de spectre prédéterminée et à l'aide d'une sous-trame et d'une ressource de domaine fréquentiel définies dans les versions 8 à 11 de la norme d'évolution à long terme, LTE, pour un système de duplex à répartition en fréquence, DRF, ou de duplex à répartition dans le temps, DRT ; ou le signal de synchronisation est mis en correspondance avec et transmis sur un premier symbole OFDM ou les deux symboles OFDM précédents dans une sous-trame prédéfinie pour transmettre le signal de synchronisation sur la porteuse ou la cellule qui utilise la ressource de spectre prédéterminée, ou dans une première sous-trame disponible sur la porteuse ou la cellule qui utilise la ressource de spectre prédéterminée ; ou le signal de synchronisation est mis en correspondance avec et transmis sur un premier symbole OFDM ou les deux symboles OFDM précédents, sans autre signal de référence, dans une sous-trame prédéfinie pour transmettre le signal de synchronisation sur la porteuse ou la cellule qui utilise la ressource de spectre prédéterminée, ou dans une première sous-trame disponible sur la porteuse ou la cellule qui utilise la ressource de spectre prédéterminée ; ou le signal de synchronisation est mis en correspondance avec et transmis sur un premier symbole OFDM ou les deux symboles OFDM précédents, autre qu'une région de commande, dans une sous-trame prédéfinie pour transmettre le signal de synchronisation sur la porteuse ou la cellule qui utilise la ressource de spectre prédéterminée, ou dans une première sous-trame disponible sur la porteuse ou la cellule qui utilise la ressource de spectre prédéterminée ; ou le signal de synchronisation est mis en correspondance avec et transmis sur un premier symbole OFDM ou les deux symboles OFDM précédents, autre qu'une région de commande et sans autre signal de référence, dans une sous-trame pour transmettre le signal de synchronisation sur la porteuse ou la cellule qui utilise la ressource de spectre prédéterminée, ou dans une première sous-trame disponible sur la porteuse ou la cellule qui utilise la ressource de spectre prédéterminée ; ou une sous-trame ou un symbole OFDM pour transmettre le signal de synchronisation sur la porteuse ou la cellule qui utilise la ressource de spectre prédéterminée est acquis à l'avance conformément à la signalisation de configuration ; ou une valeur de décalage pour transmettre le signal de synchronisation sur la porteuse ou la cellule qui utilise la ressource de spectre prédéterminée est acquise à l'avance conformément à la signalisation de configuration, et l'UE détermine une sous-trame ou un symbole OFDM pour transmettre le signal de synchronisation sur la porteuse ou la cellule qui utilise la ressource de spectre prédéterminée conformément à une position prédéfinie de la sous-trame ou un symbole OFDM et la valeur de décalage ; et/ou le signal de synchronisation comprend un signal de synchronisation primaire, PSS, et/ou un signal de synchronisation secondaire, SSS.

**16.** Appareil de transmission de signal selon l'une quelconque des revendications 11 à 14, dans lequel le module de réception (51) est en outre configuré pour déterminer qu'une largeur de bande de la porteuse ou de la cellule qui utilise la ressource de spectre prédéterminée est notifiée à l'avance par le biais de la signalisation de configuration, ou dans le cas où la largeur de bande de la porteuse ou de la cellule qui utilise la ressource de spectre prédéterminée est inconnue, recevoir le signal de référence pour une mesure et réaliser la mesure sur une largeur de bande prédéfinie au milieu de la porteuse ou de la cellule qui utilise la ressource de spectre prédéterminée, et la largeur de bande prédéfinie est d'une valeur au moins égale à 6 blocs de ressources, RB, ou d'une valeur au moins égale à une largeur de bande minimale définie dans un système LTE ; et/ou

le module de réception (51) est en outre configuré pour déterminer que la porteuse ou la cellule est une porteuse secondaire ou une cellule secondaire préconfigurée pour l'UE par le biais de la signalisation de configuration ; et/ou le module de réception (51) est en outre configuré pour déterminer que la porteuse ou la cellule qui utilise la ressource de spectre prédéterminée est une porteuse secondaire ou une cellule secondaire préconfigurée pour l'UE par le biais de la signalisation de configuration.

**17.** Appareil de transmission de signal pour une station de base, comprenant :

un module de génération (61) configuré pour générer un signal ; et

un module de transmission (62) configuré pour transmettre le signal sur une porteuse ou une cellule qui utilise une ressource de spectre prédéterminée, dans lequel la ressource de spectre prédéterminée est une ressource de spectre sans licence, et,

dans lequel le signal comprend au moins un signal d'évaluation pour déterminer, par un équipement utilisateur, UE, si un signal reçu par l'UE sur la porteuse ou la cellule qui utilise la ressource de spectre prédéterminée appartient ou non à une porteuse de desserte ou une cellule de desserte de l'UE et comporte en outre un signal de référence pour une mesure et/ou un signal de données, ou le signal comporte au moins un signal d'évaluation pour déterminer, par l'UE, si un signal reçu par l'UE sur la porteuse ou la cellule qui utilise la ressource de spectre prédéterminée appartient ou non à une porteuse de desserte ou une cellule de desserte de l'UE ou au moins comporte le signal d'évaluation et un signal de données, et le signal d'évaluation est en outre utilisé pour une mesure,

dans lequel le signal d'évaluation est un signal de synchronisation correspondant à un identificateur, ID, de la porteuse ou de la cellule qui utilise la ressource de spectre prédéterminée, et/ou

le signal d'évaluation est constitué de séquences dédiées correspondant à la porteuse ou à la cellule qui utilise les ressources de spectre prédéterminées ou des séquences dédiées de l'UE.

18. Appareil de transmission de signal selon la revendication 17, comprenant en outre :

un module d'évaluation configuré pour déterminer si une ressource de canal actuelle sur la porteuse ou la cellule qui utilise la ressource de spectre prédéterminée est libre ou non,

dans lequel, dans le cas où la ressource de canal actuelle est libre, le module de transmission (62) est en outre configuré pour transmettre le signal sur la porteuse ou la cellule qui utilise la ressource de spectre prédéterminée, et dans le cas où la ressource de canal actuelle est occupée, le module de transmission (62) est en outre configuré pour interdire la transmission du signal sur la porteuse ou la cellule qui utilise la ressource de spectre prédéterminée, ou transmettre le signal sur la porteuse ou la cellule qui utilise la ressource de spectre prédéterminée après une période de temps prédéterminée, dans lequel la période de temps prédéterminée a une longueur d'une valeur fixe prédéfinie, ou la longueur de la période de temps prédéterminée est notifiée à l'UE à l'avance par le biais de la signalisation, et/ou

dans le cas où le signal d'évaluation est un signal de synchronisation correspondant à un identificateur, ID, de la porteuse ou de la cellule qui utilise la ressource de spectre prédéterminée, le module de transmission (62) est configuré pour transmettre le signal de synchronisation et le signal de référence pour une mesure et/ou le signal de données, ou transmettre le signal de synchronisation, ou transmettre le signal de synchronisation et le signal de données, sur la porteuse ou la cellule qui utilise la ressource de spectre prédéterminée, dans lequel le module de transmission (62) est configuré pour transmettre le signal de synchronisation dans chaque sous-trame, ou dans une sous-trame prédéterminée dans laquelle le signal de synchronisation doit être transmis, sur la porteuse ou la cellule qui utilise la ressource de spectre prédéterminée, et l'ID de la porteuse ou de la cellule qui utilise la ressource de spectre prédéterminée est préconfiguré par une station de base principale pour l'UE par le biais d'une signalisation de configuration ; ou le module de transmission (62) est en outre configuré pour transmettre le signal de synchronisation dans chaque sous-trame, ou dans une sous-trame prédéterminée dans laquelle le signal de synchronisation doit être transmis, sur la porteuse ou la cellule qui utilise la ressource de spectre prédéterminée, et l'ID de la porteuse ou de la cellule qui utilise la ressource de spectre prédéterminée est préconfiguré par la station de base pour l'UE par le biais d'une signalisation de configuration ; ou le module de transmission (62) est en outre configuré pour transmettre le signal de synchronisation dans chaque sous-trame, ou dans une sous-trame prédéterminée dans laquelle le signal de synchronisation doit être transmis, sur la porteuse ou la cellule qui utilise la ressource de spectre prédéterminée, et l'ID de la porteuse ou de la cellule qui utilise la ressource de spectre prédéterminée est notifiée par la station de base à une station de base principale à l'avance et préconfigurée par la station de base principale pour l'UE par le biais de la signalisation de configuration ; et/ou

dans le cas où le signal d'évaluation est constitué de séquences dédiées correspondant à la porteuse ou à la cellule qui utilise les ressources de spectres prédéterminées ou des séquences dédiées de l'UE, le module de transmission (62) est configuré pour transmettre les séquences dédiées et un signal de référence pour une mesure et/ou un signal de données, ou transmettre les séquences dédiées, ou transmettre les séquences dédiées et le signal de données, sur la porteuse ou la cellule qui utilise les ressources de spectre prédéterminées, dans lequel le module de transmission (62) est en outre configuré pour transmettre les séquences dédiées dans chaque sous-trame ou une sous-trame prédéfinie sur la porteuse ou la cellule qui utilise la ressource de spectre prédéterminée, les séquences dédiées sont préconfigurées par une station de base principale pour l'UE par le biais d'une signalisation de configuration, et la sous-trame prédéfinie est une sous-trame particulière préconfigurée par le biais de la signalisation de configuration ou d'une sous-trame déterminée conformément à une période de détection, ou la période de détection et une valeur de décalage de sous-trame, préconfigurées par le biais de la signalisation de configuration ; ou le module de transmission (62) est en outre configuré pour transmettre les séquences dédiées dans chaque sous-trame ou une sous-trame prédéfinie sur la porteuse ou la cellule qui utilise la ressource de spectre prédéterminée, les séquences dédiées sont préconfigurées par la station de base pour l'UE par le biais de la signalisation de configuration, et la sous-trame prédéfinie est une sous-trame particulière préconfigurée par le biais de la signalisation de configuration ou d'une sous-trame déterminée conformément à une période de détection, ou la période de détection et une valeur de décalage de sous-trame, préconfigurées par le biais de la signalisation de configuration ; ou le module de transmission (62) est en outre configuré pour transmettre les séquences dédiées dans chaque sous-trame ou une sous-trame prédéfinie sur la porteuse ou la cellule qui utilise la ressource de spectre prédéterminée, les séquences dédiées sont notifiées par la station de base à une station de base principale à l'avance et préconfigurées par la station de base principale pour l'UE par le biais de la signalisation de configuration, et la sous-trame prédéfinie est une sous-trame particulière préconfigurée par le biais de la signalisation de configuration ou d'une sous-trame déterminée conformément à une période de détection, ou la période de détection et une valeur de décalage de sous-trame, préconfigurées par le biais de la signalisation de configuration.

19. Appareil de transmission de signal selon la revendication 18, dans lequel le module de transmission (62) est en outre configuré pour transmettre le signal de référence pour une mesure sur un symbole de multiplexage par répartition orthogonale de la fréquence, OFDM, sur lequel des signaux de synchronisation sont actuellement transmis et à l'aide de toutes les ressources de domaine fréquentiel autres que les ressources de domaine fréquentiel occupées par les signaux de synchronisation, ou transmettre le signal de référence pour une mesure sur un symbole OFDM sur lequel des signaux de synchronisation sont actuellement transmis et à l'aide des parties des ressources de domaine fréquentiel autres que les ressources de domaine fréquentiel occupées par les signaux de synchronisation, ou transmettre le signal de référence pour une mesure sur un symbole OFDM adjacent au, ou séparé par un intervalle de domaine temporel fixe du, symbole OFDM sur lequel des signaux de synchronisation sont actuellement transmis dans lequel le signal de référence pour une mesure et au moins un signal de synchronisation dans les signaux de synchronisation sont transmis à l'intérieur d'une sous-trame identique, ou transmettre le signal de synchronisation en tant que signal de référence pour une mesure ; et/ou

le module de génération (61) est en outre configuré pour générer des séquences du signal de référence pour une mesure au moins en association avec un ID d'une porteuse ou d'une cellule sur laquelle le signal de référence est actuellement transmis, ou dans le cas où le signal de référence pour une mesure est utilisé pour mesurer une puissance reçue de signal de référence, RSRP, et/ou des informations d'état de canal, CSI, générer des séquences du signal de référence pour une mesure au moins en association avec un ID d'une porteuse ou d'une cellule sur laquelle le signal de référence est actuellement transmis, ou déterminer des séquences d'un signal de référence de mesure spécifique à l'UE ou spécifique à la cellule et préconfigurées par une signalisation de configuration en tant que séquences du signal de référence pour une mesure, ou dans le cas où le signal de référence pour une mesure est utilisé pour mesurer des CSI, déterminer des séquences d'un signal de référence de mesure spécifique à l'UE et préconfigurées par le biais d'une signalisation de configuration en tant que séquences du signal de référence pour une mesure ; et/ou

le module de génération (61) est en outre configuré pour réaliser au moins l'une parmi une mesure de RSRP, une mesure de qualité reçue de signal de référence, RSRQ, une mesure de positionnement, une mesure de suivi et une mesure de CSI à l'aide du signal de référence pour une mesure ; et/ou

le module de génération (61) est en outre configuré pour déterminer des séquences d'un signal de référence particulier pour une mesure préconfigurées pour l'UE par le biais de la signalisation de configuration en tant que séquences dédiées, et/ou

dans lequel le module de détermination (62) est en outre configuré pour déterminer que :

le signal de synchronisation est transmis sur la porteuse ou la cellule qui utilise la ressource de spectre prédéterminée et à l'aide d'une sous-trame et d'une ressource de domaine fréquentiel définies dans les versions 8 à 11 de la norme d'évolution à long terme, LTE, pour un système de duplex à répartition en fréquence, DRF, ou de duplex à répartition dans le temps, DRT ; ou le signal de synchronisation est mis en correspondance avec et transmis sur un premier symbole OFDM ou les deux symboles OFDM précédents dans une sous-trame prédéfinie pour transmettre le signal de synchronisation sur la porteuse ou la cellule qui utilise la ressource de spectre prédéterminée, ou dans une première sous-trame disponible sur la porteuse ou la cellule qui utilise la ressource de spectre prédéterminée ; ou

le signal de synchronisation est mis en correspondance avec et transmis sur un premier symbole OFDM ou les deux symboles OFDM précédents, sans autre signal de référence, dans une sous-trame prédéfinie pour transmettre le signal de synchronisation sur la porteuse ou la cellule qui utilise la ressource de spectre prédéterminée, ou dans une première sous-trame disponible sur la porteuse ou la cellule qui utilise la ressource de spectre prédéterminée ; ou le signal de synchronisation est mis en correspondance avec et transmis sur un premier symbole OFDM ou les deux symboles OFDM précédents, autre qu'une région de commande, dans une sous-trame prédéfinie pour transmettre le signal de synchronisation sur la porteuse ou la cellule qui utilise la ressource de spectre prédéterminée, ou dans une première sous-trame disponible sur la porteuse ou la cellule qui utilise la ressource de spectre prédéterminée ; ou le signal de synchronisation est mis en correspondance avec et transmis sur un premier symbole OFDM ou les deux symboles OFDM précédents, autre qu'une région de commande et sans autre signal de référence, dans une sous-trame pour transmettre le signal de synchronisation sur la porteuse ou la cellule qui utilise la ressource de spectre prédéterminée, ou dans une première sous-trame disponible sur la porteuse ou la cellule qui utilise la ressource de spectre prédéterminée ; ou la sous-trame ou le symbole OFDM pour transmettre le signal de synchronisation sur la porteuse ou la cellule qui utilise la ressource de spectre prédéterminée est acquis par la station de base à partir d'une station de base principale à l'avance ou prédéfini et notifié par la station de base principale à l'UE à l'avance par le biais de la signalisation de configuration, ou la sous-trame ou le symbole OFDM pour transmettre le signal de synchronisation sur la porteuse ou la cellule qui utilise la ressource de spectre prédéterminée est prédéterminé par la station de base et notifié par la station de base à une station de base principale à l'avance, et notifié à l'UE par la station de base principale à l'avance par le biais de la signalisation de configuration, ou la sous-trame ou le symbole OFDM pour transmettre le signal de synchronisation sur la porteuse ou la cellule qui utilise la ressource de spectre prédéterminée est prédéterminé par la station de base et notifié par la station de base à l'UE à l'avance par le biais de la signalisation de configuration ; ou

la sous-trame ou le symbole OFDM pour transmettre le signal de synchronisation sur la porteuse ou la cellule qui utilise la ressource de spectre prédéterminée est déterminée conformément à une position prédéfinie de la sous-trame ou du symbole OFDM et une valeur de décalage pour transmettre le signal de synchronisation sur la porteuse ou la cellule qui utilise la ressource de spectre prédéterminée, dans lequel la valeur de décalage est acquise par la station de base à partir d'une station de base principale ou prédéfinie, et notifiée par la station de base principale à l'UE à l'avance par le biais de la signalisation de configuration, ou la valeur de décalage est prédéterminée par la station de base et notifiée à une station de base principale à l'avance, et notifiée par la station de base principale à l'UE à l'avance par le biais de la signalisation de configuration, ou la valeur de décalage est prédéterminée par la station de base et notifiée par la station de base à l'UE à l'avance par le biais de la signalisation de configuration ; et/ou

le signal de synchronisation comprend un signal de synchronisation primaire, PSS, et/ou un signal de synchronisation secondaire, SSS.

20. Appareil de transmission de signal selon l'une quelconque des revendications 17 à 19, dans lequel le module de transmission (62) est en outre configuré pour :

**EP 3 096 481 B1**

notifier une largeur de bande de la porteuse ou de la cellule qui utilise la ressource de spectre prédéterminée à l'UE à l'avance par le biais d'une signalisation ; ou notifier la largeur de bande de la porteuse ou de la cellule qui utilise la ressource de spectre prédéterminée à une station de base principale à l'avance, de sorte que la station de base principale notifie la largeur de bande à l'UE à l'avance par le biais d'une signalisation ; ou dans le cas où la largeur de bande de la porteuse ou de la cellule qui utilise la ressource de spectre prédéterminée n'est pas notifiée par la station de base ou la station de base principale à l'UE à l'avance par le biais de la signalisation de configuration, déterminer que l'UE reçoit le signal de référence pour une mesure et réaliser la mesure sur une largeur de bande prédéfinie au milieu de la porteuse ou de la cellule qui utilise la ressource de spectre prédéterminée, dans lequel la largeur de bande prédéfinie est d'une valeur au moins égale à 6 blocs de ressources (RB), ou une valeur au moins égale à une largeur de bande minimale définie dans un système LTE ; et/ou

le module de transmission (62) est en outre configuré pour déterminer une porteuse secondaire ou une cellule secondaire préconfigurée pour l'UE par le biais de la signalisation de configuration en tant que porteuse de desserte ou cellule de desserte.

Fig.1a

Fig.1b

Fig.2

RECEIVING, BY A UE, A SIGNAL ON A
CARRIER OR CELL WHICH USES A
PREDETERMINED SPECTRUM RESOURCE, AND
DETERMINING WHETHER OR NOT THE
RECEIVED SIGNAL BELONGS TO A SERVING
CARRIER OR SERVING CELL OF THE UE

S301

IN THE CASE THAT THE RECEIVED SIGNAL
BELONGS TO THE SERVING CARRIER OR
SERVING CELL OF THE UE, PERFORMING
MEASUREMENT AND/OR DATA
TRANSMISSION BY THE UE IN ACCORDANCE
WITH THE RECEIVED SIGNAL AND/OR A
SUBSEQUENTLY-RECEIVED SIGNAL

S303

GENERATING, BY A BASE STATION, A TO-BE-TRANSMITTED SIGNAL — S401

TRANSMITTING, BY THE BASE STATION, THE SIGNAL ON A CARRIER OR CELL WHICH USES A PREDETERMINED SPECTRUM RESOURCE, THE SIGNAL AT LEAST INCLUDING AN ACKNOWLEDGEMENT SIGNAL FOR DETERMINING, BY A UE, WHETHER OR NOT A SIGNAL RECEIVED BY THE UE ON THE CARRIER OR CELL WHICH USES THE PREDETERMINED SPECTRUM RESOURCE BELONGS TO A SERVING CARRIER OR SERVING CELL OF THE UE AND FURTHER INCLUDING A REFERENCE SIGNAL FOR MEASUREMENT AND/OR A DATA SIGNAL — S403

Fig.4

RECEPTION
MODULE
51

DETERMINATI
ON MODULE
52

Fig.5

GENERATION
MODULE
61

TRANSMISSION
MODULE
62

Fig.6

| CPU | 701 | | ROM | 702 | | RAM | 703 |

INPUT/OUTPUT INTERFACE 705

| INPUT SECTION | 706 | OUTPUT SECTION | 707 | STORAGE SECTION | 708 | COMMUNICATION SECTION | 709 | DRIVER | 710 |

REMOVABLE STORAGE MEDIUM 711

700

Fig.7

80

PROCESSOR

BUS INTERFACE

TRANSCEIVER 81

MEMORY

USER
INTERFACE

Fig.8

90

PROCESSOR

BUS INTERFACE

TRANSCEIVER 91

MEMORY

Fig.9

**EP 3 096 481 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010309797 A1